(19) Europäisches Patentamt
European Patent Office
Office européen des brevets

(11) EP 2 721 457 B1

(12) # EUROPEAN PATENT SPECIFICATION

(45) Date of publication and mention of the grant of the patent:
**25.04.2018 Bulletin 2018/17**

(21) Application number: **12800690.5**

(22) Date of filing: **04.06.2012**

(51) Int Cl.:
***G05D 21/02*** *(2006.01)* ***C02F 1/00*** *(2006.01)*
***G05B 13/04*** *(2006.01)*

(86) International application number:
**PCT/US2012/040663**

(87) International publication number:
**WO 2012/173802 (20.12.2012 Gazette 2012/51)**

(54) **APPARATUS AND METHOD FOR pH CONTROL IN WASTEWATER TREATMENT PLANTS AND OTHER SYSTEMS**

VORRICHTUNG UND VERFAHREN ZUR PH-WERT-STEUERUNG IN ABWASSERKLÄRANLAGEN UND ANDEREN SYSTEMEN

APPAREIL ET PROCÉDÉ POUR LE CONTRÔLE DU PH DANS DES INSTALLATIONS DE TRAITEMENT D’EAUX USÉES ET AUTRES SYSTÈMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2011 US 201161497758 P**
**13.12.2011 US 201113324853**

(43) Date of publication of application:
**23.04.2014 Bulletin 2014/17**

(73) Proprietor: **Honeywell International Inc.**
**Morris Plains, NJ 07950 (US)**

(72) Inventors:
- **MACARTHUR, J. Ward**
**Morristown, New Jersey 07962-2245 (US)**
- **DASH, Sachindra K.**
**Morristown, New Jersey 07962-2245 (US)**
- **BHASKAR, Rajiv K.**
**Morristown, New Jersey 07962-2245 (US)**

(74) Representative: **Houghton, Mark Phillip**
**Patent Outsourcing Limited**
**1 King Street**
**Bakewell, Derbyshire DE45 1DZ (GB)**

(56) References cited:
**US-A- 5 108 929**
**US-A1- 2007 037 201**
**US-A1- 2008 104 003**
**US-A1- 2009 035 180**
**US-A1- 2009 287 320**
**US-A1- 2009 327 204**

- **RAFAL STANISLAWSKI ET AL: "Modeling of Nonlinear Block-Oriented Systems Using Orthonormal Basis and Radial Basis Functions", SYSTEMS ENGINEERING, 2008. ICSENG ’08. 19TH INTERNATIONAL CONFERENCE ON, IEEE, PISCATAWAY, NJ, USA, 19 August 2008 (2008-08-19), pages 55-58, XP031315065, ISBN: 978-0-7695-3331-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 721 457 B1

## Description

CROSS-REFERENCE TO RELATED APPLICATION AND PRIORITY CLAIM

This application claims priority under 35 U.S.C. § 119(e) to U.S. Provisional Patent Application No. 61/497,758 filed on June 16, 2011.

TECHNICAL FIELD

This disclosure relates generally to control systems. More specifically, this disclosure relates to an apparatus and method for pH control in wastewater treatment plants and other systems.

BACKGROUND

Wastewater can include a variety of undesirable components, so wastewater is often treated in large wastewater treatment plants. One wastewater treatment process involves the use of bacteria to convert undesirable wastewater components into more desirable components. However, difficulties can arise in creating the right environment for the bacteria to thrive and thereby provide optimal performance. For example, pH control is widely used in wastewater treatment plants to encourage bacterial growth and increase treatment effectiveness.

In these and other types of systems, the pH of a mixture often needs to be controlled and monitored. However, pH is often a highly nonlinear characteristic of a mixture. Typically, pH is controlled by applying a logarithmic transformation to pH measurements, and control is achieved using proportional-integral-derivative (PID) controllers. However, the tuning of the PID controllers is often difficult, typically resulting in poor control over pH.

U.S. Patent Publication No. 2008/0104003 discloses a system and method for managing fermentation feed in a biofuel production process. A dynamic multivariate predictive model-based controller is coupled to a dynamic multivariate predictive model. The model is executable to receive process information including water inventory and biomass information from the biofuel production process, receive a specified objective for the fermentation feed specifying a target biomass concentration, and generate model output comprising target values for a plurality of manipulated variables of the biofuel production process. The manipulated variables include target flow rates of water and/or biomass contributing to the fermentation feed in accordance with the specified objective. The controller is operable to dynamically control the biofuel production process by adjusting the plurality of manipulated variables to model-determined target values to stabilize water/biomass balance in the fermentation feed in accordance with the specified objective, including the specified target biomass concentration.

SUMMARY

This disclosure provides an apparatus and method for pH control in wastewater treatment plants and other systems.

In a first embodiment, a method includes obtaining a nonlinear model that represents a pH of a material in a process to be controlled. The model is generated using an orthonormal bases function and an ordinal spline bases function. The method also includes performing non-linear model predictive control of the process using the model.

In a second embodiment, an apparatus includes at least one memory unit configured to store a nonlinear model that represents a pH of a material in a process to be controlled. The model is associated with an orthonormal bases function and an ordinal spline bases function. The apparatus also includes at least one processing unit configured to perform non-linear model predictive control of the process using the model.

In a third embodiment, a computer readable medium embodies a computer program. The computer program includes computer readable program code for obtaining a nonlinear model that represents a pH of a material in a process to be controlled, the model generated using an orthonormal bases function and an ordinal spline bases function. The computer program also includes computer readable program code for performing non-linear model predictive control of the process using the model.

Other technical features may be readily apparent to one skilled in the art from the following figures, descriptions, and claims. The invention in its various aspects is as set out in the appended claims.

BRIEF DESCRIPTION OF THE DRAWINGS

For a more complete understanding of this disclosure, reference is now made to the following description, taken in conjunction with the accompanying drawings, in which:

FIGURE 1 illustrates an example process control system according to this disclosure;

FIGURES 2 through 30B illustrate details of an example tool for nonlinear process identification using orthonormal bases and ordinal splines according to this disclosure;

FIGURE 31 illustrates an example pH control system according to this disclosure; and

FIGURES 32 through 40 illustrate details of an example tool for nonlinear process identification for pH control according to this disclosure.

DETAILED DESCRIPTION

FIGURES 1 through 40, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example process control system 100 according to this disclosure. In this example embodiment, the system 100 includes various components that facilitate the monitoring and control of a process system. A process system represents any system or portion thereof configured to produce or process one or more materials in some manner. The process system typically includes multiple pieces of industrial equipment, which are monitored and controlled by the system 100.

As shown in FIGURE 1, the system 100 includes one or more sensors 102a and one or more actuators 102b. The sensors 102a and actuators 102b represent components in a process system that may perform any of a wide variety of functions. For example, the sensors 102a could measure a wide variety of characteristics in the process system, such as temperature, pressure, or flow rate. Also, the actuators 102b could alter a wide variety of characteristics in the process system and could represent heaters, motors, catalytic crackers, valves, or other actuator devices. The sensors 102a and actuators 102b could represent any other or additional components in any suitable process system. Each of the sensors 102a includes any suitable structure for measuring one or more characteristics in a process system. Each of the actuators 102b includes any suitable structure for operating on or affecting conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

Two controllers 106a-106b are coupled to the network 104. The controllers 106a-106b may, among other things, use the measurements from the sensors 102a to control the operation of the actuators 102b. For example, the controllers 106a-106b could receive measurement data from the sensors 102a and use the measurement data to generate control signals for the actuators 102b. Each of the controllers 106a-106b includes any suitable structure for interacting with the sensors 102a and controlling the actuators 102b. The controllers 106a-106b could, for example, represent multivariable controllers or other types of controllers.

Two networks 108 are coupled to the controllers 106a-106b. The networks 108 facilitate interaction with the controllers 106a-106b, such as by transporting data to and from the controllers 106a-106b. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure supporting communication between networks, such as a HONEYWELL CONTROL FIREWALL (CF9) device. The networks 112 could represent any suitable networks, such as a pair of Ethernet networks or an FTE network.

Two servers 114a-114b are coupled to the networks 112. The servers 114a-114b perform various functions to support the operation and control of the controllers 106a-106b, sensors 102a, and actuators 102b. For example, the servers 114a-114b could log information collected or generated by the controllers 106a-106b, such as measurement data from the sensors 102a or control signals for the actuators 102b. The servers 114a-114b could also execute applications that control the operation of the controllers 106a-106b, thereby controlling the operation of the actuators 102b. In addition, the servers 114a-114b could provide secure access to the controllers 106a-106b. Each of the servers 114a-114b includes any suitable structure for providing access to, control of, or operations related to the controllers 106a-106b.

One or more operator stations 116 are coupled to the networks 112. The operator stations 116 represent computing or communication devices providing user access to the servers 114a-114b, which could then provide user access to the controllers 106a-106b (and possibly the sensors 102a and actuators 102b). As particular examples, the

operator stations 116 could allow users to review the operational history of the sensors 102a and actuators 102b using information collected by the controllers 106a-106b and/or the servers 114a-114b. The operator stations 116 could also allow the users to adjust the operation of the sensors 102a, actuators 102b, controllers 106a-106b, or servers 114a-114b. In addition, the operator stations 116 could receive and display warnings, alerts, or other messages or displays generated by the controllers 106a-106b or the servers 114a-114b. Each of the operator stations 116 includes any suitable structure for supporting user access and control of the system 100.

In this example, the system 100 also includes a wireless network 118, which can be used to facilitate communication with one or more wireless devices 120. The wireless network 118 may use any suitable technology to communicate, such as radio frequency (RF) signals. Also, the wireless devices 120 could represent devices that perform any suitable functions. The wireless devices 120 could, for example, represent wireless sensors, wireless actuators, and remote or portable operator stations or other user devices.

At least one router/firewall 122 couples the networks 112 to two networks 124. The router/firewall 122 includes any suitable structure for providing communication between networks, such as a secure router or combination router/firewall. The networks 124 could represent any suitable networks, such as a pair of Ethernet networks or an FTE network.

In this example, the system 100 includes at least one additional server 126 coupled to the networks 124. The server 126 executes various applications to control the overall operation of the system 100. For example, the system 100 could be used in a processing plant or other facility, and the server 126 could execute applications used to control the plant or other facility. As particular examples, the server 126 could execute applications such as enterprise resource planning (ERP), manufacturing execution system (MES), or any other or additional plant or process control applications. The server 126 includes any suitable structure for controlling the overall operation of the system 100.

One or more operator stations 128 are coupled to the networks 124. The operator stations 128 represent computing or communication devices providing, for example, user access to the servers 114a-114b, 126. Each of the operator stations 128 includes any suitable structure for supporting user access and control of the system 100.

In particular embodiments, the various servers and operator stations may represent computing devices. For example, each of the servers 114a-114b, 126 could include one or more processing units 130 and one or more memory units 132 for storing instructions and data used, generated, or collected by the processing unit(s) 130. Each of the servers 114a-114b, 126 could also include at least one network interface 134, such as one or more Ethernet interfaces. Also, each of the operator stations 116, 128 could include one or more processing units 136 and one or more memory units 138 for storing instructions and data used, generated, or collected by the processing unit(s) 136. Each of the operator stations 116, 128 could also include at least one network interface 140, such as one or more Ethernet interfaces.

In one aspect of operation, at least one of the controllers 106a-106b represents a multivariable model predictive control (MPC) controller or other type of controller that operates using a model 142. The model 142 generally represents at least part of an industrial process being controlled, such as by defining how the controller controls one or more of the actuators 102b based on input data from one or more of the sensors 102a. The identification of the model 142 (which involves a "system identification" defining how the process being controlled behaves) and the design of the controller 106a-106b (which involves selection of control parameters for the controllers) are often critical to the proper control of the process system.

In accordance with this disclosure, a tool 144 is provided in the system 100 at one or more locations. The tool 144 here implements a technique for nonlinear process identification. For example, the tool 144 analyzes various data and performs system identification to identify one or more models 142 for one or more controllers 106a-106b. The tool 144 enables the creation of nonlinear models based on empirical process data. This approach allows known information concerning process characteristics to be incorporated into a model. The tool 144 also supports full dynamic nonlinear behavior. The model(s) 142 created can be directly used for control by the controller(s) 106a-106b, which could represent HONEYWELL PROFIT controllers or other controllers.

For flexibility, the process identification performed by the tool 144 accommodates different model structures, such as Hammerstein, Wiener, and more general N-L-N block-oriented structures. Instruments having linear and nonlinear combinations of inputs and outputs are also accommodated. The tool 144 utilizes multiple bases functions, namely an orthonormal bases function and an ordinal spline bases function. The orthonormal bases function can be constructed using an estimate of the process poles, and the ordinal spline bases function can be constructed using a specified set of special cubic splines. Nonlinear dynamics are implicitly accommodated, and problems associated with identifying the linear portion of the model in conventional block-oriented formulations can be removed. Because of the bases function formulations, it is possible to solve the identification problem for many supported structures by convex optimization, which can help to avoid the inherent problems of iterative solutions. However, to help ensure open-loop unbiased estimates, any structures using output nonlinearities can use an iterative solution.

Additional details regarding a particular nonlimiting embodiment of the tool 144 are provided below. Other embodiments of the tool 144 could also be used. The tool 144 could be implemented in any suitable manner. For instance, the tool 144 could be implemented using only hardware or using a combination of hardware and software/ firmware

instructions. In particular embodiments, the tool 144 could represent one or more computer programs executed by the processing unit(s) in the servers 114a-114b, 126 or the operator stations 116, 128.

Although FIGURE 1 illustrates one example of a process control system 100, various changes may be made to FIGURE 1. For example, a control system could include any number of sensors, actuators, controllers, servers, operator stations, networks, models, and tools. Also, the makeup and arrangement of the process control system 100 are for illustration only. Components could be added, omitted, combined, subdivided, or placed in any other suitable configuration according to particular needs. In addition, FIGURE 1 illustrates one operational environment in which system identification can be used. This functionality could be used in any other suitable device or system.

FIGURES 2 through 30B illustrate details of an example tool 144 for nonlinear process identification using orthonormal bases and ordinal splines according to this disclosure. As described in more detail below, the tool 144 here supports empirical-based nonlinear model identification. There is an enormous body of work related to empirical-based nonlinear models, both with respect to identification and control. In the following discussion, it is assumed that block-oriented models are used, although other types of empirical-based nonlinear models (such as neural network and Volterra models) could also be used. In particular embodiments, the tool 144 could support the following practical and user-centric constraints:

- any parameters of the model 142 to be defined by the user can have a physical relationship to the operating process;
- models 142 can be open-loop unbiased;
- solutions can be robust and available in a time effective manner;
- all calculations can be done online and available while step testing is underway;
- all calculations can be self-contained (i.e. models 142 may not require extraneous calculations);
- signal injection may not be overly intrusive or cause major plant upsets;
- models 142 can be flexible and make sense to the user; and
- models 142 can be directly usable by nonlinear MPC (NLMPC) controllers and have minimal tuning extensions relative to conventional linear MPC.

A particular implementation of the tool 144 could support all or any subset of these features.

Block-oriented models are a class of models that is relatively simplistic in form, and they are one of the most-frequently studied classes of all nonlinear structures. FIGURE 2 illustrates a general form of a block-oriented model 200. In FIGURE 2, an input block ($\mathscr{N}$) 202 and an output block ($\mathscr{F}$) 204 represent static (memory-less) nonlinearities. An intermediate block ($\mathfrak{G}$) 206 is typically used to represent dynamics of the system being modeled, which are often taken to be linear time invariant (LTI). As described below, this problematic constraint is removed. For the time being, however, this structure 200 may be referred to as an "LTI block."

Also supported within the structure 200 are internal input and output instruments and respectively. Since multiple-input multiple-output (MIMO) models can be supported by the tool 144, any number of input instruments may appear as a nonlinear operator with any other input instruments . A similar statement can be made for output instruments.

Within this class of models, the following three well-known structures may be supported by the tool 144:

- Hammerstein: This is one of the most frequently used structures and includes a cascade connection between a static nonlinear block followed by an LTI dynamic block. This structure can be denoted as "N-L."
- Wiener: Here, the cascade connection of the Hammerstein model is reversed, and this structure is denoted as "L-N."
- Hammerstein-Wiener System: In this structure, all block elements are used directly as shown in FIGURE 2, and this structure is denoted as "N-L-N."

These structures have been widely used to represent a large number of applications. It is worth noting, however, that many of the block-oriented methods focus on single-input single-output (SISO) models or, if MIMO, there is little if any attention paid to the role of instruments as alluded to above. More attention to this detail is given below.

In addition to the structure shown in FIGURE 2, the realization of the various blocks 202-206 can have a profound impact on the success or failure of any final implementation. Various techniques are known for realizing the static and dynamic blocks 202-206 given in FIGURE 2. Nonlinear elements from polynomials to neural nets to radial bases functions have been proposed. Dynamic elements from prediction error methods to sub-space models to auto-regression with exogenous input (ARX) models have also been proposed. In one particular approach, a block-oriented approach based on orthonormal bases functions is used, where the formulation leads to a linear-in-the-parameters regression. In another particular approach, the nonlinearities of the Hammerstein block are represented by a set of cardinal spline functions. These functions are well-structured and enable the use of *a priori* process information to help define the nonlinearities.

In accordance with this disclosure, a combination of two bases functions that can be described prior to actual

regression calculations is used. An orthonormal bases function is used to capture process dynamics, and an ordinal spline bases function is used to capture static nonlinearities.

Orthonormal Bases Functions

Early work on orthonormal bases functions (OBFs) for LTI identification was driven by the need for parsimonious models that are linear in the parameters. The idea of incorporating *a priori* information into the function led to the so-called Laguerre model. For resonant systems, the Kautz bases has been suggested and analyzed. A unifying construction of orthonormal bases functions for LTI identification is given in Ninness et al., "A Unifying Construction of Orthonormal Bases for System Identification," IEEE Transactions on Automatic Control, 42 (4) (1997), 515-521 (which is hereby incorporated by reference). The basic model structure, shown in SISO form for clarity, is given by:

$$y_k = \left( \sum_{i=0}^{\lambda-1} \theta_i \mathscr{B}_i(z) \right) u_k \qquad (1)$$

where $y$ is the output, u is the input, A is the number of poles, $\theta$ are unknown coefficients, and **B** are rational orthonormal bases functions defined by the following inner product on $H_2(\boldsymbol{T})$ with $\boldsymbol{T} \triangleq \{z : |z| = 1\}$:

$$\langle \mathscr{B}_n, \mathscr{B}_m \rangle = \delta_{n,m} = \frac{1}{2\pi} \int_{-\pi}^{\pi} \mathscr{B}_n(e^{j\omega}) \overline{\mathscr{B}_m(e^{j\omega})} \, d\omega$$

$$\delta_{n,m} = \begin{cases} 1 & n = m \\ 0 & n \neq m \end{cases} \qquad (2)$$

In Equation (2), $\delta$ is referred to as the Kronecker delta.

In re-deriving the functions for use here, several modifications have been made. One is the correction of the sign of the second term of the quadratic expression in the denominator of the equation for the bases functions representing complex poles. Another is a modification to equation (16) of Ninness et al. As posed in Ninness et al., this expression has an infinite number of solutions, all lying on a well-defined ellipse. The modification used here is the addition of an equality constraint such that $\beta$-$\mu$=0 (in the original nomenclature). With these modifications, the bases functions (BF) can be specified for the general case, where there are n real poles $\xi_0, \xi_1, \cdots \xi_{n-1}$, $p$ sets of complex poles $\{\xi_n, \overline{\xi_n}\} \cdots \{\xi_{n+2(p-1)}, \overline{\xi}_{n+2(p-1)}\}$, and q intervals of pure delay. For the n real poles, the bases functions can be written as:

$$\mathscr{B}_j(z) = z^{-(q+1)} \frac{a^j}{1 - \xi_j z^{-1}} \prod_{k=0}^{j-1} \frac{z^{-1} - \xi_k}{1 - \xi_k z^{-1}} \quad j = 0 \to n-1 \qquad (3)$$

For the $p$ complex poles (where $i = 0 \to p$-1), the $m$ and m+1 bases functions can be written as:

$$\mathscr{B}_m(z) = \frac{z^{-(q+1)} a^m \Omega^i (1 + z^{-1})}{1 - (\xi_m + \overline{\xi}_m) z^{-1} + |\xi_m|^2 z^{-2}} \prod_{k=0}^{m-1} \frac{z^{-1} - \overline{\xi}_k}{1 - \xi_k z^{-1}} \qquad (4)$$

$$\mathscr{B}_{m+1}(z) = \frac{z^{-(q+1)} a^m \Phi^i (1 - z^{-1})}{1 - (\xi_m + \overline{\xi}_m) z^{-1} + |\xi_m|^2 z^{-2}} \prod_{k=0}^{m-1} \frac{z^{-1} - \overline{\xi}_k}{1 - \xi_k z^{-1}} \qquad (5)$$

In these expressions, $m$=$n$+2$i$, and the coefficients can be given by:

$$\Omega^i = \sqrt{\frac{\left|1-\xi_m^2\right|^2}{2\left(1+\left|\xi_m\right|^2\right)+4\,\mathrm{Re}(\xi_m)}} \qquad \Phi^i = -\frac{(\Psi^i+1)\,\Omega^i}{\sqrt{1-\Psi^{i\,2}}}$$
$$\Psi^i = \frac{2\,\mathrm{Re}\,(\xi_m)}{1+\left|\xi_m\right|^2} \qquad a^k = \sqrt{1-\left|\xi_k\right|^2} \tag{6}$$

In these equations, the over-bar character indicates a complex conjugate. Upon closer inspection of Eqs. (3)-(5), it can be seen that the bases functions can be thought of as a sequence of discrete time filters. This perspective is expanded upon below.

To specify the poles given in the previous expressions, various methods can be used. For example, if there is *a priori* information available, the poles can be specified manually. In a typical application, this is not the case, so an automated method can be used. For instance, the automated method could use the global multi-stage (GMS) algorithm described in detail in MacArthur et al., "A Practical Global Multi-Stage Method for Fully Automated Closed-Loop Identification of Industrial Process," Journal of Process Control, 17 (10) (2007), 770-786 (which is hereby incorporated by reference). This algorithm is well-tested and may be ideal for this application. The GMS algorithm returns a continuous-time reduced-order transfer function matrix, where each sub-model is ranked with respect to model quality. Poles and delays are recovered from each sub-model whose quality is higher than a specified threshold. Recovered poles are sorted with redundant elements removed. Finally, a heuristic is used to distribute the poles as evenly as possible from greatest to least such that the final number of poles is less than a user-specified maximum. The remaining poles are then used to construct the bases functions.

Ordinal Spline Bases Functions

The use of splines to represent static nonlinearities has become ubiquitous. Here, the splines are not used to represent the nonlinearities directly but rather to form flexible bases. Hence, they are referred to as ordinal splines. These functions can be derived from the well-known cubic spline, which can be represented as shown in Eq. (7) for $m$ splines and $m$+1 discrete points referred to as "knots." Also shown in this expression are the first and second derivatives.

$$\vartheta(u) = S(u) = \begin{cases} S_1(u) & u_1 \le u < u_2 \\ S_2(u) & u_2 \le u < u_3 \\ \vdots & \vdots \\ S_m(u) & u_m \le u < u_{m+1} \end{cases}$$
$$S_j(u) = a_j(u-u_j)^3 + b_j(u-u_j)^2 + c_j(u-u_j) + d_j$$
$$S'_j(u) = 3a_j(u-u_j)^2 + 2b_j(u-u_j) + c_j$$
$$S''_j(u) = 6a_j(u-u_j) + 2b_j \tag{7}$$

Typically, inputs u and outputs $\vartheta$ at the knot points are taken from plant data. Hence, the splines become part of the identification.

To create the bases functions, the splines are normalized. Let there be $m$+1 ordinal spline functions (OSFs) corresponding to the $m$+1 knots. Further, let each of the functions be defined by a normalized version of the cubic splines with $m$ segments and $m$+1 knots as shown in Eq. (7). Construct the OSF such that $S''_1(u_1) = S''_{m+1}(u_{m+1}) \equiv 0$ and the splines along with their first and second derivatives are continuous at each knot. Then, the $k^{th}$ OSF for the $j^{th}$ cubic spline segment can be given by:

$$S''_{j-1}(u_j - u_{j-1}) + 2S''_j(u_{j+1} - u_{j-1}) + S''_{j+1}(u_{j+1} - u_j) = 6\left[\frac{(\delta_{k,j+1} - \delta_{k,j})}{(u_{j+1} - u_j)} - \frac{(\delta_{k,j} - \delta_{k,j-1})}{(u_j - u_{j-1})}\right] \tag{8}$$

where $\delta$ is the Kronecker delta described above. The indices in Eq. (8) are $j$=2→$m$ and $k$=1→$m$+1.

The first and last terms on the left-hand side of Eq. (8) can be dropped since the first and last knots are due to

boundary conditions given above. Hence, the left-hand side of Eq. (8) results in a tri-diagonal matrix (TDM) $\in \Re^{(m-1),(m-1)}$, and this system of equations can be solved for the second derivatives of the splines at each knot. Once the second derivatives are known, the coefficients for the splines in Eq. (8) can be recovered from:

$$a_j = \frac{S''_{j+1} - S''_j}{6(u_{j+1} - u_j)}; \quad b_j = \frac{S''_j}{2}; \quad d_j = \delta_{k,j}$$
$$c_j = \frac{\delta_{k,j+1} - \delta_{k,j}}{(u_{j+1} - u_j)} - \frac{(S''_{j+1} + 2S''_j)(u_{j+1} - u_j)}{6} \quad (9)$$

Notice that only a description of the knots is needed for the solution of Eqs. (8) and (9). The knots can be interpreted as points on a grid and can be defined prior to any identification. This formulation directly supports incorporation of *a priori* information in that more knots can be placed in highly nonlinear regions and less knots elsewhere. As a simple example, consider a grid with five equally spaced knots. For this case, Eq. (8) can be solved as shown in Eq. (9). The $k^{th}$ column in **S**" corresponds to the second derivatives at knots two, three, and four for the $k^{th}$ OSF. The B matrix corresponds to the right-hand side of Eq. (8) for the five splines:

$$\mathrm{A} = \begin{bmatrix} 4 & 1 & 0 \\ 1 & 4 & 1 \\ 0 & 1 & 4 \end{bmatrix}; \quad \mathrm{B} = 6\begin{bmatrix} 1 & -2 & 1 & 0 & 0 \\ 0 & 1 & -2 & 1 & 0 \\ 0 & 0 & 1 & -2 & 1 \end{bmatrix} \quad (10)$$

$$\mathbf{S}'' = \mathrm{R}^{-1}\mathrm{Q}^{\mathrm{T}}\mathrm{B}$$

where: A = QR

Due to the boundary constraints, the second derivatives at knots one and five are zero. Let the $k^{th}$ OSF be designated as $\mathfrak{I}^k$ and have the spline structure given in Eq. (7). The solution of Eq. (10) yields the five OSFs 302 along with their first and second derivatives 304-306 as shown in FIGURE 3. Of particular note is the fact that the functions and their first derivatives are smooth and well-behaved, especially at

$$\mathfrak{I}^k(u_j) = \delta_{k,j}; \quad \sum_{k=1}^{m+1} \mathfrak{I}^k(u) = 1 \quad (11)$$

the boundaries. Properties of the OSF include: Hence, the OSFs at the knots are either zero or one, and the sum of all splines for any value between the knots is identically equal to one.

It is therefore possible to construct a new nonlinear static function in terms of these bases. Consider the SISO case where there are *p* knots and n measurements. The nonlinear relationship can be expressed in terms of linear coefficients as:

$$\vartheta = \boldsymbol{\mathfrak{I}}(u)\,\mathrm{c}$$
$$\boldsymbol{\mathfrak{I}}(u) = \begin{bmatrix} \mathfrak{I}^1(u_1) & \mathfrak{I}^2(u_1) & \cdots & \mathfrak{I}^p(u_1) \\ \mathfrak{I}^1(u_2) & \mathfrak{I}^2(u_2) & \cdots & \mathfrak{I}^p(u_2) \\ \vdots & \vdots & \ddots & \vdots \\ \mathfrak{I}^1(u_n) & \mathfrak{I}^2(u_n) & \cdots & \mathfrak{I}^p(u_n) \end{bmatrix} \mathrm{c} = \begin{bmatrix} \alpha_1 \\ \alpha_2 \\ \vdots \\ \alpha_p \end{bmatrix} \quad (12)$$

Given an $n\times 1$ input vector *u*, the S matrix is immediately known from the knot selection. With an instrument vector $\vartheta$ specified, the calculation of the coefficients is a simple least-squares problem. Conversely, with the coefficients and inputs known, the prediction of $\vartheta$ is a simple multiplication.

Instruments

For the MIMO problem, there are *nu* inputs and *ny* outputs. With nonlinear identification, it is possible to have nonlinear combinations of two or more input variables that have a significant effect on the process output. Similarly, it is possible to have nonlinear combinations of two or more internal or intermediate variables that have a significant effect on the output. These variables are referred to as "instruments." Unfortunately, if all possible combinations of instruments are accounted for, there are $2^{nu}-1$ and $2^{ny}-1$ possible combinations of input and output instruments. Techniques exist for automatically determining these structures for certain cases, such as in Ljung et al., "Regressor and Structure Selection in NARX Models Using a Structured ANOVA Approach," Automatica, 41 (3) (2009), 383-395 (which is hereby incorporated by reference). These techniques have not yet found widespread commercial use but could be used in this offering. Two types of instruments are discussed below:

- first-order instruments that consider all linear combinations of inputs/outputs; and
- high-order instruments that use only the highest-order of nonlinear input/output interaction.

Let $\mathfrak{S}_j^k(u_j)$ and $p_j$ be the $k^{th}$ ordinal spline and number of knots for the $j^{th}$ input, respectively. Further, let q=max(p). The first-order and high-order instruments can be constructed as shown below for input instruments (output instruments can have the same structure).

With first-order instruments, all linear combinations of ordinal splines are supported, and a modified form of Eq. (12) can be used to give the $i^{th}$ instrument as:

$$\vartheta_i = \sum_{j=1}^{nu} \left( \sum_{k=1}^{q} a_{i,j}^k \mathfrak{S}_j^k (u_j) \right); \quad i = 1 \to nu \qquad (13)$$

It may be convenient to rewrite this expression in general as:

$$\mathrm{A}_k = \begin{bmatrix} a_{1,1} & a_{1,2} & \cdots & a_{1,nu} \\ a_{2,1} & a_{2,2} & & \vdots \\ \vdots & & \ddots & \\ a_{nu,1} & \cdots & & a_{nu,nu} \end{bmatrix}_k \quad \mathbf{S}_k = \begin{bmatrix} \mathfrak{S}_1^k (u_1) \\ \mathfrak{S}_2^k (u_2) \\ \vdots \\ \mathfrak{S}_{nu}^k (u_{nu}) \end{bmatrix} \qquad (14)$$

$$\vartheta = \sum_{k=1}^{q} \mathrm{A}_k \mathbf{S}_k \qquad \mathfrak{S}_j^k \equiv 0; \quad p_j < q$$

Non-interacting instruments are obtained by setting off-diagonal terms in A to zero.

With high-order instruments, multiplicative combinations of ordinal splines are supported. As such, the $i^{th}$ instrument can have a fundamentally different structure than shown previously. Ordinal splines appear in a power series as given in Eq. (15):

$$\vartheta_i = \sum_{k_1}^{p_1} \sum_{k_2}^{p_2} \cdots \sum_{k_{nu}}^{p_{nu}} \alpha^i{}_{k_1,k_2,\cdots k_{nu}} \prod_{m=1}^{nu} \mathfrak{S}_m^{k_m} (u_m) \qquad (15)$$

As the iterative nomenclature used in Eq. (15) is non-standard, a simple example can illustrate the structure. Consider the case where there are three inputs with three knots, two knots, and one knot, respectively. The elements of the high-order instruments $\vartheta_i$ can be constructed as shown in Table 1.

Table 1

| | | | | | | |
|---|---|---|---|---|---|---|
| $k_1$=1 | $k_2$=1 | $k_3$=1 | $^{i}{}_{1,1,1}$ | $S_1^1$ | $S_2^1$ | $S_3^1$ |
| $k_1$=1 | $k_2$=2 | $k_3$=1 | $^{i}{}_{1,2,1}$ | $S_1^1$ | $S_2^2$ | $S_3^1$ |

(continued)

| | | | | | | |
|---|---|---|---|---|---|---|
| $k_1$=2 | $k_2$=1 | $k_3$=1 | $^{i}{}_{2,1,1}$ | $S_1{}^2$ | $S_2{}^1$ | $S_3{}^1$ |
| $k_1$=2 | $k_2$=2 | $k_3$=1 | $^{i}{}_{2,2,1}$ | $S_1{}^2$ | $S_2{}^2$ | $S_3{}^1$ |
| $k_1$=3 | $k_2$=1 | $k_3$=1 | $^{i}{}_{3,1,1}$ | $S_1{}^3$ | $S_2{}^1$ | $S_3{}^1$ |
| $k_1$=3 | $k_2$=2 | $k_3$=1 | $^{i}{}_{3,2,1}$ | $S_1{}^3$ | $S_2{}^2$ | $S_3{}^1$ |

From this construction, it is readily apparent that these instruments can be written as:

$$\begin{aligned} \vartheta_i &= \mathrm{h}_i \, \tilde{\boldsymbol{S}} \\ \mathrm{h}_i &= \left[\alpha_{1,1,1} \quad \alpha_{1,2,1} \quad \alpha_{2,1,1} \quad \alpha_{2,2,1} \quad \alpha_{3,1,1} \quad \alpha_{3,2,1}\right]^i \\ \tilde{\boldsymbol{S}} &= \left[\mathfrak{S}_1^1 \mathfrak{S}_2^1 \mathfrak{S}_3^1 \quad \mathfrak{S}_1^1 \mathfrak{S}_2^2 \mathfrak{S}_3^1 \quad \cdots \quad \mathfrak{S}_1^3 \mathfrak{S}_2^2 \mathfrak{S}_3^1\right]^{\mathrm{T}} \end{aligned} \tag{16}$$

or in general as:

$$\vartheta = \mathrm{H}\tilde{\boldsymbol{S}} \quad \mathrm{H} \in \Re^{nu,\beta} \quad \tilde{\boldsymbol{S}} \in \Re^{\beta,1} \quad \beta = \prod_{m=1}^{nu} p_m \tag{17}$$

With the instruments defined by Eqs. (14), (15), and (17) and the orthonormal bases function defined by Eqs. (1)-(6), the various block-oriented models can be described as follows.

Block-Oriented Models

Starting with FIGURE 2, the output of the dynamic block (intermediate block 206) in terms of the input instruments can be given by the MIMO form of Eq. (1) as:

$$\omega = \sum_{i=0}^{\lambda-1} \mathrm{B}_i(\mathscr{B}_i \vartheta) \qquad \mathrm{B}_i \in \Re^{ny,nu} \tag{18}$$

This expression can be filtered by the output nonlinear block 204 to give:

$$y = \mathscr{F}(\psi) = \mathscr{F}(\omega + v) \tag{19}$$

In Eq. (19), the functional is composed of ordinal splines constructed using Eqs. (8)-(11). Here, however, the outputs are used to define the knots. As was the case previously, both first-order and high-order instruments are accommodated.

Neglecting the output nonlinearity for the time being, inspection of FIGURE 2 shows that $\hat{\omega}$-$\hat{y}$, and Eq. (18) represents the well-known Hammerstein structure. Model forms for this structure using both first-order and high-order instruments are given below.

N-L Model with First-Order Instruments

Substituting Eq. (14) into Eq. (18), taking the transpose, and expanding and rearranging terms gives the following expression for *ny* outputs given *nu* inputs. Note that the bases functions appear as combined terms. Similarly, the matrices representing the unknown coefficients appear as combined terms. These sub-matrices are dimensioned $nu \times ny$.

$$\begin{aligned}[\omega_1 \quad \omega_2 \quad \cdots \quad \omega_{ny}] =& \\ &\mathcal{B}_0\mathbf{S}_1^{\mathrm{T}}\mathrm{A}_1^{\mathrm{T}}\mathrm{B}_0^{\mathrm{T}} + \mathcal{B}_0\mathbf{S}_2^{\mathrm{T}}\mathrm{A}_2^{\mathrm{T}}\mathrm{B}_0^{\mathrm{T}} + \cdots \mathcal{B}_0\mathbf{S}_q^{\mathrm{T}}\mathrm{A}_q^{\mathrm{T}}\mathrm{B}_0^{\mathrm{T}} + \\ &\mathcal{B}_1\mathbf{S}_1^{\mathrm{T}}\mathrm{A}_1^{\mathrm{T}}\mathrm{B}_1^{\mathrm{T}} + \mathcal{B}_1\mathbf{S}_2^{\mathrm{T}}\mathrm{A}_2^{\mathrm{T}}\mathrm{B}_1^{\mathrm{T}} + \cdots \mathcal{B}_1\mathbf{S}_q^{\mathrm{T}}\mathrm{A}_q^{\mathrm{T}}\mathrm{B}_1^{\mathrm{T}} + \\ &\vdots \\ &\mathcal{B}_{\lambda-1}\mathbf{S}_1^{\mathrm{T}}\mathrm{A}_1^{\mathrm{T}}\mathrm{B}_{\lambda-1}^{\mathrm{T}} + \mathcal{B}_{\lambda-1}\mathbf{S}_2^{\mathrm{T}}\mathrm{A}_2^{\mathrm{T}}\mathrm{B}_{\lambda-1}^{\mathrm{T}} + \cdots \mathcal{B}_{\lambda-1}\mathbf{S}_q^{\mathrm{T}}\mathrm{A}_q^{\mathrm{T}}\mathrm{B}_{\lambda-1}^{\mathrm{T}}\end{aligned} \qquad (20)$$

This expression can be written in standard linear regression form as:

$$\begin{aligned}&\omega = \varphi\,\theta; \quad \omega = [\omega_1 \quad \omega_2 \quad \cdots \quad \omega_{ny}] \\ &\varphi = \big[\mathcal{B}_0\mathbf{S}_1^{\mathrm{T}} \quad \mathcal{B}_0\mathbf{S}_2^{\mathrm{T}} \quad \cdots \quad \mathcal{B}_0\mathbf{S}_q^{\mathrm{T}} \\ &\qquad \mathcal{B}_1\mathbf{S}_1^{\mathrm{T}} \quad \mathcal{B}_1\mathbf{S}_2^{\mathrm{T}} \quad \cdots \quad \mathcal{B}_1\mathbf{S}_q^{\mathrm{T}} \\ &\qquad \vdots \\ &\qquad \mathcal{B}_{\lambda-1}\mathbf{S}_1^{\mathrm{T}} \quad \mathcal{B}_{\lambda-1}\mathbf{S}_2^{\mathrm{T}} \quad \cdots \quad \mathcal{B}_{\lambda-1}\mathbf{S}_q^{\mathrm{T}}\big] \\ &\mathbf{S}_k^{\mathrm{T}} = \big[\mathfrak{I}_1^k(u_1) \quad \mathfrak{I}_2^k(u_2) \quad \cdots \quad \mathfrak{I}_{nu}^k(u_{nu})\big]\end{aligned} \qquad (21)$$

$$\theta = \begin{bmatrix}\mathrm{A}_1^{\mathrm{T}}\mathrm{B}_0^{\mathrm{T}} \\ \vdots \\ \mathrm{A}_q^{\mathrm{T}}\mathrm{B}_{\lambda-1}^{\mathrm{T}}\end{bmatrix} \qquad \varphi \in \Re^{1,\lambda\cdot q\cdot nu}; \quad \theta \in \Re^{\lambda\cdot q\cdot nu,\, ny}$$

With N measurements of the input and output vectors, the solution for the coefficients $\theta$ of the N-L model can be obtained by solving the following two-norm problem:

$$\begin{aligned}&\min_{\theta}\frac{1}{2}\|\Phi\theta - \Omega\|_2^2; \quad \Phi \in \Re^{\mathrm{N},\lambda\cdot q\cdot nu}; \quad \Omega \in \Re^{\mathrm{N},ny} \\ &\therefore \quad \theta = \mathrm{A}^{+}\Omega\end{aligned} \qquad (22)$$

Here, $\omega$ and hence $\Omega$ are composed solely of the output measurements *y*. Also, $A^+$ is the pseudo-inverse of $\Phi$ calculated from the following orthonormal decomposition:

$$\begin{aligned}&\Phi = \mathrm{URV}^{\mathrm{T}}; \quad \mathrm{R} = \begin{bmatrix}\mathrm{R}_{1,1} & 0 \\ 0 & 0\end{bmatrix}; \ \mathrm{R}_{1,1} \in \Re^{k,k} \\ &\mathrm{A}^{+} = \begin{bmatrix}\mathrm{V}_{1,1}\mathrm{R}_{1,1}^{-1}\mathrm{U}_{1,1} & \mathrm{V}_{1,1}\mathrm{R}_{1,1}^{-1}\mathrm{U}_{2,1} \\ \mathrm{V}_{2,1}\mathrm{R}_{1,1}^{-1}\mathrm{U}_{1,1} & \mathrm{V}_{1,1}\mathrm{R}_{1,1}^{-1}\mathrm{U}_{2,1}\end{bmatrix}\end{aligned} \qquad (23)$$

In this expression, an upper triangular matrix R is rank k, where *k* is the pseudo-rank of $\Phi$. The pseudo-rank can be determined internally and may be less than or equal to the true rank given by the singular value decomposition (SVD) of $\Phi$ since it accounts for the fact that $\Phi$ contains noisy single precision data. Given that the true process is contained in the model set spanned by Eq. (21) and the inputs are persistently exciting ($k=\lambda \times q \times nu$) and independent of the disturbance $\gamma$, under open-loop conditions the estimates given by Eq. (22) are consistent and unbiased. With conventional asymptotic assumptions satisfied, no lengthy discussion is necessary here since it is obvious from Eq. (22) that no output *y* occurs in the regressor matrix $\Phi$. Hence, the estimates converge to their true values as $N \rightarrow \infty$.

Note that only bases functions appear in the regressor matrix. The starting point in forming the regressor matrix can be the creation of a spline matrix **S**. Since each ordinal spline is simply an operator, the first *nu* columns in this matrix can be generated by passing the input data matrix (*N, nu*) through the first ordinal spline. Subsequent columns can be generated by passing the data matrix through all q ordinal splines such that the number of columns in **S** is $nu \times q$.

Final construction of the regressor matrix can proceed in a similar fashion. Since each orthonormal bases function is a rational transfer function, they can be used as a bank of filters applied to the spline matrix directly to generate

the final regressor matrix in a very efficient fashion. The first $nu \times q$ columns in $\Phi$ can be generated by filtering the spline matrix by the first orthonormal bases function. The process can continue by using all A bases functions until there are $\lambda \times nu \times q$ columns. By construction, the spline matrix **S** can be rank-deficient due to the summation expression in Eq. (11). This problem can be corrected by removing the *nu* redundant columns from **S.** For all inputs where $p_i < q$, the spline function is identically zero. Hence, corresponding columns in $\Phi$ and rows in $\theta$ can be removed before solving Eq. (22). Note that the nonlinear model may require no iteration for the estimation of the unknown coefficients as they are the result of a least-squares (LS) solution.

N-L Model with High-Order Instruments

Creation of these models can follow in an identical fashion to that given previously. Substituting Eq. (16) into Eq. (17), taking the transpose, and expanding and rearranging terms gives the following expression for high-order instruments:

$$
\begin{aligned}
& y = \varphi\theta; \quad y = [y_1 \quad y_2 \quad \cdots \quad y_{ny}] \\
& \varphi = \left[\mathscr{B}_0 \tilde{\mathbf{S}}^{\mathrm{T}} \quad \mathscr{B}_1 \tilde{\mathbf{S}}^{\mathrm{T}} \quad \cdots \quad \mathscr{B}_{\lambda-1} \tilde{\mathbf{S}}^{\mathrm{T}}\right] \\
& \tilde{\mathbf{S}}^{\mathrm{T}} = \left[\mathfrak{S}_1^1 \mathfrak{S}_2^1 \mathfrak{S}_3^1 \cdots \mathfrak{S}_{nu}^1 \quad \mathfrak{S}_1^1 \mathfrak{S}_2^2 \mathfrak{S}_3^1 \cdots \mathfrak{S}_{nu}^1 \quad \cdots\right] \\
& \theta = \begin{bmatrix} \mathrm{H}^{\mathrm{T}} \mathrm{B}_0^{\mathrm{T}} \\ \vdots \\ \mathrm{H}^{\mathrm{T}} \mathrm{B}_{\lambda-1}^{\mathrm{T}} \end{bmatrix} \qquad \varphi \in \Re^{1,\beta}; \quad \theta \in \Re^{\beta, ny}
\end{aligned}
\tag{24}
$$

where $\beta$ is defined in Eq. (16). Note that Eq. (24) has exactly the same form as Eq. (21), so its solution is given by Eq. (22) with the appropriate change in dimensions.

As was the case previously, this model form may require no iteration. Conventionally, the original A or *H* and *B* coefficient matrices are extracted once the $\theta$ matrix is available. In point of fact, this is neither desirable nor required in this formulation. Significant information can be lost even using the singular value method. Here, it is the convolution of the bases functions and the associated coefficients that facilitate the accommodation of nonlinear dynamics.

N-L-N Model

As shown in Eq. (19), the splines are based on $\psi$, which can be an unmeasurable unknown value. To proceed, the output nonlinearity can be required to be invertible. Hence, the method may be unable to accommodate I/O multiplicity, etc. With this assumption, the output expression of interest becomes:

$$\psi = \mathscr{F}^{-1}(y) \tag{25}$$

Let

$$\mathscr{C}_j{}^k(y_j)$$

be the $k^{th}$ ordinal spline for the $j^{th}$ output and have the spline structure given in Eq. (7). For first-order instruments, Eq. (25) may be written as:

$$
\mathrm{C}_k = \begin{bmatrix} c_{1,1} & c_{1,2} & \cdots & c_{1,ny} \\ c_{2,1} & c_{2,2} & & \\ \vdots & & \ddots & \\ c_{ny,1} & \cdots & & c_{ny,ny} \end{bmatrix}_k \quad \mathscr{C}_k(y) = \begin{bmatrix} \mathscr{C}_1^k(y_1) \\ \mathscr{C}_2^k(y_2) \\ \vdots \\ \mathscr{C}_{ny}^k(y_{ny}) \end{bmatrix} \tag{26}
$$

$$\psi = \mathscr{F}^{-1}(y) = \sum_{k=1}^{q} C_k \mathscr{C}_k(y) \qquad \mathscr{C}_j^k \equiv 0; \quad p_j < q$$

Note that this structure is identical to the form given in Eq. (14). High-order output instruments are identical to those shown previously and are not to be repeated here.

In general, it is possible to form L-N (Wiener) models in standard LS form and avoid iterations. Unfortunately, when used here, the resultant problem can be so ill-conditioned as to render the results useless. In addition, this formulation leads to biased estimates.

From FIGURE 2, it is clear that the solution may require the minimization of the error $\varepsilon=\omega-\psi$. Hence, the objective of any problem with an output nonlinearity is to estimate $\omega$. To do this, the following iterative approach can be used (the discussion is given in the context of the N-L-N model but applies to the L-N structure if the input spline is taken as a unity operator). To begin, Eq. (22) is solved to get an initial estimate of $\theta$ by setting $\Omega=Y$. $\hat{\omega}$ is then recovered as $\hat{\omega}=\Phi\theta$ Next, set $\psi=\hat{\omega}$ and use Eq. (26) to formulate the following regression problem:

$$\begin{aligned} &\hat{\omega} = \varphi\theta; \quad \hat{\omega} = [\hat{\omega}_1 \quad \hat{\omega}_2 \quad \cdots \quad \hat{\omega}_{ny}] \\ &\varphi = \left[\mathscr{C}_1^{\mathrm{T}}(y) \quad \mathscr{C}_2^{\mathrm{T}}(y) \quad \cdots \quad \mathscr{C}_q^{\mathrm{T}}(y)\right] \\ &\mathscr{C}_k^{\mathrm{T}}(y) = \left[\mathscr{C}_1^k(y_1) \quad \mathscr{C}_2^k(y_2) \quad \cdots \quad \mathscr{C}_{ny}^k(y_{ny})\right] \\ &\theta = \left[\mathrm{C}_1 \quad \cdots \quad \mathrm{C}_q\right]^{\mathrm{T}}; \quad \varphi \in \Re^{1,\, q\cdot ny}; \quad \theta \in \Re^{q\cdot ny,\, ny} \end{aligned} \tag{27}$$

Eq. (27) can be solved as a LS problem similar to Eq. (22) . With $C_k$ known, Eq. (26) can be used as a predictor to calculate a new value for $\hat{\psi}$. Next, set $\omega=\hat{\psi}$ and resolve Eq. (22) for $\theta$. The procedure continues until the change in the error $(\omega-\psi)$ is reduced to less than or equal to a small specified threshold. At convergence, $\theta$ can be used one last time to generate $\hat{\omega}=\Phi\theta$. This value of $\omega$ is then used with the ordinal spline function in Eq. (19) to formulate the following regression for the unknown D matrices:

$$\begin{aligned} &y = \mathscr{F}(\hat{\omega}) = \sum_{k=1}^{q} \mathrm{D}_k \mathscr{D}_k(\hat{\omega}); \\ &y = \varphi\theta; \quad y = [y_1 \quad y_2 \quad \cdots \quad y_{ny}] \\ &\varphi = \left[\mathscr{D}_1^{\mathrm{T}}(\hat{\omega}_1) \quad \mathscr{D}_2^{\mathrm{T}}(\hat{\omega}_2) \quad \cdots \quad \mathscr{D}_q^{\mathrm{T}}(\hat{\omega}_q)\right] \\ &\mathscr{D}_k^{\mathrm{T}}(\hat{\omega}) = \left[\mathscr{D}_1^k(\hat{\omega}_1) \quad \mathscr{D}_2^k(\hat{\omega}_2) \quad \cdots \quad \mathscr{D}_{ny}^k(\hat{\omega}_{ny})\right] \\ &\theta = \left[\mathrm{D}_1 \quad \cdots \quad \mathrm{D}_q\right]^{\mathrm{T}}; \varphi \in \Re^{1,\, q\cdot ny}; \ \theta \in \Re^{q\cdot ny,\, ny} \end{aligned} \tag{28}$$

Eq. (28) can be solved as a LS problem similar to Eq. (22) for $D_k$. With $\hat{\omega}$ and $D_k$ known, Eq. (28) can be used to predict the output as:

$$\hat{y} = \mathscr{F}(\hat{\omega}) = \sum_{k=1}^{q} \mathrm{D}_k \mathscr{D}_k(\hat{\omega}) \tag{29}$$

Note that construction of the OSF in Eq. (28) utilizes a knot structure identical to that specified at design time for the OSF in Eq. (26). If the iterative procedure is simply considered as a method to determine $\omega$, at the last iteration the solution of Eq. (27) is not required, and the final problem can be solved using only Eq. (22) with $\omega$ substituted for $Y$ and Eq. (29). As $y$ appears in neither regressor matrix, the estimates of $\theta$ and $D_k$ are unbiased.

Identification Technique

FIGURE 4 illustrates an example method 400 for nonlinear process identification according to this disclosure. Ideally, identification is done as an integrated part of the plant step testing procedure (although this is not required). This type of approach has become widely accepted and successful for linear MPC as witnessed to by the commercial availability of automated on-line identification products. One objective of this patent document is to continue in this direction for nonlinear identification and control. One way to accomplish this is to allow for incremental model development, which is the approach taken here.

Plant excitation occurs at step 402. This could include, for example, providing various inputs to an industrial process and examining how various outputs of the process change. Details of signal design for persistent excitation of the models discussed here are beyond the scope of this document. However, a few comments are in order as the various structures impose unique requirements on plant tests. For first-order non-interacting instruments, Hammerstein and Wiener models may show identical steady-state behavior. However, the differences in their dynamic responses can be profound. For Hammerstein models of this class, the shape of the step response curve may be independent of the input amplitude. This is not the case for models with output nonlinearities (such as Wiener models) since the dynamic response is a function of the step magnitude itself. This can be significant. In the former case, a pseudo-random binary sequence (PRBS) of reasonable amplitude can be applied at appropriate levels. In the latter case, a pseudo-random multilevel sequence (PRMS) may be used. Operating plants are used to PRBS signals, so extensions to performing them at multiple levels may be natural. Convincing plant personnel to use PRMS signals may be an uphill battle. Use of high-order instruments may require some sort of PRMS as the nonlinear interactions can be amplitude-dependent.

Plant dynamics are identified at step 404. For example, based on prior plant knowledge, a tentative structure can be selected, and it can then be decided if linear or nonlinear dynamics are required. If only linear dynamics are required, a conventional open/closed loop step test can be performed at a nominal operating point. Otherwise, conventional tests can be performed at multiple operating points that span the desired operating range. Typically, a small number (such as only 3-5) of operating points may be needed if chosen properly. Note that conventional step tests may be all that is needed to determine the system Eigenvalues and hence create an orthonormal bases function. This step can be independent of the nonlinear identification and, once completed, does not need to be repeated.

Plant nonlinearities are captured at step 406, and a final model of the plant is obtained at step 408. As discussed in detail, ordinal splines are used in this formulation. The ordinal spline bases enable the method 400 to offer an extremely flexible structure that makes very effective use of data and greatly attenuates the problems that are associated with over-fitting. By placing points (knots) on a grid, a user specifies desired accuracy at desired locations. The more grid points in a region, the more accurate the calculations in that region (assuming the data is properly excited). The user can place knots wherever there are regions of significant nonlinearity. To ensure the requirement of persistent excitation, the process can be excited at a number of levels corresponding to the number of knots. An example of this is shown in FIGURE 5, where an estimated pH gain curve 502 is shown along with the distribution 504 of knots 506 used to estimate the gain curve 502. The knots 506 are also projected onto the gain curve 502 itself.

Thus, the identification procedure (method 400) can be thought of as defining the operating points necessary to capture significant gain characteristics of an industrial process. Gain surfaces can be refined in an incremental fashion as more data is added to the regression.

In some embodiments, model identification during step 408 can be accomplished as follows. Pertinent step test data is gathered, and data segments for pole extraction are graphically marked. Anomalous data can be graphically marked for exclusion from the model identification process, and regression and cross-validation ranges can be graphically specified. The block structure and instrument type for the model are selected, which can be based on plant experience. Knot distributions can be graphically specified based on process understanding. At that point, a model identification procedure can be initiated to automatically perform the following tasks:

(a) Data corresponding to excluded segments and cross-validation ranges is removed.
(b) The GMS algorithm is invoked for each marked data segment and returns a transfer function matrix of ranked sub-models for each segment.
(c) Poles and delays are determined based on the transfer functions.
(d) Data from step (b) is removed.
(e) Orthonormal bases and spline bases are constructed.
(f) Various forms of Eqs. (1)-(17) are solved and nonlinear models are constructed.
(g) Infinite horizon predictions are generated based on cross-validation data if is exists or regressed data otherwise. Gain and process sensitivity plots are generated and model metrics are determined.

Based on the results, individual steps can be repeated and step testing modified as necessary to obtain models of sufficient quality for control. Note that if time constants and delays are manually specified, steps (b)-(d) can be skipped.

In particular embodiments, step testing using closed and/or open loop data is performed, such as by using a PROFIT STEPPER from HONEYWELL INTERNATIONAL INC. The step testing can be done at a nominal operating point, and signal injection may be needed and can cover the spectrum of key process dynamics. Signal amplitude can be large enough so that the signal-to-noise ratio exceeds a specified value (such as two). Linear step testing can continue until key models have a specified quality (such as rank two or better). A model structure can be selected based on process characteristics, the initial knot distribution can be based on process nonlinearities, and signal excitations can be designed based on the knot distribution and used with historical data. The knot distributions and signal excitations can be refined to converge on an accurate model.

Also, in particular embodiments, data about a process system can be collected at any suitable rate, such as once per minute. The sampling rate could be selected so that the process reaches steady-state within a specified number of intervals (such as 200). If the process' response time exceeds a threshold (such as 200 minutes), the data can be super-sampled. No filtering or compression of the data may be needed. When models are created in continuous nonlinear state-space form, the sample rate used during process identification could have no bearing on the control execution interval of the controller(s) using the model. Instead, the control execution interval could be determined based on disturbance frequency and desired closed-loop bandwidth, and the default control execution interval could be one minute.

Example Results

Several case studies are presented here to show some of the structure capabilities of the various techniques presented in this patent document. Problems using Hammerstein, Weiner, and block-oriented structures are illustrated. Two problems from the open literature are given, as are two additional problems (one designed specifically to show the accommodation of nonlinear dynamics, the other to show output nonlinearities). Finally, results on plant step test data are described.

Hammerstein Model, High-Order Instruments

This case is taken directly from Chan et al., "Identification of MIMO Hammerstein Systems Using Cardinal Spline Functions," Journal of Process Control 16 (7) (2006) 659-670. It illustrates a gain inversion problem using a Hammerstein model with high-order instruments. Identical nonlinear functions, noise characteristics, and input signal excitation are used here. Static input nonlinearities for this case are given by:

$$\vartheta = \begin{bmatrix} f_1(u_1) \\ f_2(u_1 u_2) \end{bmatrix} = \begin{bmatrix} 3 + \dfrac{8}{1+e^{-3u_1}} - 7 \\ f_1(u_1) * 10 * \left[ \dfrac{10u_2 + 50}{10u_2 + 51} - \dfrac{50}{51} \right] \end{bmatrix} \quad (30)$$

To make the problem significantly more challenging, the LTI dynamic model used in Chan et al. has been modified to include complex poles, pure time delay, non-minimum phase characteristics, and non-zero gains of off-diagonal elements. The dynamic response of the old model from Chan et al. and the new model used here are shown in FIGURE 6. In FIGURE 6, lines 602a-602d are associated with the old model from Chan et al., and lines 604a-604d are associated with the new model.

Without *a priori* information of the new model structure, prior approaches fail to yield a correct solution for this problem. The data for this case study is illustrated in FIGURE 7. The crossed-hatched area in FIGURE 7 represents conventional step test data used to determine the orthonormal bases functions. This data was not present in the original study by Chan et al. Since the dynamics are taken to be linear, only one such region is specified. The remaining data is the same as that used in Chan et al. For this case, the inputs are generated using PRMS signals. Data from the cross-hatched segment is passed to the GMS algorithm, which returns a ranked set of reduced-order transfer function matrices. Transfer function results for this data are shown in FIGURE 8, which uses only the data of the cross-hatched area shown in FIGURE 7.

Two step response curves are shown in FIGURE 8. One corresponds to the displayed transfer function, and the other corresponds to the true model shown in FIGURE 6. The area 802 represents the discrepancy between the true and estimated models.

FIGURES 9A and 9B show predictions over the linear step test data. In FIGURE 9A, lines 902-912 represent $y_1, \hat{y}_1, y_2, \hat{y}_2, u_1, u_2$ respectively. In FIGURE 9B, lines 952-962 represent $y_1, \hat{y}_1, y_2, \hat{y}_2, u_1, u_2$ respectively. Due to the nonlinear coupling between inputs, sequential steps are performed at two operating points. The small circles in FIGURES 9A and 9B represent discontinuities in the data between points. In the first set of data in FIGURE 9A, only $u_1$ was moved. In the second set of data in FIGURE 9B, only $u_2$ was moved. As would be expected for these highly accurate results, all models are estimated to be high quality (rank one).

As such, each transfer function is passed from the GMS solution back to the nonlinear identification algorithm for parsing. In this case, the following seven poles are automatically extracted: = [-0.269, -0.277, -0.336, -0.440, -1.17, -0.617+0.666i, -0.717-0.666i]. These continuous-time poles can be converted into the discrete domain and used with the time delay to create the orthonormal bases function using Eqs. (3)-(6).

At this point, the only user interaction is the specification of the data segments from which to extract the poles. To a large extent, determination of the poles can be removed from the main identification algorithm. In fact, once the poles have been estimated, an option can exist to bypass this calculation on subsequent evaluations. Success or failure

of the nonlinear portion of the identification can depend on the proper specification of the spline knots. Indeed, this specification is a powerful aspect of the approach described here.

These knots can be defined in terms of points on a grid for each variable, depending on the choice of the static nonlinearity. Grids can be specified in terms of knot distributions as shown in FIGURES 10A and 10B for the two inputs of this problem. One goal here is to put more knots 1002, 1052 in areas of rapidly changing gain and less elsewhere, while at the same time using the fewest number of knots possible without losing accuracy. In some embodiments, grids can be entered graphically by manipulating specially-provided functions or by directly specifying knot positions. It is in the grid specification that *a priori* process information can be explicitly accounted for in the identification procedure. The importance of incorporating *a priori* information cannot be over stated. The results shown in FIGURES 11A, 11B, 12A, and 12B are extremely accurate due at least in part to the knot distribution specified in FIGURES 10A and 10B. In fact, if the same number of knots is used with a linear distribution, the results might be unacceptable. In FIGURE 11A and 11B, actual and estimated gain curves 1102, 1152 are shown. In FIGURE 12A and 12B, lines 1202 and 1252 represent $y_1$ and $y_2$, and they are very closely matched to lines 1204 and 1254 representing $\hat{y}_1$ and $\hat{y}_2$.

It is obvious from the gain curves 1102 and 1152 of FIGURES 11A and 11B why the knot distributions are specified as they are in FIGURES 10A and 10B. In the $u_1$ direction, it can be seen that the gain is zero over a large portion of the surface. However, the gain changes dramatically between $-1 \le u_1 \le +1$. In fact, there is an obvious gain inversion as the gain goes from -53 to +6. In the $u_2$ direction, the gain is largely uniform over the surface up to $u_2 \le -3$, at which point it changes rapidly.

These characteristics are reflected directly in the knot distributions. The plot in FIGURE 10A shows the grid used for $u_1$, and the plot in FIGURE 10B shows the grid used for $u_2$. The ordinate in these plots corresponds to the span or range of the corresponding variable. In FIGURE 10A, nine knots 1002 have been selected with a dense distribution between -1 and 1. This corresponds to the region where the gain is changing rapidly. In FIGURE 10B, there are only six knots 1052, and four of those are located between -4 and -5. Note that for the input $u_2$, the knots 1052 only span half the range (-5 to 0), yet the results over the entire range are still very accurate. This is a direct consequence of the use of the ordinal splines. As shown in FIGURE 3, the splines have very nice properties at the grid boundaries. Hence, since the gain surface is not changing for $u_2>0$, there is no reason to include extraneous knots in this region. The implication here is significant, as each knot imposes an increased demand on information content in the data.

Nonlinear Dynamics

For this case, a very simple model is constructed to show that the formulation presented here can accommodate nonlinear dynamics. The basic model can be expressed as:

$$\begin{aligned} &\dot{x} = -\frac{1}{\tau(u)}x + \frac{g(u)}{\tau(u)}; \quad g(u) = \frac{\beta\left(e^{\frac{P_g u'}{\gamma}} - 1\right)}{e^{P_g} - 1} + g_{lo} \\ &\tau(u) = \frac{\alpha\left(e^{\frac{P_\tau u'}{\gamma}} - 1\right)}{e^{P_\tau} - 1} + \tau_{lo}; \quad k(u) = \frac{\beta P_g e^{\frac{P_g u'}{\gamma}}}{\gamma\left(e^{P_g} - 1\right)} \\ &y = x \end{aligned} \tag{31}$$

Constants and variables used in the model can be defined as follows:

$$\begin{aligned} &\alpha = \tau_{hi} - \tau_{lo}; \quad \beta = g_{hi} - g_{lo}; \quad \gamma = u_{hi} - u_{lo} \\ &u' = u - u_{lo}; \quad P_g = 4; \quad P_\tau = 4; \quad \tau_{hi} = 50; \quad \tau_{lo} = 5 \\ &g_{hi} = 200; \quad g_{lo} = 1; \quad u_{hi} = 12; \quad u_{lo} = 1 \end{aligned} \tag{32}$$

A Hammerstein model is arbitrarily chosen to fit this data. The model is excited using a PRBS signal at five equally-spaced values of the input {1, 3.75, 6.5, 9.25, 12} using an amplitude of $\pm 0.01$. The effective gain and time constant as a function of the input for this model are shown in FIGURE 13 as lines 1302-1304, respectively. With this *a priori* information, the grid of knots 1402 can be selected as shown FIGURE 14.

Seven knots 1402 are selected for this case as shown in FIGURE 14, two more than might be theoretically recommended. Five of the knots 1402 are located between values of 8 and 12 to capture the exponential increase in the effective gain and time constant in this region. For this case, no conventional stepping is performed to estimate the dynamics at the various operating points, as this would result in an almost exact pole match for this simple model. Rather,

the manual mode of the identifier is used to specify a range of poles.

In the manual mode, the user actually inputs a range of expected time constants, which are internally converted to the required poles. In general, the user is free to specify any number of time constants up to an internally-specified limit, and the time constants can be chosen to span the expected range of the process. As shown in Table 2, the user-specified time constants contain a considerable error.

Table 2

| Pole Definition | | | | | |
|---|---|---|---|---|---|
| u | 1 | 3.75 | 6.5 | 9.25 | 12 |
| True $\tau$ | 5 | 6.44 | 10.36 | 21.02 | 50 |
| User $\tau$ | 5 | 25 | 38 | 45 | 50 |

True $\tau$ values in Table 2 are taken from the effective time constant expression defined in the model ($\tau(u)$). Here, only five were chosen to match the five operating points. In spite of the significant errors in the user-specified time constants, FIGURE 15 illustrates that the nonlinear variation in the dynamics has been well modeled.

FIGURE 15 shows the predicted and actual dynamic response for the two nominal operating points of u=3.75 and $u$=12. In FIGURE 15, lines 1502a-1502b represent the closely matched $y$ and $\hat{y}$ signals, while lines 1504a-1504b represent the two u signals. The time scale for both cases is identical and spans 1,500 minutes. The significant impact of both the effective gain and time constant are self-evident from FIGURE 15. For the constants used in the model, the effective gain varies from 1 to 75, while the effective time constant varies from 5 to 50.

Results in terms of the effective gain are shown in FIGURE 16, which has a line 1602 representing the true gain and a line 1604 representing the estimated gain at different operating points. Although data is only available at the operating points, the estimated gain curve is internally calculated in the identification process and illustrates how the gain can vary over the entire operating domain.

It is worth mentioning that the simple model presented here is not intended to represent a physical process but rather to show that nonlinear dynamics can be effectively modeled using the bases functions described above. That the variations in the effective gain and time constant depicted in FIGURE 13 are at least somewhat reasonable can be corroborated by referring to Pearson et al., "Gray-Box Identification of Block-Oriented Nonlinear Models," Journal of Process Control 10 (2000) 301-315, which analyzes a distillation column that exhibits output multiplicity under certain conditions. For the case of the high bifurcation point, Pearson et al. plot the effective gain and time constant as a function of the mass reflux. The exponential function of these curves is quite similar to the functions shown in FIGURE 13. The main difference is that the functions decrease as the mass reflux increases in Pearson et al. The effective time constant varies from 2.5 to 34, while the effective gain varies from 0.1 to 1.75.

<u>Wiener Model</u>

As output nonlinearities are used here, the solution may involve iteration. Although the method is unbiased, it is useful to see the effect of noisy measurements and discontinuous data. The following SISO model is used for this case:

$$\begin{gathered}\hat{\omega}=\frac{1}{2s^2+3s+1}u'; \quad \nu=\frac{\alpha}{9.4912s+1}; \quad \alpha=\frac{\operatorname{var}(\nu)}{\operatorname{var}(y)}=7\% \\ y=\omega+2\omega^3+c; \quad \omega=\hat{\omega}+\nu; \quad u'=u-11; \quad c=20\end{gathered} \tag{33}$$

In the setup for this problem, eight knots are linearly distributed over the output range, which varies between 11 and 52. Since this is an output nonlinearity, a PRMS signal is used, which has a minimum and maximum value of 9 and 13, respectively. As can be seen from the problem statement, the disturbance to output power is 7%. This simple case only takes three iterations to converge. Also, the predictive performance is good as illustrated in FIGURE 17, which shows lines 1702-1704 representing $y$ and $\hat{y}$, respectively.

Another aspect depicted in FIGURE 17 is the fact that the data is discontinuous. Being able to deal with discontinuous and bad (NaN) data may be a requirement of any method to be used for industrial deployment. It is the extremely rare case where all data collected for any identification is contiguous. In fact, even in the rare cases where it is contiguous, often data needs to be excluded from the identification for one reason or another. This requirement results in discontinuous data being used for regression. To accommodate these conditions, the orthonormal bases function filters can calculate initial conditions after each discontinuity. In addition, these filters can explicitly deal with the fact that

bad data (NaN) can appear anywhere in the data set. An almost exact replication of the gain curve is obtained for this process as illustrated in FIGURE 18, where lines 1802 representing $G$ and $\hat{G}$ overlap over virtually their entire length. A similar replication of the LTI dynamics is also obtained although not displayed.

As described previously, a primitive successive substitution method can be used to determine $\omega$. Alternate Newton formulations can also be constructed and used (although the numerical gradient calculation of the bases functions may not be justified). Iterations are well-behaved due to good initial conditions ($\omega$=$y$) and the fact that all regression calculations are solved as simple least squares problems. While the iteration count is a function of the complexity of the output nonlinearity (high-order output instruments for multiple outputs), it is nevertheless well-behaved in the sense that the loss function decreases monotonically. The maximum number of observed iterations to date is less than forty.

N-L-N Model

An exact copy of the model described in Zhu, "Estimation of an N-L-N Hammerstein-Wiener Model," Automatica 38 (9) (2002) 1607-1614 is used here. The input, dynamic, and output blocks are given by:

$$\vartheta = \frac{u}{\sqrt{.1+.9u^2}}; \quad \omega = \frac{.5325s+3.75}{4.12s^2+1.47s+1}\vartheta; \quad y = \omega + .2\omega^3 \qquad (34)$$

and the domain of interest is -0.75≤u≤2.75. Functional forms of the N-L-N blocks are illustrated in FIGURE 19 for the stated input range. It can be seen that there is an input saturation nonlinearity 1902, a cubic output nonlinearity 1904, and an under-damped LTI block 1906 whose gain is 3.75. For the range of inputs specified, $\omega$ (the input to the output nonlinearity) varies from -5 to +5. Twelve knots are used for both input and output bases functions in an attempt to recover an accurate estimate of the gain curve. The output knots are distributed linearly and therefore not displayed. The distribution of knots 2002 for the input is shown in FIGURE 20.

Excitation for this process can be achieved by first using a PRBS signal of amplitude ±0.01. Perturbations can be performed at sufficient operating points spanning the input range to ensure sufficient information content in the data for the specified knot selection. An almost exact replication of the gain curve is obtained for this process as illustrated in FIGURE 21, where lines 2102-2104 represent $G$ and $\hat{G}$, respectively. A similar replication of the LTI dynamics is also obtained although not displayed. Observation of the gain curve illustrates why the knots 2002 are specified as shown in FIGURE 20. The dense packing of knots between ±0.2 is used to capture the double hump in the gain that occurs at $u=0$.

Cross-validation using small amplitude steps yields equally accurate predictions. One problem, however, is that the effect of the output nonlinearity may not be adequately captured using a PRBS signal, no matter how many levels are included. As discussed previously, the output nonlinearity results in a dynamic response that is a function of the input amplitude. The effect is to make the zeros of the LTI block appear as if they change as a function of the input. To demonstrate this result, an additional model using a PRMS excitation signal can be built. The two models are compared using a cross-validation set of data based on a PRMS signal. Results of this test are shown in FIGURES 22A and 22B.

Three sets of curves are displayed in FIGURE 22A, a portion of which is shown in FIGURE 22B. The bottom curve 2202 is the cross-validation PRMS input used for prediction. The top curves 2204a-2204b show the response of the process $y$ and the predictor $\hat{y}$ for the PRMS input, respectively. The model used for this prediction is the one based on the multi-level PRBS signal described initially. In spite of the almost exact gain and LTI dynamics, the predictions are unacceptable, as this model has failed to capture the output nonlinearity. The middle curves 2206 illustrate dramatically improved performance. In this case, a PRMS signal is used to re-identify the model. This model now captures the output nonlinearity, and an almost exact replication of the process output is recovered. Note that while the efficacy of the PRMS signal is obvious, a concern could exist as to its acceptance under plant conditions. Massive changes over operating input ranges may almost never be tolerated, even for a single input. Trying to do so simultaneously for multiple inputs (high-order instruments) may be out of the question in some situations.

Null Sub-Model

For this test case, the true dynamic sub-model structure is given by the following matrix expression.

$$\begin{bmatrix} \frac{(-24.85s^2+10.38s+1)e^{-8s}}{2.06s^3+4.45s^2+3.43s+1} & 0 & \frac{(-3s+1)e^{-5s}}{s^2+2s+1} \\ \frac{1}{3s+1} & -\frac{-3s+1}{s^3+3.5s^2+3.5s+1} & 0 \end{bmatrix} \qquad (35)$$

Here it can be see that there are null models in the (1,2) and (2,3) positions. The nonlinear characteristics are given as:

$$\vartheta = \begin{bmatrix} f_1(u_1) \\ f_2(u_1 u_2) \\ f_3(u_3) \end{bmatrix} = \begin{bmatrix} -4 + \dfrac{8}{1+e^{-3u_1}} \\ f_1(u_1)*10*\left[\dfrac{10u_2+50}{10u_2+51} - \dfrac{50}{51}\right] \\ 2u_3 \end{bmatrix} \quad (36)$$

Note that the last instrument ($f_3$) is linear, so the final nonlinear model has a constant gain of two for the (1,3) element. The GMS results for this case are shown in FIGURE 23. These are the results of stepping the nonlinear model using small perturbations.

As shown in FIGURE 23, CV1 is only a function of MV1 and MV3. Similarly, CV2 is only a function of MV1 and MV2. Surfaces 2402-2404 of these functions at steady state are shown in FIGURE 24A for the exact models, and surfaces 2452-2454 of these functions at steady state are shown in FIGURE 24B for the estimated models. FIGURES 24A and 24B show the nonlinear functions are well represented by the estimated model. FIGURE 25 shows that the models can be used to accurately predict CV1 and CV2. In particular, lines 2502 show predicted and actual values for CV1, and lines 2504 show predicted and actual values for CV2.

Since the real accuracy of any model depends on its gains, it is also useful to investigate these properties. FIGURES 26A and 26B show the exact and estimated gains for CV1 and CV2, respectively. FIGURE 26A shows the exact and estimated gains for CV1, while FIGURE 26B shows the exact and estimated gains for CV2. It can be seen that the gain surfaces match almost exactly. The only discrepancy occurs for element (2,2) . In this case, the gain is changing so rapidly at the $u_2$ boundary that the knot distribution (shown in FIGURES 10A and 10B) is unable to capture this gradient. However, increasing the knot density in this region can solve this problem.

Air Separation Unit - Plant Step Test Data

In this last case, plant step test data is used to build nonlinear models for an air separation unit. Units and tag names are to be displayed. As is typical during plant step testing, data is collected for many variables. Of these variables, only nine controlled variables (process outputs), ten manipulated variables (process inputs), and three measurable disturbance variables are considered as realistic candidates for building the model.

As is true in many cases, step testing is highly constrained to avoid plant trips. In this case, the testing proceeds in a manual fashion without the ability to perform on-line identification. After data analysis and preliminary model building, the variable set is paired down to six controlled variables, six manipulated variables, and two disturbance variables. Manipulated variables step data 2700 for building the model is presented in FIGURE 27.

A Hammerstein model with first-order instruments is selected due to data limitations. Since there is little *a priori* knowledge on nonlinear structure, linear knot distributions are chosen for all input variables. To avoid data sensitivity, a minimum number of knots (four) is used. Predicted and actual data 2800 for the nonlinear model is shown in FIGURE 28. These predictions are the result of many model parameter perturbations and the *a priori* knowledge that parts of the process take four to six hours to settle. With these slow poles, it may be impractical to perform conventional step tests at multiple operating points. Therefore, as described above, a range of process poles can be manually entered based on plant experience.

Performance metrics corresponding to five controlled variable predictions shown in FIGURE 28 are given in Table 3.

Table 3

| CV Metrics | | | |
|---|---|---|---|
| CV | CV Rank | R2 | Percent Fit |
| CV1 | 2.048289 | 0.8627567 | 66.16354 |
| CV2 | 2.859783 | 0.7410325 | 52.29426 |
| CV3 | 1.109895 | 0.9590105 | 83.09006 |
| CV4 | 2.076176 | 0.8585736 | 63.68795 |
| CV5 | 2.141464 | 0.8487805 | 67.75055 |

The CV rank is a heuristic metric that indicates the expected control performance quality of a given controlled variable. In this example, the rank metric ranges between one and five, with one being the highest quality and five being the lowest quality. Rank three may be the lowest value recommended for online control. R2 is the square of the conventional correlation coefficient between the actual and predicted controlled variables. Percent fit (PF) is defined as PF=(1-*e*)·100, where e is given as:

$$e = \frac{\sum_{k=1}^{N} (y_k - \hat{y}_k)^2}{\sum_{k=1}^{N} (y_k - \bar{y}_k)^2} \quad (37)$$

In the preceding expression, $\bar{y}_k$ represents the mean value of $y_k$, and $\hat{y}_k$ represents the infinite horizon prediction. Table 3 indicates that only CV2 should be considered as questionable for online control.

The need for nonlinear models with this unit can be easily confirmed by using the same data to generate linear models. A comparison between linear and nonlinear predictions for a controlled variable CV1 is shown in FIGURE 29. In FIGURE 29, lines 2902 represent $y_1$ and the non-linear $\hat{y}_1$ (which are closely matched), while line 2904 represents the linear $\hat{y}_1$.

Care should be used in interpreting prediction results. With simulation studies, it is trivial to generate cross-validation data. Unfortunately, this is definitely not the case in the overwhelming majority of process plants. Under the best of conditions, step testing (whether manual or automatic) is usually an undesirable operation. To perform additional stepping merely for cross-validation purposes is seldom accommodated.

Whether cross-validation data is available or not, it may be extremely important to have additional information for model validation. To this end, a powerful tool is the sensitivity plot. Since the models under discussion here are nonlinear, it can be very revealing to display how the gain and processes vary as a function of the inputs. Indeed, in all the cases shown here, the gain surface or curves as a function of the inputs have been observed and investigated.

The use of this capability for the air separation unit has been invaluable. For example, the gain sensitivities for a few selected input/output pairs are given in FIGURES 30A and 30B. Ideally, these curves represent what is expected of the physical process and should be smooth and well-behaved. Examples of acceptable performance are illustrated in FIGURE 30A. Any oscillation or wiggle indicates either insufficient information content in the data (over-fitting) for the specified model structure or the possibility that there is no physical relationship between input/output pairs. This also reveals how nonlinear the data is. If the gains only vary between 100-200%, a linear controller may suffice. Examples of unacceptable performance are illustrated in FIGURE 30B. These gain curves make no physical sense. Note also the gains change sign, which may be impossible for a given process. In this case, controlled variables #3 and #4 and manipulated variables #6 and #7 from the original set are not reliable and can be removed from the model.

To summarize, a new technique for nonlinear process identification has been presented here. Use of Hammerstein, Wiener, and more general N-L-N block-oriented structures for identification has been detailed. The construction of two particular bases functions, one that uses an estimate of the process poles and the other that uses a predefined set of special cubic splines, have been described. Both bases allow for the direct inclusion of *a priori* information (if it exists) into system identification. It has also been shown that this formulation implicitly accommodates nonlinear dynamics. Several test cases have been presented showing the flexibility of the approach.

Although FIGURES 2 through 30B illustrate details of an example tool 144 for nonlinear process identification using orthonormal bases and ordinal splines, various changes may be made to these figures. For example, various figures illustrate example models, knot distributions, gain and other curves, and various other data. These are for illustration only, and the tool 144 could operate using any other suitable data to produce any other suitable results. Also, while the method 400 shown in FIGURE 4 includes a series of steps, various steps in FIGURE 4 could overlap, occur in parallel, or occur multiple times.

## pH Control System

The nonlinear process identification tools and techniques described above could be used to identify one or more models for controlling any suitable nonlinear system. One type of nonlinear system that can be modeled using these tools and techniques is a wastewater treatment system or other system requiring pH control. As noted above, pH is often a highly nonlinear characteristic of a mixture and is typically controlled using a logarithmic transformation and a proportional-integral-derivative (PID) controller.

FIGURE 31 illustrates an example pH control system 3100 according to this disclosure. In this example embodiment, the pH control system 3100 is used in conjunction with a tank 3102. The tank 3102 stores material 3104, such as a liquid mixture, for which pH control is needed or desired. The tank 3102 includes any suitable structure for holding a mixture. For example, the tank 3102 could represent a continuous stirred tank reactor (CSTR) used in a pH neutralization process. The tank 3102 could have any suitable dimensions and volume, such as a volume of 2,500ml. The tank 3102 could also include any number of additional internal or external features, such as baffles for reducing swirling or an impeller for mixing material 3104 within the tank 3102.

In this particular embodiment, the tank 3102 receives three inlet streams $q_1$-$q_3$ and outputs an outlet stream $q_4$. These streams represent the flow of material into and out of the tank 3102. In particular embodiments, the inlet stream $q_1$ could represent a strong acid stream of feed solution, the inlet stream $q_2$ could represent a weak acid stream of buffer solution, and the inlet stream $q_3$ could represent a strong base stream of titrating solution. These inlet streams $q_1$-$q_3$ are controlled so that the outlet stream $q_4$ has a desired pH level (such as a neutral pH level). The outlet stream $q_4$ provides material 3104 from the tank 3102 to any suitable destination, such as another component in a wastewater treatment plant. The number of inlet streams and the number of outlet streams shown here are for illustration only.

The pH level of the mixture within the tank 3102 is measured by a pH sensor 3106, which provides the pH measurements to a pH controller 3108. The pH sensor 3106 includes any suitable structure for measuring pH, such as a glass electrode or other pH electrode.

The pH controller 3108 controls the flow of material in the inlet streams $q_1$-$q_3$ to thereby control the pH of the material 3104 in the tank 3102. For instance, the pH controller 3108 could control the operation of pumps or valves to control the flow of material into the tank 3102 in the inlet streams $q_1$-$q_3$. The pH controller 3108 controls the inlet streams so that the material 3104 in the tank 3102 achieves a desired pH level or a pH level within a desired range of pH levels. The pH controller 3108 includes any suitable structure for controlling pH in a mixture. For example, the controller 3108 could include one or more processing units 3110 and one or more memory units 3112 for storing instructions and data used, generated, or collected by the processing unit(s) 3110. The controller 3108 could also include at least one network interface 3114, such as an Ethernet interface or an electrical signal network interface (like a HART or FOUNDATION FIELDBUS interface), to facilitate communications with external components like the pH sensor 3106. As described below, the controller 3108 can implement a nonlinear model predictive control (NLMPC) or other control technology to control the pH within the tank 3102.

An operator station 3116 communicates with the pH controller 3108. The operator station 3116 represents a computing or communication device providing user access to the pH controller 3108 (either directly or indirectly through a server or other device). As particular examples, the operator station 3116 could allow users to review the operational history of the pH controller 3108, adjust the operation of the pH controller 3108, and receive and display warnings, alerts, or other messages or displays generated by the pH controller 3108. The operator station 3116 includes any suitable structure for supporting interaction with the pH controller 3108. For example, the operator station 3116 could include one or more processing units 3118 and one or more memory units 3120 for storing instructions and data used, generated, or collected by the processing unit(s) 3118. The operator station 3116 could also include at least one network interface 3122, such as an Ethernet or electrical signal network interface, to facilitate communications with external components like the pH controller 3108.

In one aspect of operation, when using an MPC or other control technique, the pH controller 3108 may include or have access to at least one model 3124, such as one stored in the controller's memory unit 3112. The model 3124 models the behavior of the pH in the tank 3102 and is used by the pH controller 3108 to predict how changes to the inlet streams $q_1$-$q_3$ affect the pH in the tank 3102. The controller 3108 can then make certain changes to the inlet streams $q_1$-$q_3$ to control the pH in the tank 3102.

In accordance with this disclosure, a technique is provided for tuning the pH controller 3108. The technique involves performing a nonlinear identification of the pH process to be controlled in order to create the model 3124 of the process. This is then followed by the use of nonlinear model predictive control or other control technique, which uses the identified model 3124 to control the pH process.

In particular embodiments, the nonlinear identification of the pH process is performed as described above with respect to FIGURES 1 through 30B. For instance, the nonlinear identification could occur using a "gray box" nonlinear model identification technique with a flexible N-L-N or other model structure. A tool 3126 provided at the operator station 3116 or in any other suitable location(s) (such as on a server accessible by the operator station 3116) can be used to perform the nonlinear model identification technique, such as in the same or similar manner as the tool 144 described above. Also, in particular embodiments, nonlinear model predictive control involves the use of the model 3124 from the nonlinear model identification, along with an extended Kalman filter as an estimator.

The tool 3126 could be implemented in any suitable manner. For instance, the tool 3126 could be implemented using only hardware or using a combination of hardware and software/firmware instructions. In particular embodiments, the tool 3126 could represent one or more computer programs executed by the processing unit(s) 3118 in an operator station or other device.

Although FIGURE 31 illustrates one example of a pH control system 3100, various changes may be made to

FIGURE 31. For example, a pH control system could include any number of tanks, sensors, controllers, operator stations, models, and tools. Also, the makeup and arrangement of the pH control system 3100 are for illustration only. Components could be added, omitted, combined, subdivided, or placed in any other suitable configuration according to particular needs. In addition, FIGURE 31 illustrates one operational environment in which pH control can be used. This functionality could be used in any other suitable device or system.

FIGURES 32 through 40 illustrate details of an example tool 3126 for nonlinear process identification for pH control according to this disclosure. The following provides additional details regarding one specific non-limiting embodiment of the tool 3126. Other embodiments of the tool 3126 could also be used. Also note that the details provided below describe one specific non-limiting embodiment of a pH model, as well as one specific non-limiting embodiment of a pH control technique. Other pH models and other pH control techniques could also be used. To simplify the following discussion, the following assumptions are made: there is perfect mixing within the tank 3102, constant temperature within the tank 3102, and complete solubility of the ions involved within the tank 3102.

For a specific pH process, the chemical reactions in a reactor are assumed as equilibrium reactions, and the following chemical reactions can occur in the system:

$$\begin{aligned} &H_2CO_3 \longleftrightarrow HCO_3^- + H^+ \\ &HCO_3^- \longleftrightarrow CO_3^{2-} + H^+ \\ &H_2O \longleftrightarrow OH^- + H^+ \end{aligned} \tag{38}$$

The equilibrium constants for these reactions can be expressed as:

$$K_{a1} = \frac{[HCO_3^-][H^+]}{[H_2CO_3]},\ K_{a2} = \frac{[CO_3^{2-}][H^+]}{[HCO_3^-]} \text{ and } K_W = [H^+][OH^-] \tag{39}$$

The chemical equilibria can be modeled using the concept of reaction invariant. For this system, two reaction invariants can be involved for each stream (i=1-4):

$$\begin{aligned} W_{ai} &= [H^+]_i - [OH^-]_i - [HCO_3^-]_i - 2[CO_3^{2-}]_i \\ W_{bi} &= [H_2CO_3]_i + [HCO_3^-]_i + [CO_3^{2-}]_i \end{aligned} \tag{40}$$

Relation between a hydrogen ion concentration and reaction invariants can be expressed as:

$$W_{bi} \frac{K_{a1}/[H^+] + 2K_{a1}K_{a2}/[H^+]^2}{1 + K_{a1}/[H^+] + K_{a1}K_{a2}/[H^+]^2} + W_{ai} + \frac{K_W}{[H^+]} - [H^+] = 0 \tag{41}$$

The pH value of the system can be obtained by taking the negative logarithm of the [H+] ion concentration:

$$pH = -\log_{10}([H^+]) \tag{42}$$

For this system, a dynamic process model for the pH neutralization process can be derived from the component material balance for the reaction invariants ($W_{a4}$ and $Wb_4$) and the algebraic equation relating the pH and reaction invariants as follows:

$$\frac{d(W_{a4})}{dt} = \frac{1}{V}\left[q_1(W_{a1} - W_{a4}) + q_2(W_{a2} - W_{a4}) + q_3(W_{a3} - W_{a4})\right]$$
$$\frac{d(W_{b4})}{dt} = \frac{1}{V}\left[q_1(W_{b1} - W_{b4}) + q_2(W_{b2} - W_{b4}) + q_3(W_{b3} - W_{b4})\right] \qquad (43)$$
$$0 = W_{a4} + 10^{(pH-14)} - 10^{(-pH)} + W_{b4}\frac{\left(1 + 2 * 10^{(pH - pK_2)}\right)}{\left(1 + 10^{(pK_1 - pH)} + 10^{(pH - pK_2)}\right)}$$

The nominal operating conditions can be those shown in Table 4.

Table 4

| Symbol | Values | Symbol | Values |
|---|---|---|---|
| $K_{a1}$ | $4.47\times10^{-7}$ | $W_{a1}$ | $2.95\times10^{-3}$ |
| $K_{a2}$ | $5.62\times10^{-11}$ | $W_{a2}$ | -0.01 |
| $pK_1$ | 6.3496925 | $W_{a3}$ | $-3.05\times10^{-3}$ |
| $pK_2$ | 10.250264 | $W_{a4}$ | $-4.5\times10^{-4}$ |
| V | 2500 | $W_{b1}$ | $5\times10^{-5}$ |
| $q_1$ | 540 | $W_{b2}$ | 0.01 |
| $q_2$ | 36 | $W_{b3}$ | $5\times10^{-5}$ |
| $q_3$ | 510 | $W_{b4}$ | $5.5\times10^{-4}$ |

FIGURE 32 illustrates an example user interface 3200 for specifying the type of model to be created and the number and distribution of knots to be used during process identification. In this example, the user interface 3200 includes a model type definition area 3202, where the user can define the type of model to be created. In this case, the user has elected to create a Hammerstein model. The user interface 3200 also includes a number of knots definition area 3204, where the user can identify the number of knots to be used during the nonlinear process identification procedure defined above. In addition, the user interface 3200 includes a knot distribution definition area 3206, where the user can identify how the knots are distributed. In this example, the user could manually distribute the knots or allow the system to automatically distribute the knots. If automatic distribution is selected, the user can identify the maximum and minimum knot values, thereby defining the range in which the knots are distributed. The user can also identify whether a linear, sigmoid, or power distribution of the knots is used, and appropriate data value(s) can be specified for the sigmoid and power distributions.

In this case, the user has elected to use a sigmoid distribution with an amplification of -0.75 and a center value of 5.5, and these values are used to distribute knots between values of 700 and 1340. The resulting knot distribution 3300 is shown in FIGURE 33.

FIGURE 34 illustrates an example gain curve 3400 for an actual pH process, and FIGURE 35 illustrates an example process curve 3500 for the actual pH process. Using the nonlinear process identification technique described above and the knot distribution shown in FIGURE 33, a model can be generated for the pH process.

FIGURES 36 through 38 illustrate the effectiveness of the nonlinear process identification technique described above. In particular, FIGURE 36 illustrates a line 3602 representing the actual pH of a mixture and a line 3604 representing the predicted pH of the mixture. The predicted pH is determined using the model created during nonlinear process identification. As shown here, the predicted pH closely matches the actual pH, meaning the model effectively estimates the behavior of the system. In FIGURE 37, a line 3702 represents the controlled variable (actual pH level), and a line 3704 represents the controlled variable's setpoint (desired pH setpoint). As seen here, the actual pH level closely tracks the desired setpoint. In FIGURE 38, a line 3802 represents a manipulated variable (inlet stream $q_1$ of acid), and lines 3804 represent the steady-state gain of the system.

FIGURE 39 illustrates the behavior of the pH system being controlled with linear and nonlinear control. In FIGURE 39, a line 3902 represents the pH setpoint for the system, and lines 3904-3906 represent high and low limits for the setpoint. Also, a line 3908 represents the controlled variable (actual pH level), and a line 3910 represents a manipulated variable (one of the inlet streams $q_1$-$q_3$). In this example, nonlinear control is used during time period 3912, linear control is used during time period 3914, and nonlinear control is again used during time period 3916. As can be

seen in FIGURE 39, the actual pH level remains near its setpoint when nonlinear control is used during time 3912. When linear control is used during time 3914, however, the actual pH level swings far away from the setpoint, indicating that the pH level is not being controlled effectively. When nonlinear control is reintroduced during time 3916, the actual pH level again remains near its setpoint. Even when oscillations in the pH level occur during time 3916, these oscillations remain closer to the setpoint than during time 3914.

FIGURE 40 illustrates an example method 4000 for pH control according to this disclosure. As shown in FIGURE 40, a nonlinear model of pH in a process is obtained at step 4002. This could include, for example, the tool 3126 using the nonlinear process identification technique described above to identify a model 3124 of pH in a tank 3102. This could also include receiving the model 3124 from an external device or system arranged to perform the nonlinear process identification technique described above.

Using the model, nonlinear model predictive control of the process is performed at step 4004. This could include, for example, the controller 3108 using the model 3124 to determine how to adjust inlet streams $q_1$-$q_3$. As a result, the pH of the process is maintained at or near its setpoint at step 4006. Because of the nonlinear process identification technique described above, the model used here enables more effective control of the pH in the process.

Although FIGURE 40 illustrates one example of a method 4000 for pH control, various changes may be made to FIGURE 40. For example, while shown as a series of steps, various steps in FIGURE 4 could overlap, occur in parallel, or occur multiple times.

In some embodiments, various functions described above are implemented or supported by a computer program that is formed from computer readable program code and that is embodied in a computer readable includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The term "couple" and its derivatives refer to any direct or indirect communication between two or more elements, whether or not those elements are in physical contact with one another. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit," "receive," and "communicate," as well as derivatives thereof, encompass both direct and indirect communication. The terms "include" and "comprise," as well as derivatives thereof, mean inclusion without limitation. The term "obtain" and its derivatives refer to any acquisition of data or other tangible or intangible item, whether acquired from an external source or internally (such as through internal generation of the item). The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system, or part thereof that controls at least one operation. A controller may be implemented in hardware, firmware, software, or some combination of at least two of the same. The functionality associated with any particular controller may be centralized or distributed, whether locally or remotely.

While this disclosure has described certain embodiments and generally associated methods, alterations and permutations of these embodiments and methods will be apparent to those skilled in the art. For example, while the above techniques have been described with respect to SISO systems, the techniques could be expanded for use with other types of systems (such as multiple input, multiple output or "MIMO" systems). Accordingly, the above description of example embodiments does not define or constrain this disclosure. Other changes, substitutions, and alterations are also possible, as defined by the following claims.

## Claims

**1.** A method comprising:

generating (4002) a nonlinear model (3124) that represents a pH of a material (3104) in a process to be controlled, the model generated using an orthonormal bases function and an ordinal spline bases function; and
performing (4004) non-linear model predictive control of the process using the model;

wherein generating the model comprises:

identifying a distribution (3300) of knots and constructing multiple ordinal spline functions, each ordinal spline function associated with one of the knots; and

generating the ordinal spline bases function using at least one of the ordinal spline functions.

**2.** The method of Claim 1, further comprising:

generating a graphical display (3200) for presentation to a user; and
receiving from the user via the graphical display a definition of the knot distribution, the definition comprising a number of knots, a range of values in which the knots are distributed, and a type of knot distribution.

**3.** The method of Claim 1, further comprising:

generating a graphical display (3200) for presentation to a user; and
receiving from the user via the graphical display a definition of a structure of the model to be generated.

**4.** The method of Claim 1, wherein performing non-linear model predictive control comprises:

using the model to determine how to adjust multiple inlet streams ($q_1$-$q_3$) providing feed solutions to a tank (3102), the multiple inlet streams altering the pH of the material in the tank.

**5.** The method of Claim 1, wherein performing non-linear model predictive control comprises:

receiving sensor measurements from a pH sensor (3106) measuring pH of the material; and
modifying at least one manipulated variable to keep the pH of the material at or within a specific amount of a setpoint.

**6.** An apparatus comprising:

at least one memory unit (3112, 3120) configured to store a nonlinear model (3124) that represents a pH of a material (3104) in a process to be controlled, the model associated with an orthonormal bases function and an ordinal spline bases function; and
at least one processing unit (3110, 3118) configured to perform non-linear model predictive control of the process using the model;

where the at least one processing unit is configured to generate the model by:

identifying a distribution (3300) of knots and multiple ordinal spline functions, each ordinal spline function associated with one of the knots; and
generating the ordinal spline bases function using at least one of the ordinal spline functions.

**7.** The apparatus of Claim 6, the at least one processing unit is further configured to:

generate a graphical display (3200) for presentation to a user; and
receive from the user via the graphical display a definition of the knot distribution, the definition comprising a number of knots, a range of values in which the knots are distributed, and a type of knot distribution.

**8.** The apparatus of Claim 6, the at least one processing unit further configured to:

generate a graphical display (3200) for presentation to a user; and
receive from the user via the graphical display a definition of a structure of the model to be generated.

**9.** The apparatus of Claim 6, wherein the at least one processing unit is configured to perform non-linear model predictive control by using the model to determine how to adjust multiple inlet streams (ql-q3) that provide feed solutions to a tank (3102) to thereby alter the pH of the material in the tank.

**10.** The apparatus of Claim 6, wherein the at least one processing unit is configured to perform non-linear model predictive control by:

receiving sensor measurements from a pH sensor (3106) measuring pH of the material; and
modifying at least one manipulated variable to keep the pH of the material at or within a specific amount of a

setpoint.

**11.** A non-transitory computer readable medium embodying a computer program, the computer program comprising:

computer readable program code for generating (4002) a nonlinear model (3124) that represents a pH of a material (3104) in a process to be controlled, the model generated using an orthonormal bases function and an ordinal spline bases function; and

computer readable program code for performing (4004) non-linear model predictive control of the process using the model;

wherein the computer readable program code for generating the model comprises computer readable program code for:

identifying a distribution (3300) of knots and constructing multiple ordinal spline functions, each ordinal spline function associated with one of the knots; and

generating the ordinal spline bases function using at least one of the ordinal spline functions.

**12.** The non-transitory computer readable medium of Claim 11, wherein the computer program further comprises:

computer readable program code for generating a graphical display (3200) for presentation to a user; and

computer readable program code for receiving from the user via the graphical display a definition of a structure of the model to be generated and a definition of the knot distribution, the definition of the knot distribution comprising a number of knots, a range of values in which the knots are distributed, and a type of knot distribution.

**13.** The non-transitory computer readable medium of Claim 11, wherein the computer program further comprises:

computer readable program code for generating a graphical display (3200) for presentation to a user; and

computer readable program code for receiving from the user via the graphical display a definition of a structure of the model to be generated.

**14.** The non-transitory computer readable medium of Claim 11, wherein the computer readable program code for performing non-linear model predictive control comprises:

computer readable program code for using the model to determine how to adjust multiple inlet streams (ql-q3) providing feed solutions to a tank (3102), the multiple inlet streams altering the pH of the material in the tank.

**15.** The non-transitory computer readable medium of Claim 11, wherein the computer readable program code for performing non-linear model predictive control comprises:

computer readable program code for receiving sensor measurements from a pH sensor (3106) measuring pH of the material; and

computer readable program code for modifying at least one manipulated variable to keep the pH of the material at or within a specific amount of a setpoint.

## Patentansprüche

**1.** Verfahren, das Folgendes umfasst:

Erzeugen (4002) eines nichtlinearen Modells (3124), das einen pH-Wert eines Materials (3104) in einem zu steuernden Prozess repräsentiert, wobei das erzeugte Modell eine Orthonormalbasisfunktion und eine Ordinal-Splinebasisfunktion verwendet; und

Ausführen (4004) einer auf dem nichtlinearen Modell basierenden prädiktiven Steuerung des Prozesses unter Verwendung des Modells;

wobei das Erzeugen des Modells Folgendes umfasst:

Identifizieren einer Verteilung (3300) von Knoten und Konstruieren mehrerer Ordinal-Splinefunktionen, wobei jede Ordinal-Splinefunktion einem der Knoten zugeordnet ist; und

Erzeugen der Ordinal-Splinebasisfunktion unter Verwendung wenigstens einer der Ordinal-Splinefunktionen.

2. Verfahren nach Anspruch 1, das ferner Folgendes umfasst:

Erzeugen einer graphischen Anzeige (3200) für die Darstellung für einen Anwender; und
Empfangen von dem Anwender über die graphische Anzeige einer Definition der Knotenverteilung, wobei die Definition eine Anzahl von Knoten, einen Bereich von Werten, in dem die Knoten verteilt sind, und einen Typ der Knotenverteilung enthält.

3. Verfahren nach Anspruch 1, das ferner Folgendes umfasst:

Erzeugen einer graphischen Anzeige (3200) für die Darstellung für einen Anwender; und
Empfangen von dem Anwender über die graphische Anzeige einer Definition einer Struktur des zu erzeugenden Modells.

4. Verfahren nach Anspruch 1, wobei das Ausführen der auf dem nichtlinearen Modell basierenden prädiktiven Steuerung Folgendes umfasst:

Verwenden des Modells, um zu bestimmen, wie mehrere Eingangsströme ($q_1$-$q_3$), die Beschickungslösungen für einen Tank (3102) bereitstellen, einzustellen sind, wobei die mehreren Eingangsströme den pH-Wert des Materials in dem Tank verändern.

5. Verfahren nach Anspruch 1, wobei das Ausführen der auf dem nichtlinearen Modell basierenden prädiktiven Steuerung Folgendes umfasst:

Empfangen von Sensormessungen von einem pH-Wert-Sensor (3106), der den pH-Wert des Materials misst; und
Modifizieren wenigstens einer manipulierten Variable, um den pH-Wert des Materials auf einem Einstellpunkt oder innerhalb eines bestimmten Betrags eines Einstellpunkts zu halten.

6. Vorrichtung, die Folgendes umfasst:

wenigstens eine Speichereinheit (3112, 3120), die konfiguriert ist, ein nichtlineares Modell (3124) zu speichern, das einen pH-Wert eines Materials (3104) in einem zu steuernden Prozess repräsentiert, wobei das Modell einer Orthonormalbasisfunktion und einer Ordinal-Splinebasisfunktion zugeordnet ist; und
wenigstens eine Verarbeitungseinheit (3110, 3118), die konfiguriert ist, eine auf dem nichtlinearen Modell basierende prädiktive Steuerung des Prozesses unter Verwendung des Modells auszuführen;
wobei die wenigstens eine Verarbeitungseinheit konfiguriert ist, das Modell zu erzeugen durch:

Identifizieren einer Verteilung (3300) von Knoten und mehrerer Ordinal-Splinefunktionen, wobei jede Ordinal-Splinefunktion einem der Knoten zugeordnet ist; und
Erzeugen der Ordinal-Splinebasisfunktion unter Verwendung wenigstens einer der Ordinal-Splinefunktionen.

7. Vorrichtung nach Anspruch 6, wobei die wenigstens eine Verarbeitungseinheit ferner konfiguriert ist,
eine graphische Anzeige (3200) für die Darstellung für einen Anwender zu erzeugen; und
von dem Anwender über die graphische Anzeige eine Definition der Knotenverteilung zu empfangen, wobei die Definition eine Anzahl von Knoten, einen Bereich von Werten, in dem die Knoten verteilt sind, und einen Typ der Knotenverteilung enthält.

8. Vorrichtung nach Anspruch 6, wobei die wenigstens eine Verarbeitungseinheit ferner konfiguriert ist,
eine graphische Anzeige (3200) für die Darstellung für einen Anwender zu erzeugen; und
von dem Anwender über die graphische Anzeige eine Definition einer Struktur des zu erzeugenden Modells zu empfangen.

9. Vorrichtung nach Anspruch 6, wobei die wenigstens eine Verarbeitungseinheit konfiguriert ist, die auf dem nichtlinearen Modell basierende prädiktive Steuerung unter Verwendung des Modells auszuführen, um zu bestimmen, wie mehrere Eingangsströme ($q_1$-$q_3$), die Beschickungslösungen für einen Tank (3102) bereitstellen, einzustellen

sind, um dadurch den pH-Wert des Materials in dem Tank zu verändern.

**10.** Vorrichtung nach Anspruch 6, wobei die wenigstens eine Verarbeitungseinheit konfiguriert ist, eine auf dem nichtlinearen Modell basierende prädiktive Steuerung auszuführen durch:

Empfangen von Sensormessungen von einem pH-Wert-Sensor (3106), der den pH-Wert des Materials misst; und
Modifizieren wenigstens einer manipulierten Variable, um den pH-Wert des Materials auf einem Einstellpunkt oder innerhalb eines bestimmten Betrags eines Einstellpunkts zu halten.

**11.** Nichttransitorisches computerlesbares Medium, das ein Computerprogramm verkörpert, wobei das Computerprogramm Folgendes umfasst:

computerlesbaren Programmcode, um ein nichtlineares Modell (3124) zu erzeugen (4002), das einen pH-Wert eines Materials (3104) in einem zu steuernden Prozess repräsentiert, wobei das erzeugte Modell eine Orthonormalbasisfunktion und eine Ordinal-Splinebasisfunktion verwendet; und
computerlesbaren Programmcode zum Ausführen (4004) einer auf dem nichtlinearen Modell basierenden prädiktiven Steuerung des Prozesses unter Verwendung des Modells;
wobei der computerlesbare Programmcode zum Erzeugen des Modells computerlesbaren Programmcode enthält zum:

Identifizieren einer Verteilung (3300) von Knoten und Konstruieren mehrerer Ordinal-Splinefunktionen, wobei jede Ordinal-Splinefunktion einem der Knoten zugeordnet ist; und
Erzeugen der Ordinal-Splinebasisfunktion unter Verwendung wenigstens einer der Ordinal-Splinefunktionen.

**12.** Nichttransitorisches computerlesbares Medium nach Anspruch 11, wobei das Computerprogramm ferner Folgendes umfasst:

computerlesbaren Programmcode zum Erzeugen einer graphischen Anzeige (3200) für die Darstellung für einen Anwender; und
computerlesbaren Programmcode zum Empfangen von dem Anwender über die graphische Anzeige einer Definition einer Struktur des zu erzeugenden Modells und einer Definition der Knotenverteilung, wobei die Definition der Knotenverteilung eine Anzahl von Knoten, einen Bereich von Werten, in dem die Knoten verteilt sind, und einen Typ der Knotenverteilung enthält.

**13.** Nichttransitorisches computerlesbares Medium nach Anspruch 11, wobei das Computerprogramm ferner Folgendes umfasst:

computerlesbaren Programmcode zum Erzeugen einer graphischen Anzeige (3200) für die Darstellung für einen Anwender; und
computerlesbaren Programmcode zum Empfangen von dem Anwender über die graphische Anzeige einer Definition einer Struktur des zu erzeugenden Modells.

**14.** Nichttransitorisches computerlesbares Medium nach Anspruch 11, wobei der computerlesbare Programmcode zum Ausführen der auf dem nichtlinearen Modell basierenden prädiktiven Steuerung Folgendes umfasst:

computerlesbaren Programmcode für die Verwendung des Modells, um zu bestimmen, wie mehrere Eingangsströme ($q_1$-$q_3$), die Beschickungslösungen für einen Tank (3102) bereitstellen, einzustellen sind, wobei die mehreren Eingangsströme den pH-Wert des Materials in dem Tank verändern.

**15.** Nichttransitorisches computerlesbares Medium nach Anspruch 11, wobei der computerlesbare Programmcode für die Ausführung der auf dem nichtlinearen Modell basierenden prädiktiven Steuerung Folgendes umfasst:

computerlesbaren Programmcode zum Empfangen von Sensormessungen von einem pH-Wert-Sensor (3106), der den pH-Wert des Materials misst; und
computerlesbaren Programmcode zum Modifizieren wenigstens einer manipulierten Variable, um den pH-Wert des Materials auf einem Einstellpunkt oder innerhalb eines bestimmten Betrags eines Einstellpunkts zu halten.

## Revendications

1. Procédé, comprenant :

   la génération (4002) d'un modèle non linéaire (3124) qui représente un pH d'un matériau (3104) dans un processus destiné à être contrôlé, le modèle étant généré en utilisant une fonction à bases orthonormales et une fonction à bases splines ordinales ; et
   la réalisation (4004) d'un contrôle prédictif de modèle non linéaire du processus en utilisant le modèle ;
   dans lequel la génération du modèle comprend :

      l'identification d'une distribution (3300) de noeuds et la construction de multiples fonctions splines ordinales, chaque fonction spline ordinale étant associée à l'un des noeuds ; et
      la génération de la fonction à bases splines ordinales en utilisant au moins l'une des fonctions splines ordinales.

2. Procédé selon la revendication 1, comprenant en outre :

   la génération d'une unité d'affichage graphique (3200) pour la présentation à un utilisateur ; et
   la réception, à partir de l'utilisateur, par l'intermédiaire de l'unité d'affichage graphique, d'une définition de la distribution de noeuds, la définition comprenant un nombre de noeuds, une plage de valeurs dans laquelle les noeuds sont distribués, et un type de distribution de noeuds.

3. Procédé selon la revendication 1, comprenant en outre :

   la génération d'une unité d'affichage graphique (3200) pour la présentation à un utilisateur ; et
   la réception, à partir de l'utilisateur, par l'intermédiaire de l'unité d'affichage graphique, d'une définition d'une structure du modèle destiné à être généré.

4. Procédé selon la revendication 1, dans lequel la réalisation du contrôle prédictif de modèle non linéaire comprend :

   l'utilisation du modèle pour déterminer la manière dont ajuster de multiples courants d'entrée ($q_1$-$q_3$) fournissant des solutions d'alimentation à un réservoir (3102), les multiples courants d'entrée altérant le pH du matériau dans le réservoir.

5. Procédé selon la revendication 1, dans lequel la réalisation du contrôle prédictif de modèle non linéaire comprend :

   la réception de mesures de capteur à partir d'un capteur de pH (3106) mesurant le pH du matériau ; et
   la modification d'au moins une variable manipulée pour maintenir le pH du matériau à un point de consigne, ou au sein d'une quantité spécifique de ce dernier.

6. Appareil, comprenant :

   au moins une unité de mémoire (3112, 3120) configurée pour stocker un modèle non linéaire (3124) qui représente un pH d'un matériau (3104) dans un processus destiné à être contrôlé, le modèle étant associé à une fonction à bases orthonormales et une fonction à bases splines ordinales ; et
   au moins une unité de traitement (3110, 3118) configurée pour réaliser un contrôle prédictif de modèle non linéaire du processus en utilisant le modèle ;
   où l'au moins une unité de traitement est configurée pour générer le modèle par :

      l'identification d'une distribution (3300) de noeuds et de multiples fonctions splines ordinales, chaque fonction spline ordinale étant associée à l'un des noeuds ; et
      la génération de la fonction à bases splines ordinales en utilisant au moins l'une des fonctions splines ordinales.

7. Appareil selon la revendication 6, l'au moins une unité de traitement étant en outre configurée pour :

   générer une unité d'affichage graphique (3200) pour la présentation à un utilisateur ; et
   recevoir, à partir de l'utilisateur, par l'intermédiaire de l'unité d'affichage graphique, une définition de la distribution

de noeuds, la définition comprenant un nombre de noeuds, une plage de valeurs dans laquelle les noeuds sont distribués, et un type de distribution de noeuds.

**8.** Appareil selon la revendication 6, l'au moins une unité de traitement étant en outre configurée pour :

générer une unité d'affichage graphique (3200) pour la présentation à un utilisateur ; et
recevoir, à partir de l'utilisateur, par l'intermédiaire de l'unité d'affichage graphique, une définition d'une structure du modèle destiné à être généré.

**9.** Appareil selon la revendication 6, dans lequel l'au moins une unité de traitement est configurée pour réaliser le contrôle prédictif de modèle non linéaire en utilisant le modèle pour déterminer la manière dont ajuster de multiples courants d'entrée ($q_1$-$q_3$) qui fournissent des solutions d'alimentation à un réservoir (3102) pour ainsi altérer le pH du matériau dans le réservoir.

**10.** Appareil selon la revendication 6, dans lequel l'au moins une unité de traitement est configurée pour réaliser un contrôle prédictif de modèle non linéaire par :

la réception de mesures de capteur à partir d'un capteur de pH (3106) mesurant le pH du matériau ; et
la modification d'au moins une variable manipulée pour maintenir le pH du matériau à un point de consigne, ou au sein d'une quantité spécifique de ce dernier.

**11.** Support non transitoire lisible par ordinateur incorporant un programme d'ordinateur, le programme d'ordinateur comprenant :

un code de programme lisible par ordinateur pour générer (4002) un modèle non linéaire (3124) qui représente un pH d'un matériau (3104) dans un processus destiné à être contrôlé, le modèle étant généré en utilisant une fonction à bases orthonormales et une fonction à bases splines ordinales ; et
un code de programme lisible par ordinateur pour réaliser (4004) un contrôle prédictif de modèle non linéaire du processus en utilisant le modèle ;
dans lequel le code de programme lisible par ordinateur pour générer le modèle comprend un code de programme lisible par ordinateur pour :

identifier une distribution (3300) de noeuds et la construction de multiples fonctions splines ordinales, chaque fonction spline ordinale étant associée à l'un des noeuds ; et
générer la fonction à bases splines ordinales en utilisant au moins l'une des fonctions splines ordinales.

**12.** Support non transitoire lisible par ordinateur selon la revendication 11, dans lequel le programme d'ordinateur comprend en outre :

un code de programme lisible par ordinateur pour générer une unité d'affichage graphique (3200) pour la présentation à un utilisateur ; et
un code de programme lisible par ordinateur pour recevoir, à partir de l'utilisateur, par l'intermédiaire de l'unité d'affichage graphique, une définition d'une structure du modèle destiné à être généré et une définition de la distribution de noeuds, la définition de la distribution de noeuds comprenant un nombre de noeuds, une plage de valeurs dans laquelle les noeuds sont distribués, et un type de distribution de noeuds.

**13.** Support non transitoire lisible par ordinateur selon la revendication 11, dans lequel le programme d'ordinateur comprend en outre :

un code de programme lisible par ordinateur pour générer une unité d'affichage graphique (3200) pour la présentation à un utilisateur ; et
un code de programme lisible par ordinateur pour recevoir, à partir de l'utilisateur, par l'intermédiaire de l'unité d'affichage graphique, une définition d'une structure du modèle destiné à être généré.

**14.** Support non transitoire lisible par ordinateur selon la revendication 11, dans lequel le code de programme lisible par ordinateur pour la réalisation du contrôle prédictif de modèle non linéaire comprend :

un code de programme lisible par ordinateur pour utiliser le modèle pour déterminer la manière dont ajuster de

multiples courants d'entrée ($q_1$-$q_3$) fournissant des solutions d'alimentation à un réservoir (3102), les multiples courants d'entrée altérant le pH du matériau dans le réservoir.

**15.** Support non transitoire lisible par ordinateur selon la revendication 11, dans lequel le code de programme lisible par ordinateur pour la réalisation du contrôle prédictif de modèle non linéaire comprend :

un code de programme lisible par ordinateur pour recevoir des mesures de capteur à partir d'un capteur de pH (3106) mesurant le pH du matériau ; et
un code de programme lisible par ordinateur pour modifier au moins une variable manipulée pour maintenir le pH du matériau à un point de consigne, ou au sein d'une quantité spécifique de ce dernier.

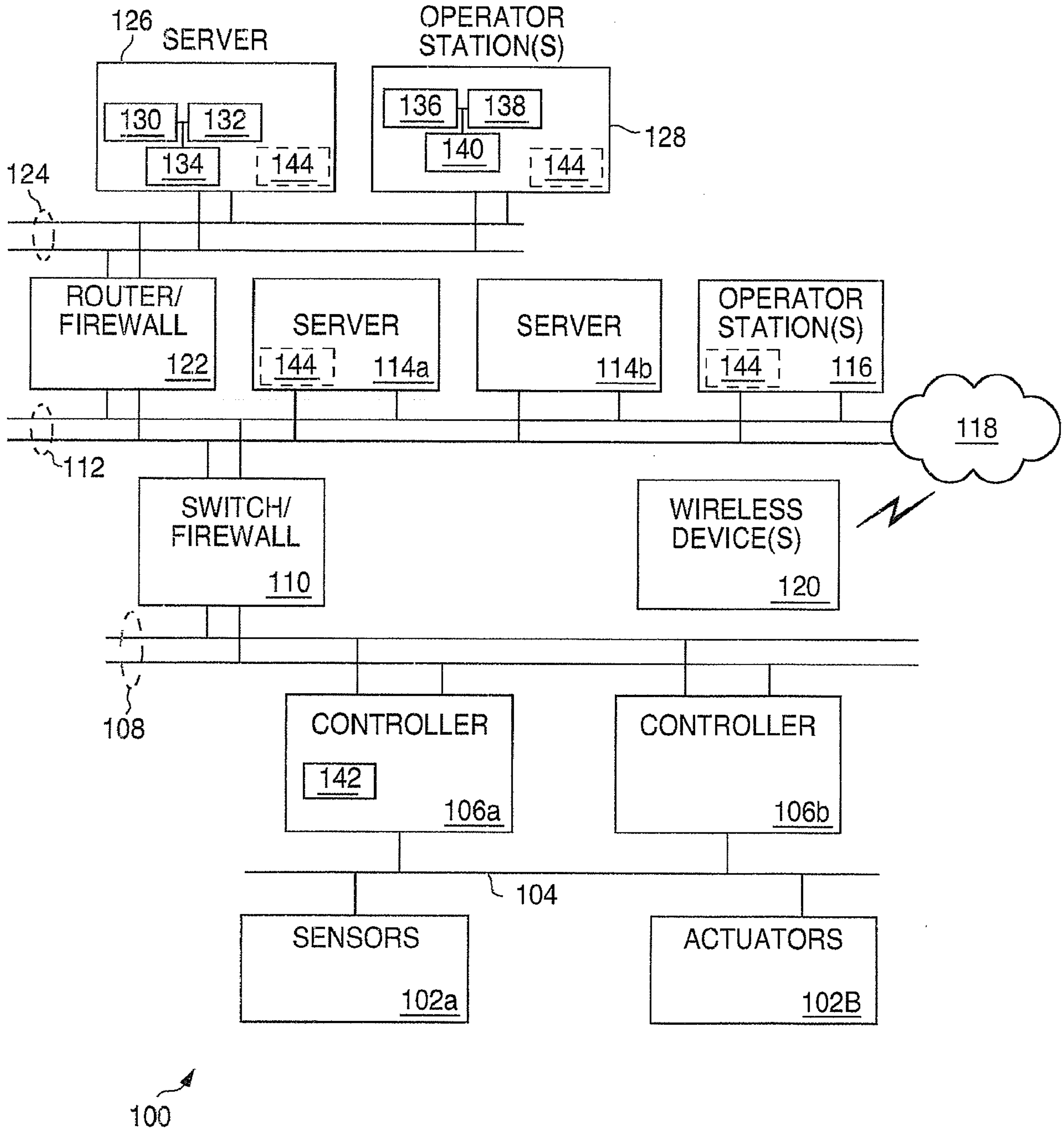
126
SERVER
130
132
134
144
OPERATOR STATION(S)
136
138
140
144
128
124
ROUTER/ FIREWALL
122
SERVER
144
114a
SERVER
114b
OPERATOR STATION(S)
144
116
118
112
SWITCH/ FIREWALL
110
WIRELESS DEVICE(S)
120
108
CONTROLLER
142
106a
CONTROLLER
106b
104
SENSORS
102a
ACTUATORS
102B
100

FIG. 1

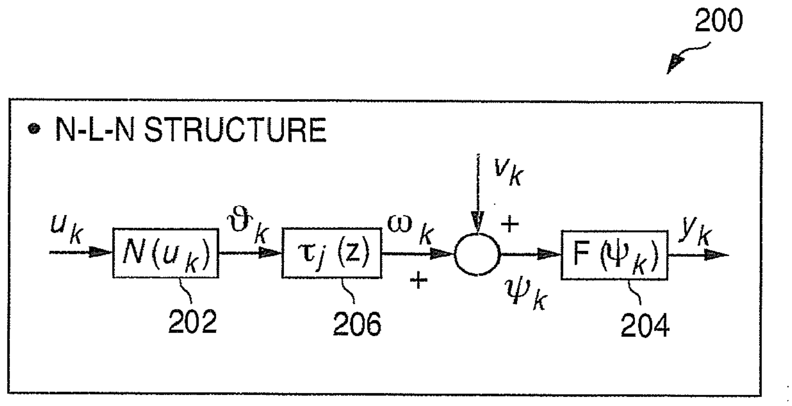
200
N-L-N STRUCTURE
$u_k$
$N(u_k)$
$\vartheta_k$
$\tau_j(z)$
$\omega_k$
+
$v_k$
+
$\psi_k$
$F(\psi_k)$
$y_k$
202
206
204

FIG. 2

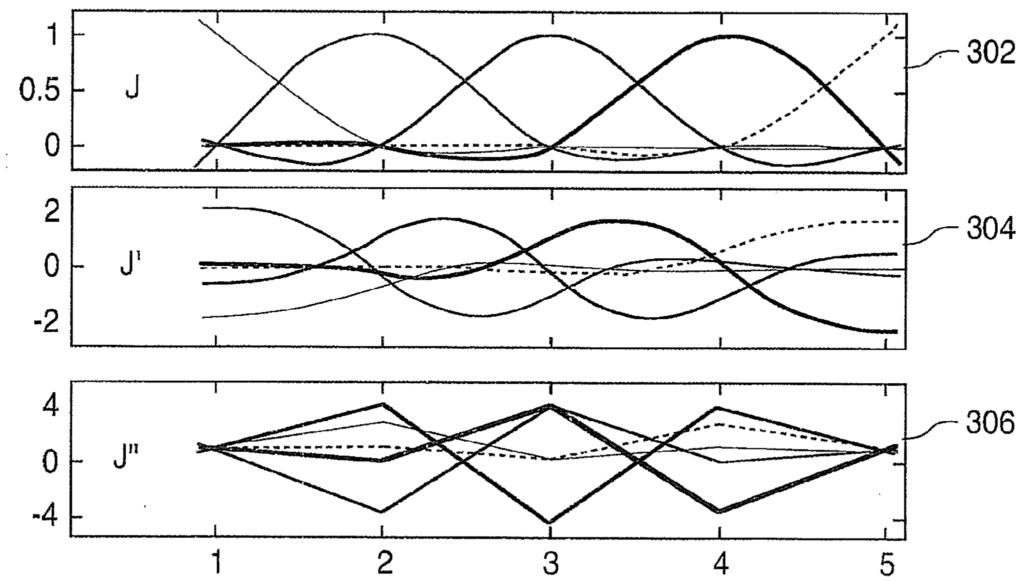
1
0.5
0
J
2
0
-2
J'
4
0
-4
J''
1
2
3
4
5
302
304
306

FIG. 3

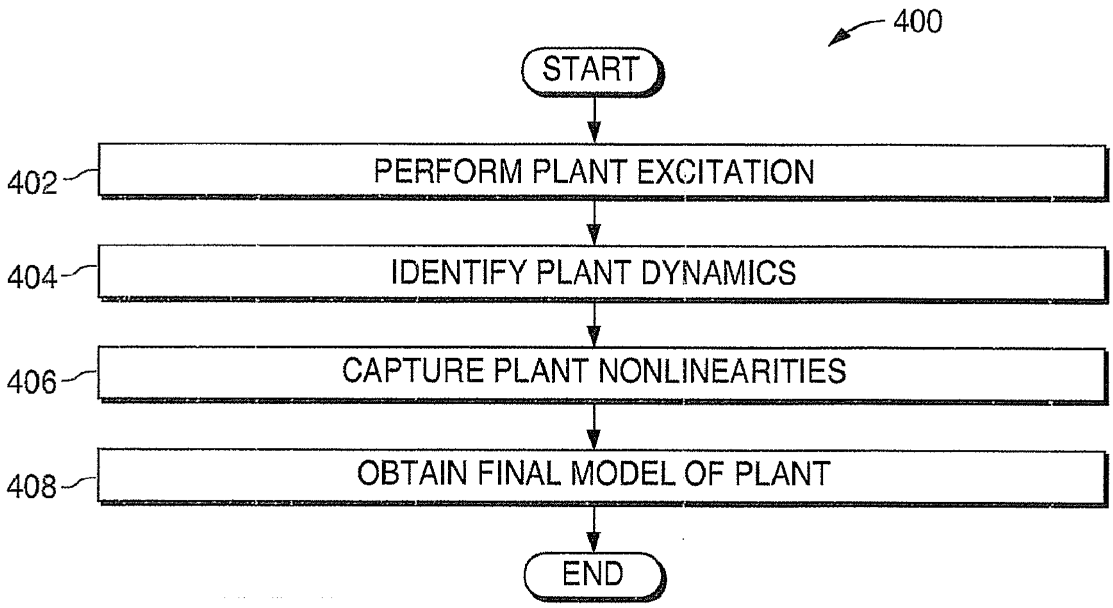
400
START
402
PERFORM PLANT EXCITATION
404
IDENTIFY PLANT DYNAMICS
406
CAPTURE PLANT NONLINEARITIES
408
OBTAIN FINAL MODEL OF PLANT
END

FIG. 4

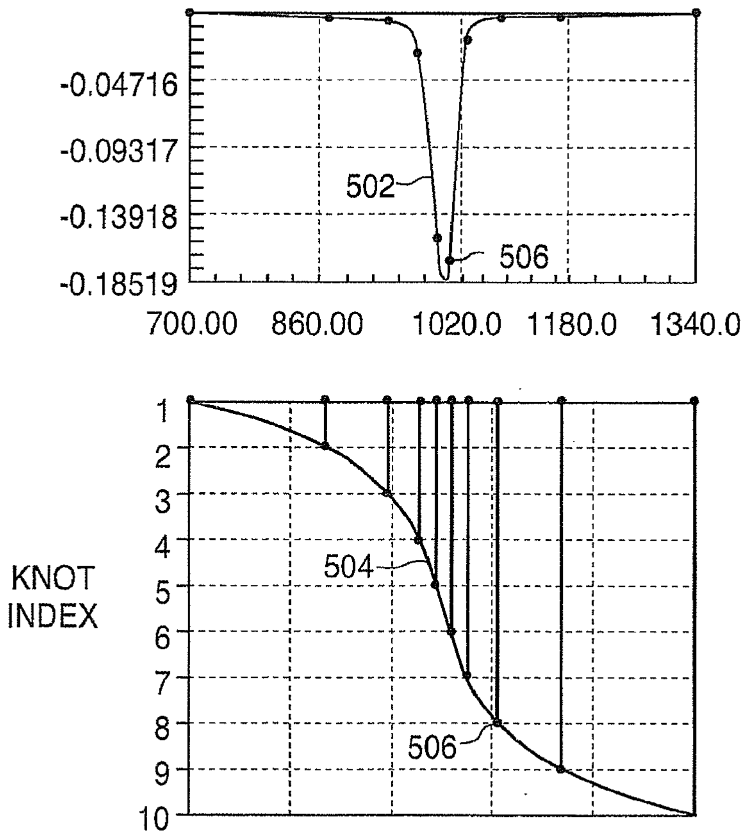
-0.04716
-0.09317
-0.13918
-0.18519
502
506
700.00
860.00
1020.0
1180.0
1340.0
KNOT INDEX
1
2
3
4
5
6
7
8
9
10
504
506

FIG. 5

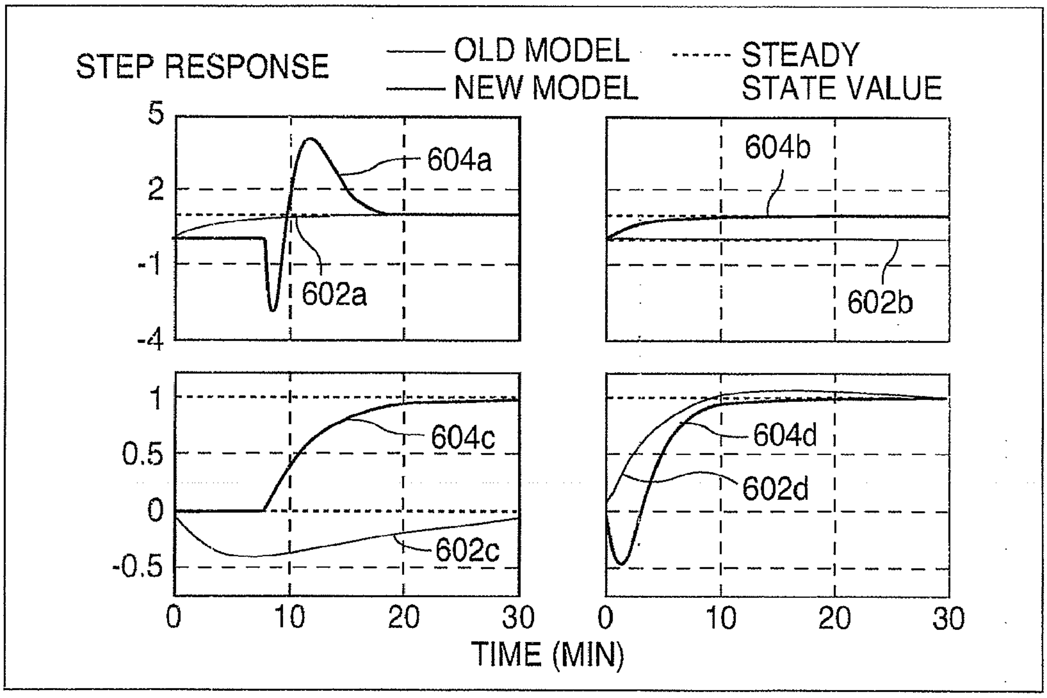
STEP RESPONSE
OLD MODEL
NEW MODEL
STEADY STATE VALUE
5
2
-1
-4
604a
602a
604b
602b
1
0.5
0
-0.5
604c
602c
604d
602d
0
10
20
30
TIME (MIN)

FIG. 6

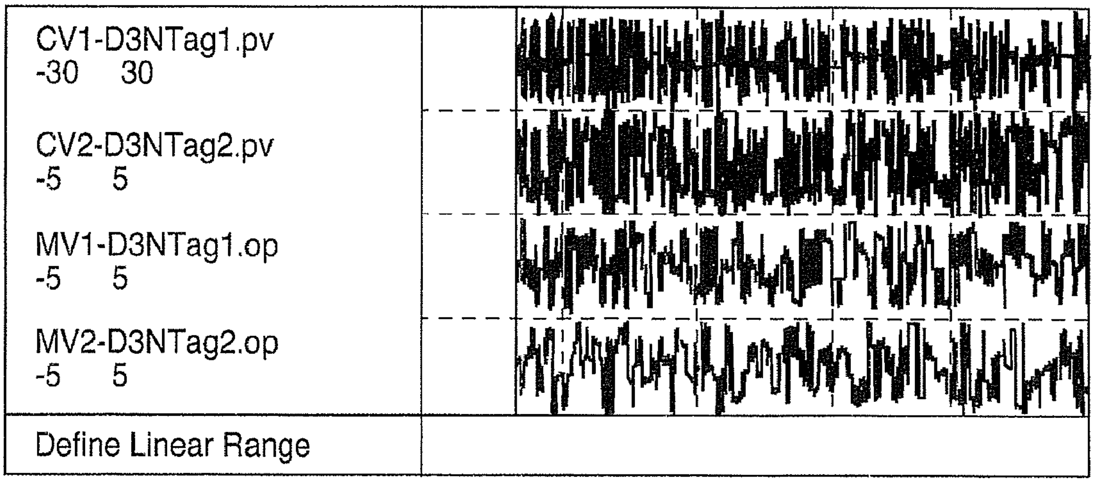
CV1-D3NTag1.pv
-30 30
CV2-D3NTag2.pv
-5 5
MV1-D3NTag1.op
-5 5
MV2-D3NTag2.op
-5 5
Define Linear Range

FIG. 7

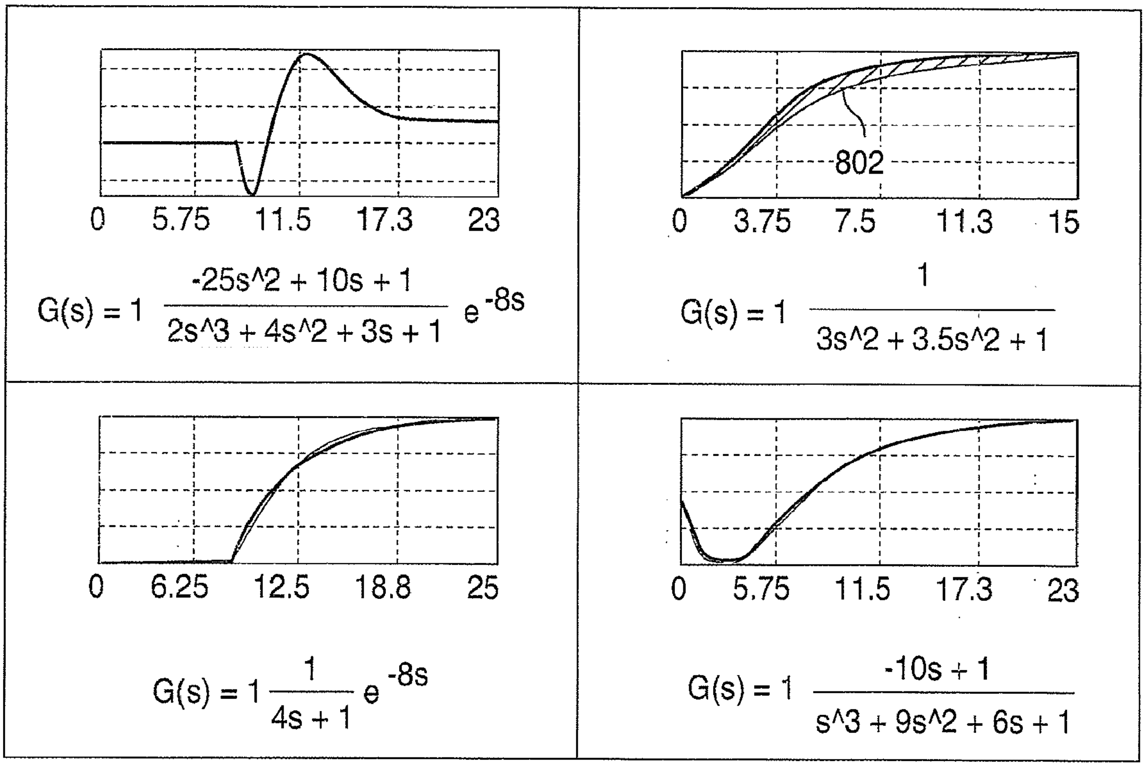
0
5.75
11.5
17.3
23
G(s) = 1 -25s^2 + 10s + 1 / 2s^3 + 4s^2 + 3s + 1 e -8s
802
0
3.75
7.5
11.3
15
G(s) = 1 1 / 3s^2 + 3.5s^2 + 1
0
6.25
12.5
18.8
25
G(s) = 1 1 / 4s + 1 e -8s
0
5.75
11.5
17.3
23
G(s) = 1 -10s + 1 / s^3 + 9s^2 + 6s + 1

FIG. 8

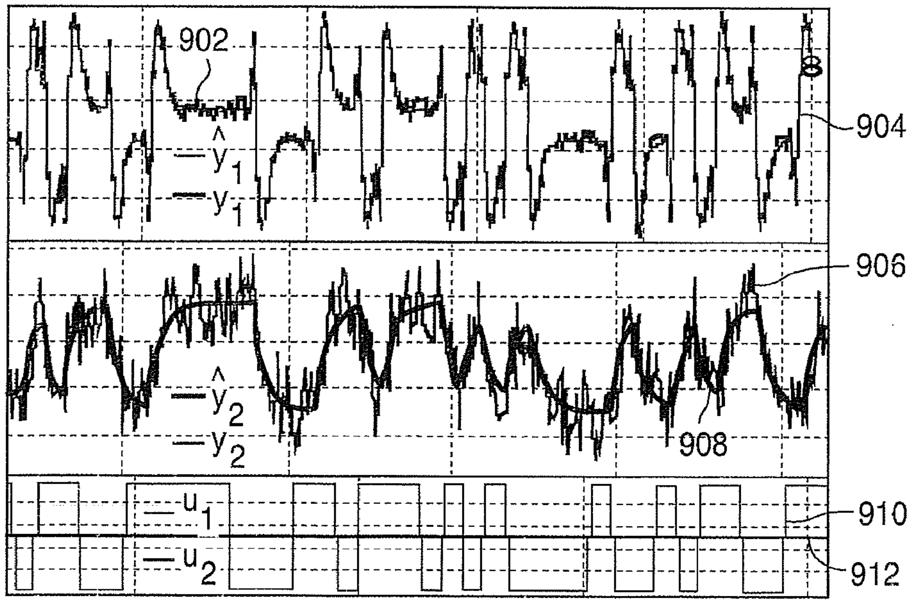
902
904
$\hat{y}_1$
$y_1$
906
$\hat{y}_2$
$y_2$
908
$u_1$
910
$u_2$
912

FIG. 9A

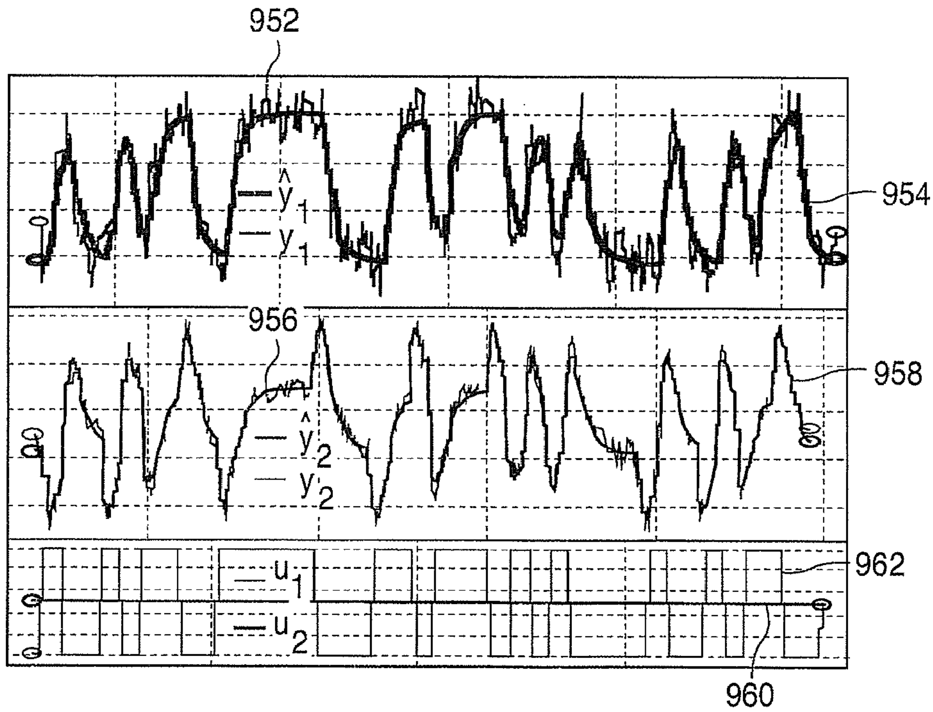
952
954
$\hat{y}_1$
$y_1$
956
958
$\hat{y}_2$
$y_2$
$u_1$
962
$u_2$
960

FIG. 9B

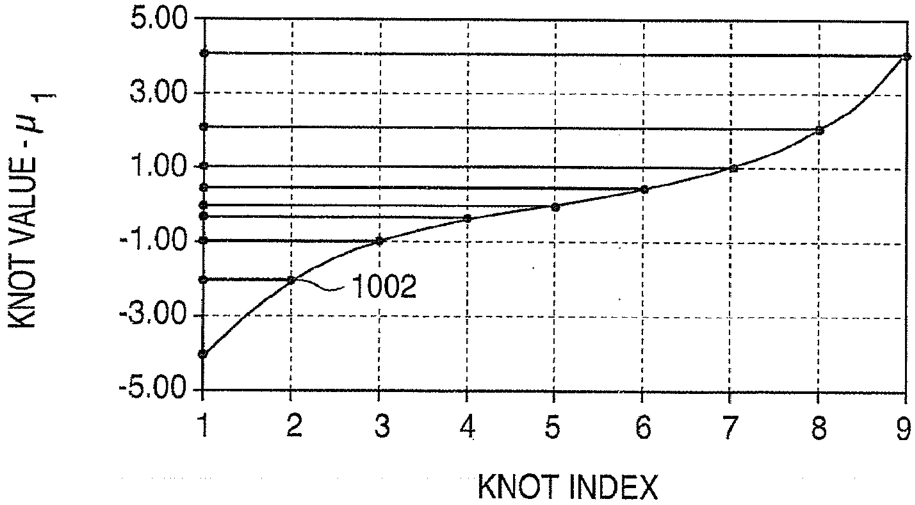


FIG. 10A

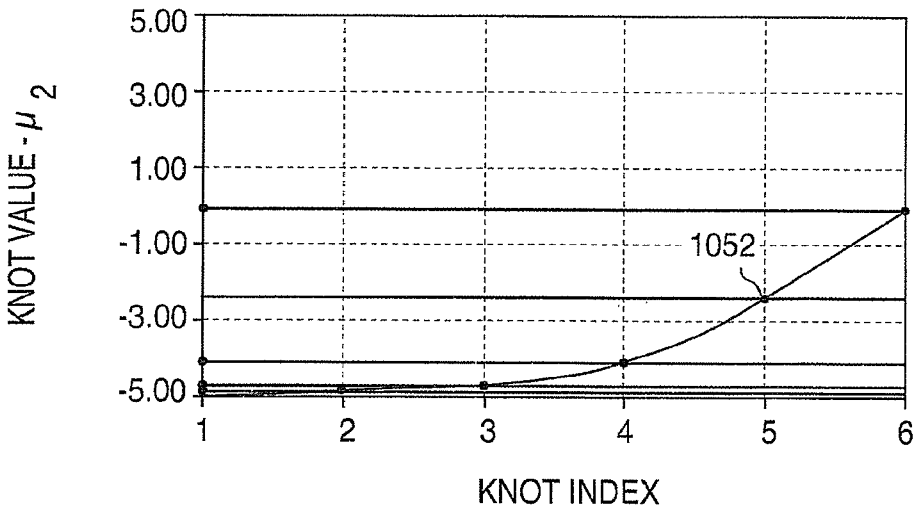


FIG. 10B

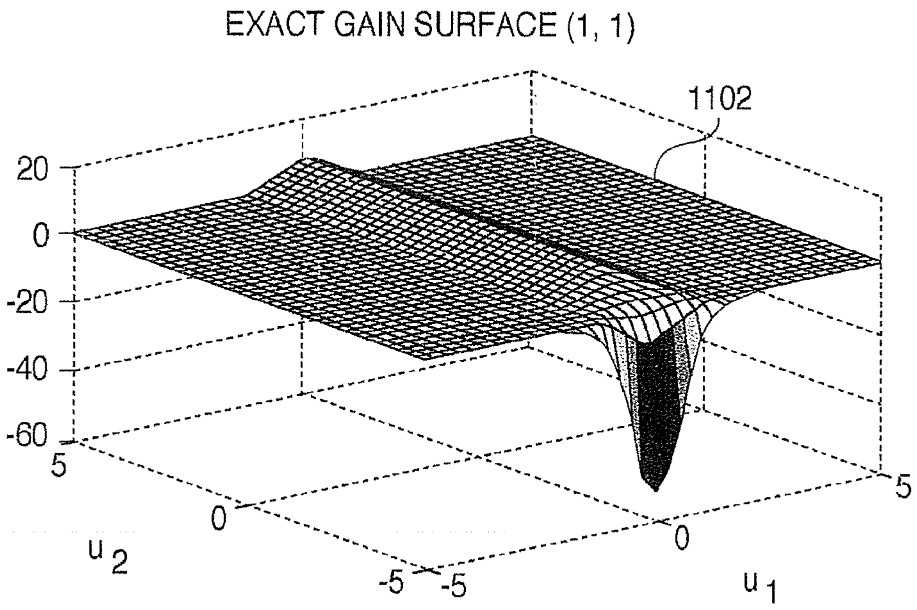


FIG. 11A

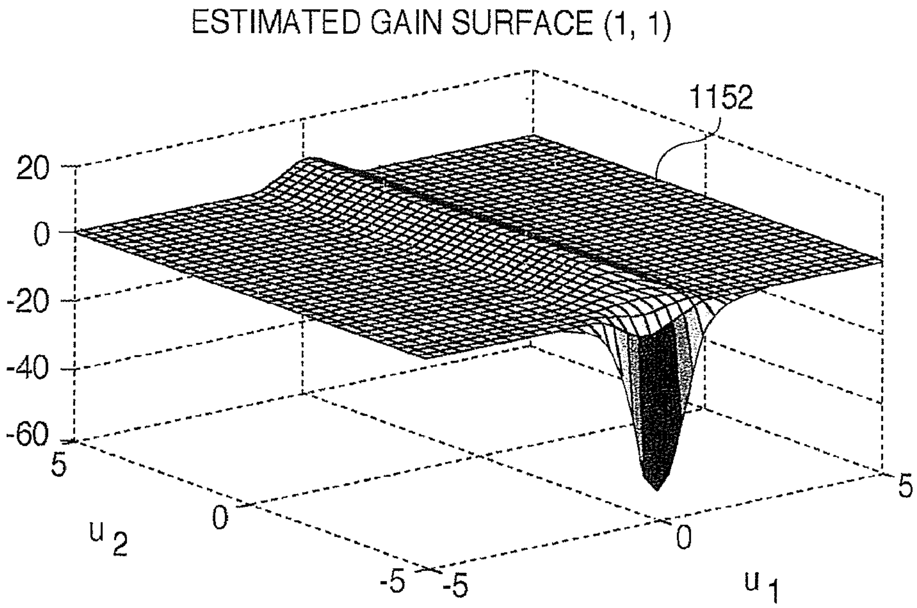


FIG. 11B

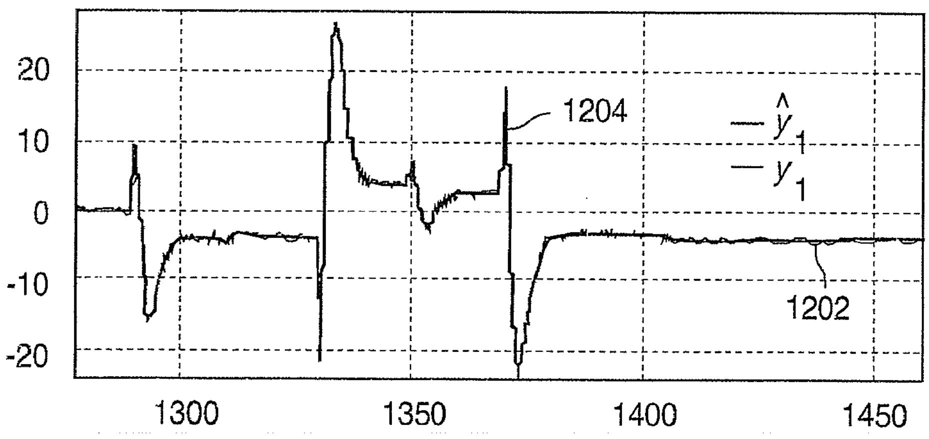


FIG. 12A

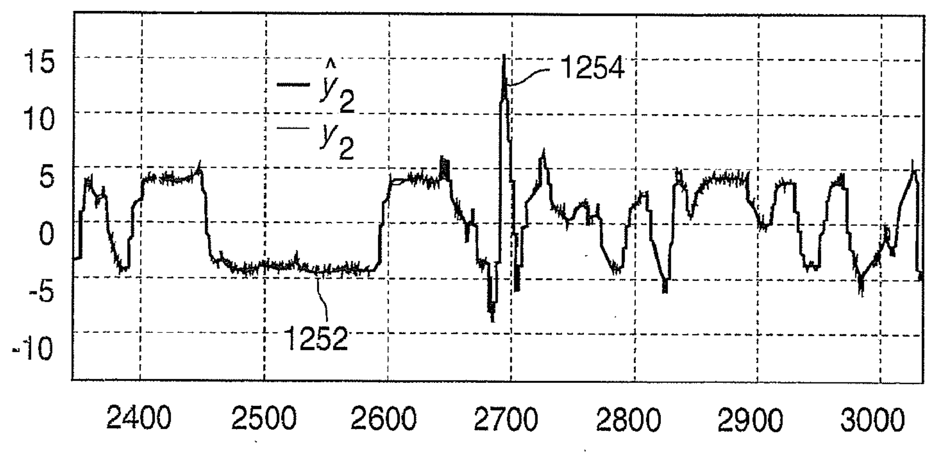


FIG. 12B

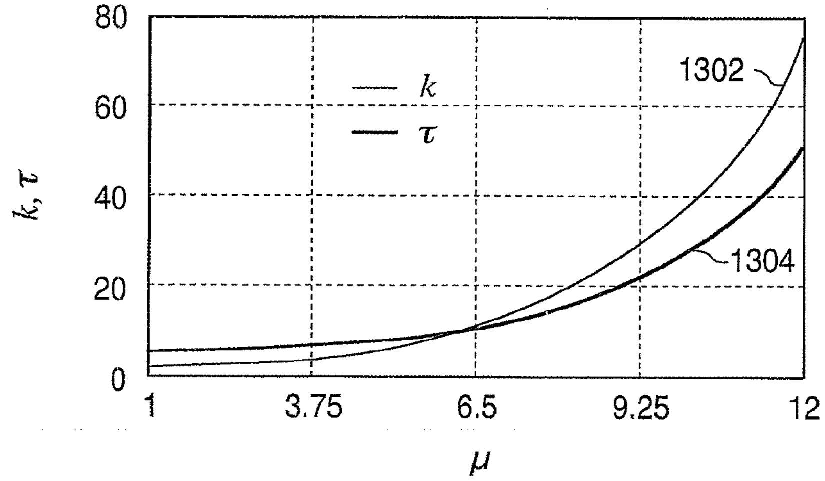
80
60
40
20
0
k, τ
k
τ
1302
1304
1
3.75
6.5
9.25
12
μ

FIG. 13

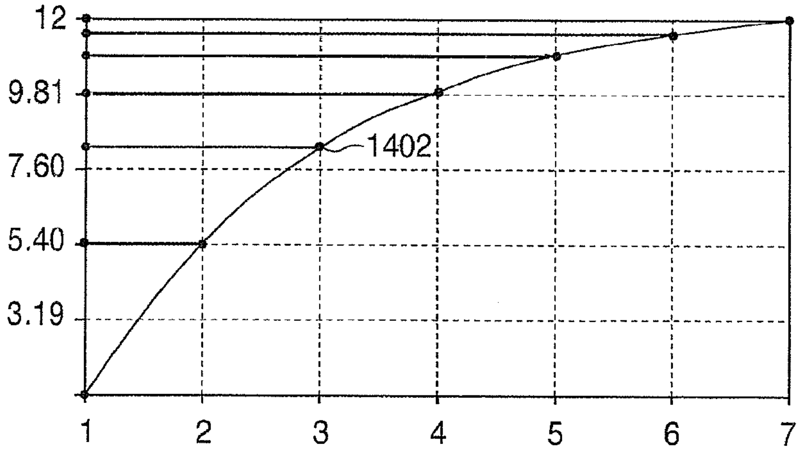
12
9.81
7.60
5.40
3.19
1402
1
2
3
4
5
6
7

FIG. 14

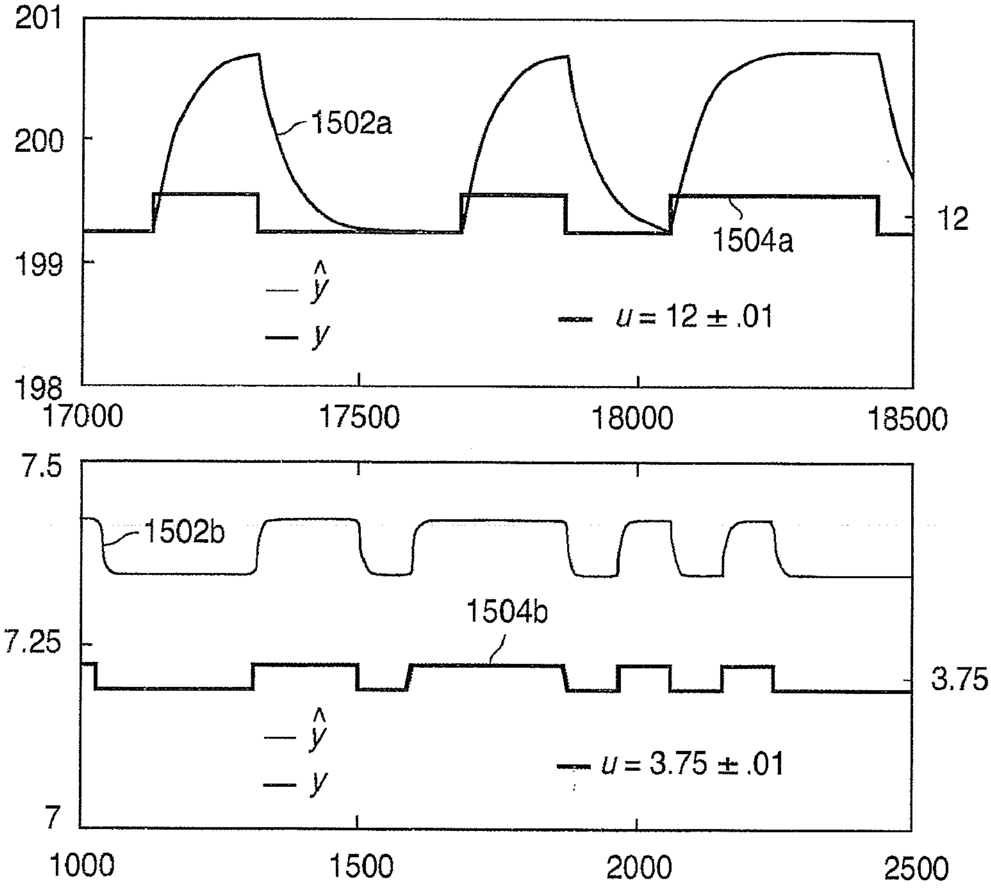
201
200
199
198
17000
17500
18000
18500
1502a
1504a
12
ŷ
y
u = 12 ± .01
7.5
7.25
7
1000
1500
2000
2500
1502b
1504b
3.75
ŷ
y
u = 3.75 ± .01

FIG. 15

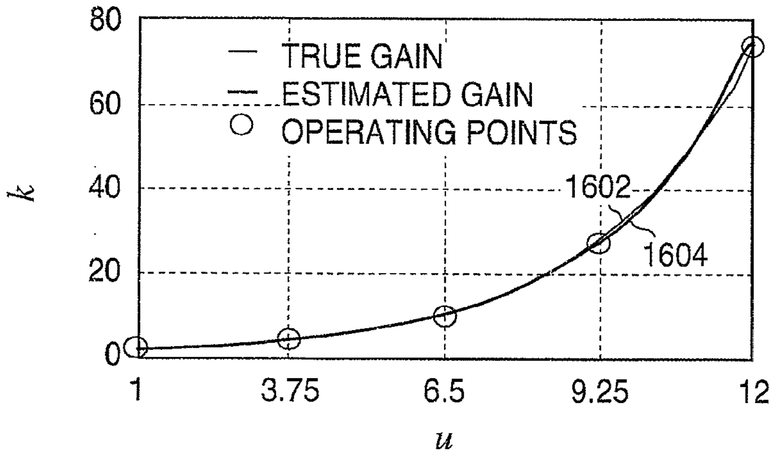
80
60
40
20
0
k
TRUE GAIN
ESTIMATED GAIN
OPERATING POINTS
1602
1604
1
3.75
6.5
9.25
12
u

FIG. 16

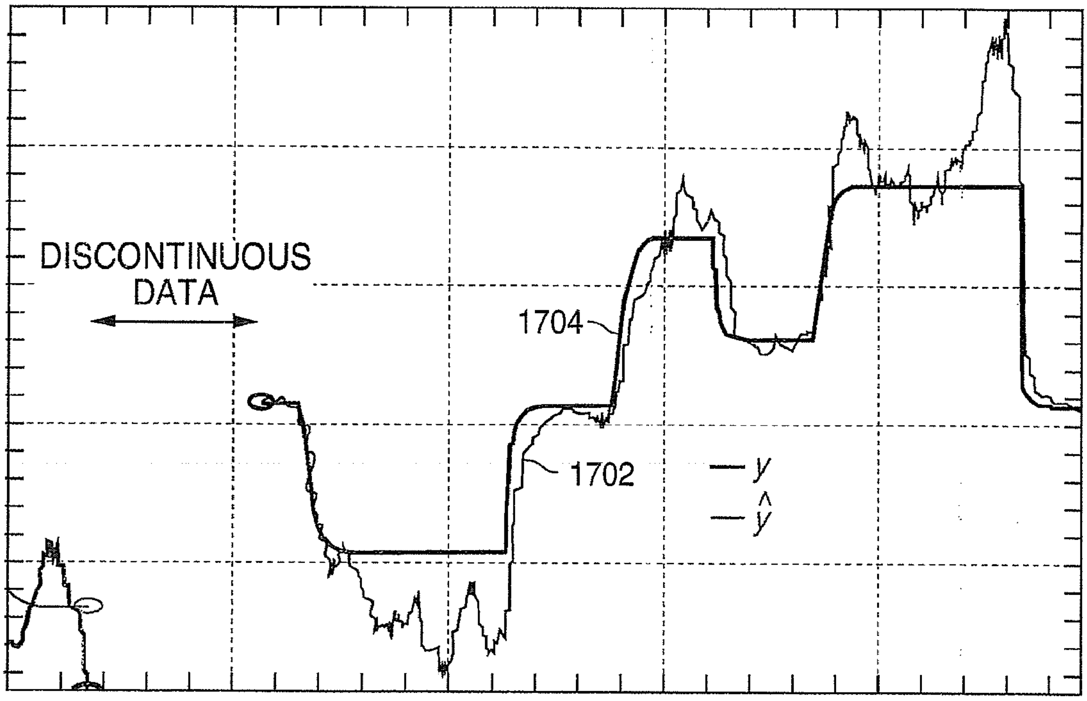
DISCONTINUOUS
DATA
1704
1702
y
ŷ

FIG. 17

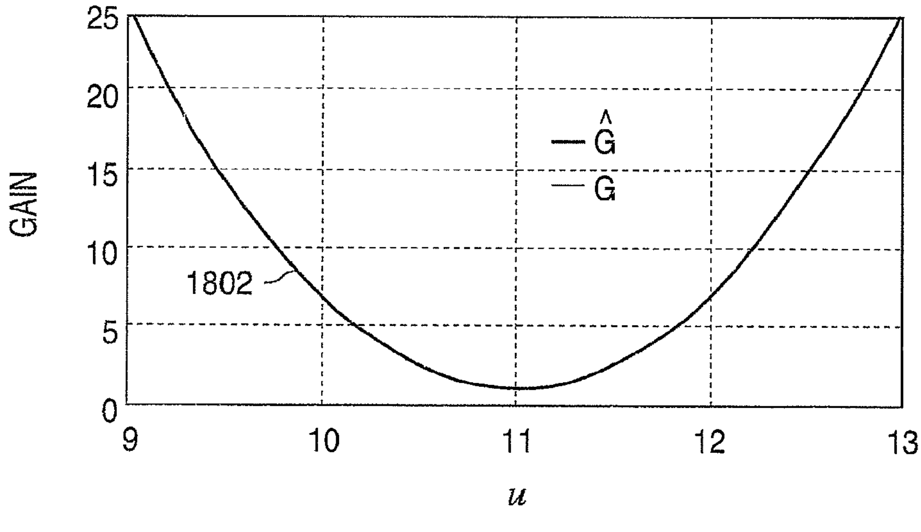
25
20
15
10
5
0
GAIN
1802
Ĝ
G
9
10
11
12
13
u

FIG. 18

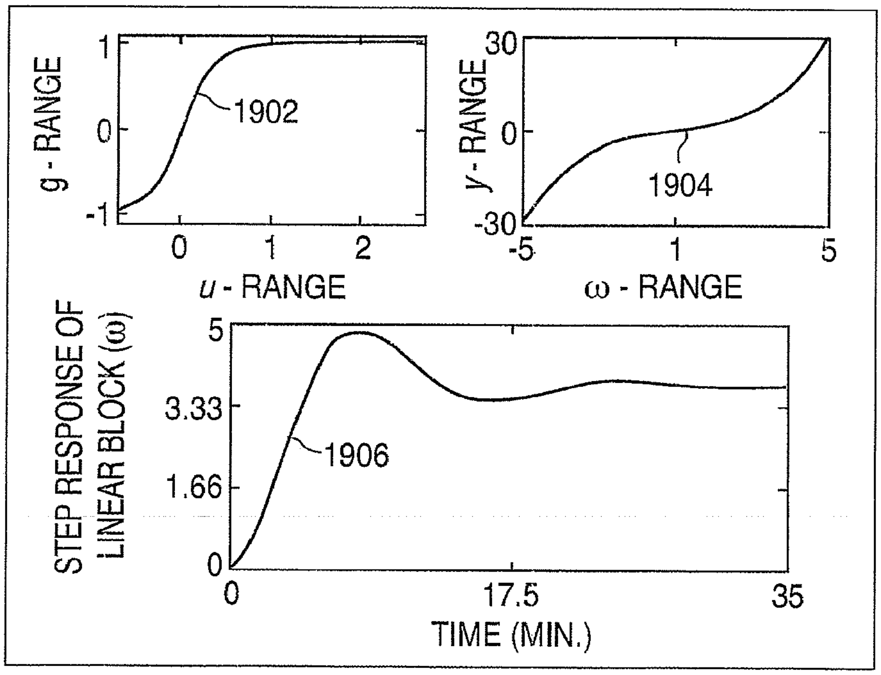
g - RANGE
1
0
-1
0
1
2
u - RANGE
1902
y - RANGE
30
0
-30
-5
1
5
ω - RANGE
1904
STEP RESPONSE OF LINEAR BLOCK (ω)
5
3.33
1.66
0
0
17.5
35
TIME (MIN.)
1906

FIG. 19

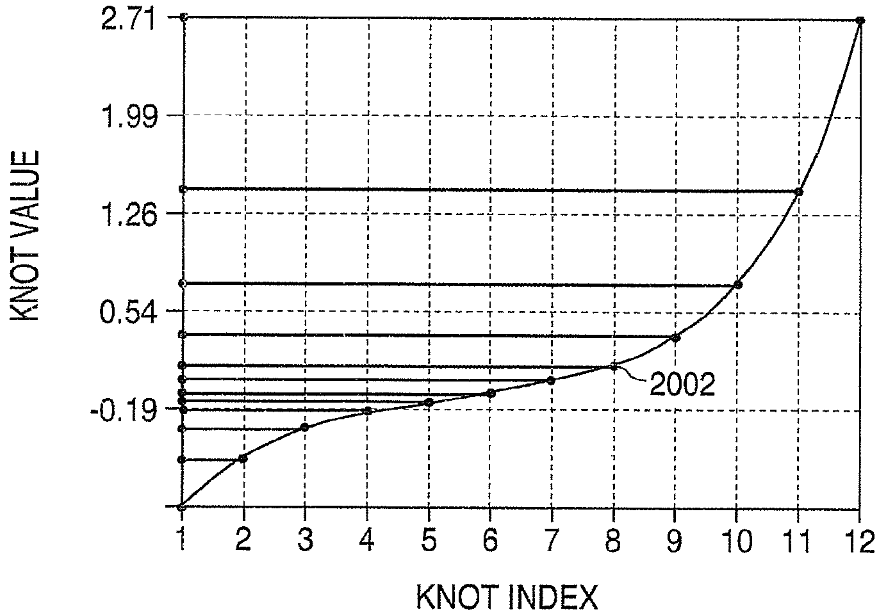
KNOT VALUE
2.71
1.99
1.26
0.54
-0.19
1
2
3
4
5
6
7
8
9
10
11
12
KNOT INDEX
2002

FIG. 20

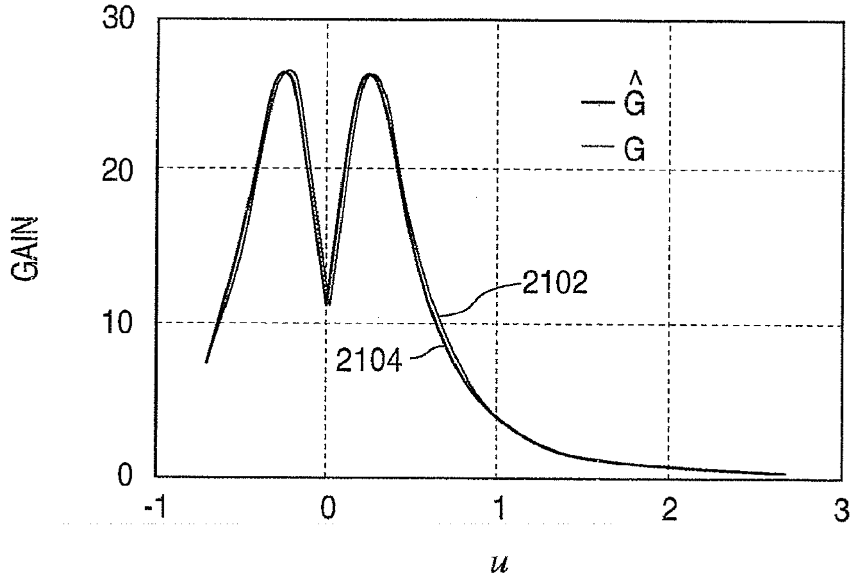


FIG. 21

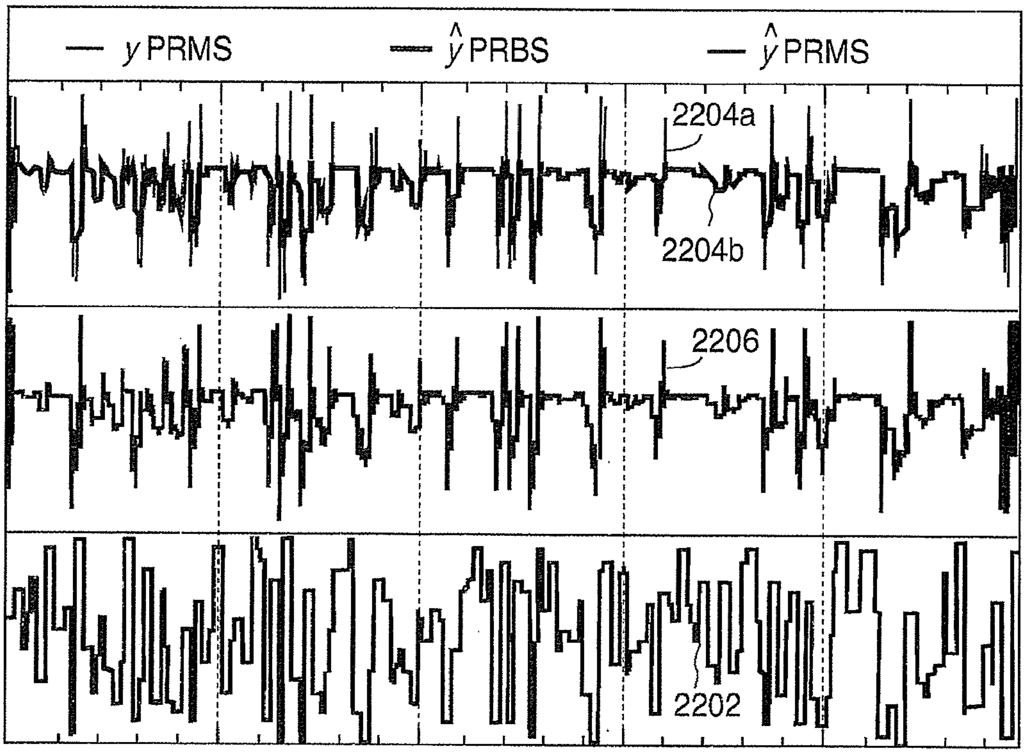


FIG. 22A

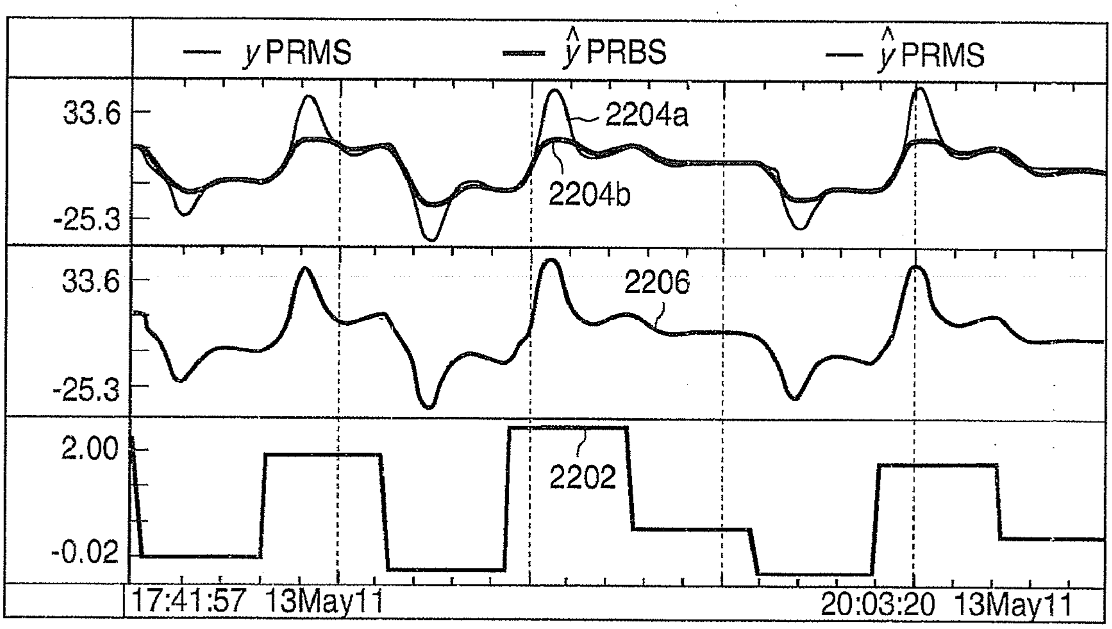
y PRMS
ŷ PRBS
ŷ PRMS
33.6
-25.3
2204a
2204b
33.6
-25.3
2206
2.00
-0.02
2202
17:41:57 13May11
20:03:20 13May11

FIG. 22B

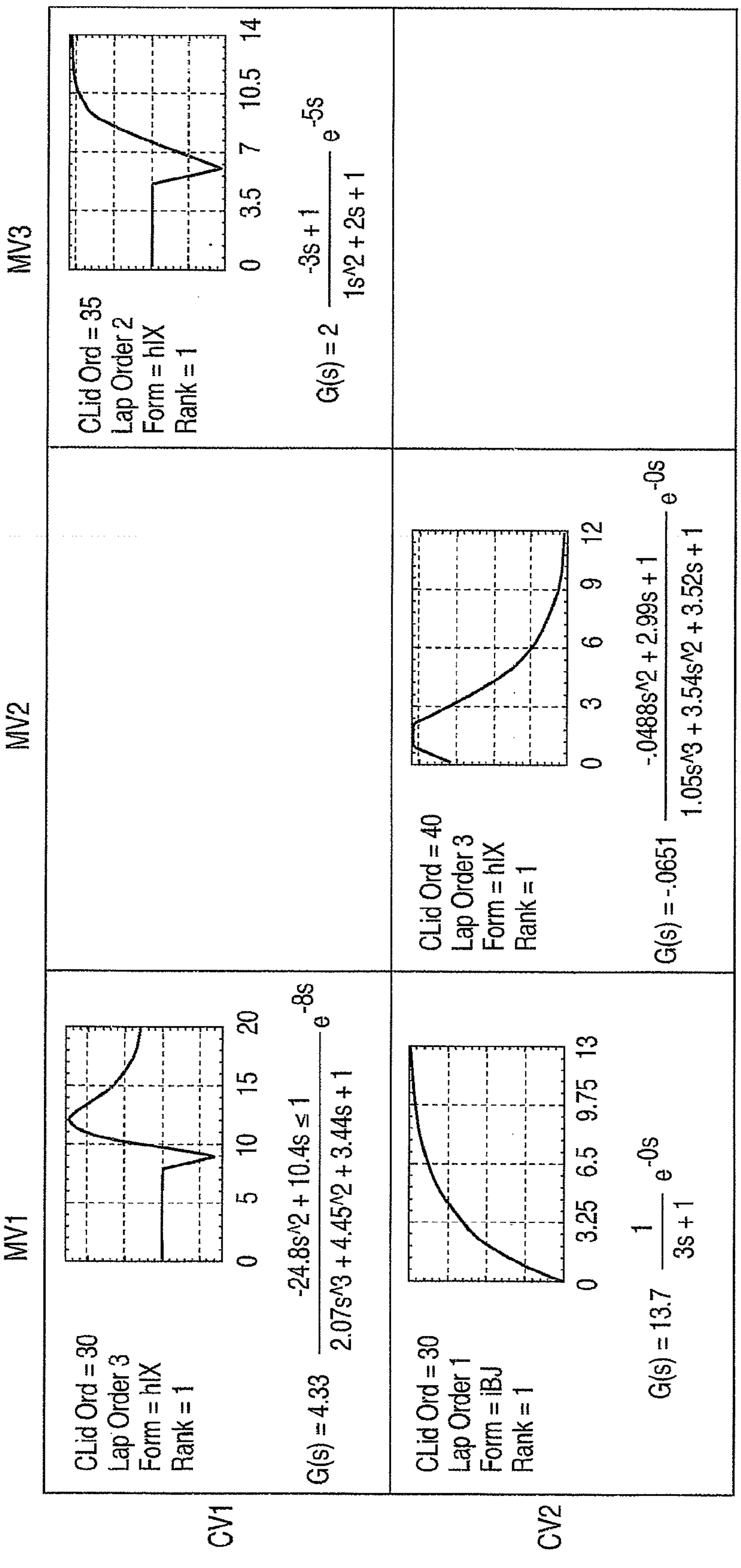
MV1
MV2
MV3
CV1
CV2
CLid Ord = 30
Lap Order 3
Form = hIX
Rank = 1
0 5 10 15 20
G(s) = 4.33 -24.8s^2 + 10.4s ≤ 1 / 2.07s^3 + 4.45^2 + 3.44s + 1 e^-8s
CLid Ord = 35
Lap Order 2
Form = hIX
Rank = 1
0 3.5 7 10.5 14
G(s) = 2 -3s + 1 / 1s^2 + 2s + 1 e^-5s
CLid Ord = 30
Lap Order 1
Form = iBJ
Rank = 1
0 3.25 6.5 9.75 13
G(s) = 13.7 1 / 3s + 1 e^-0s
CLid Ord = 40
Lap Order 3
Form = hIX
Rank = 1
0 3 6 9 12
G(s) = -.0651 -.0488s^2 + 2.99s + 1 / 1.05s^3 + 3.54s^2 + 3.52s + 1 e^-0s

FIG. 23

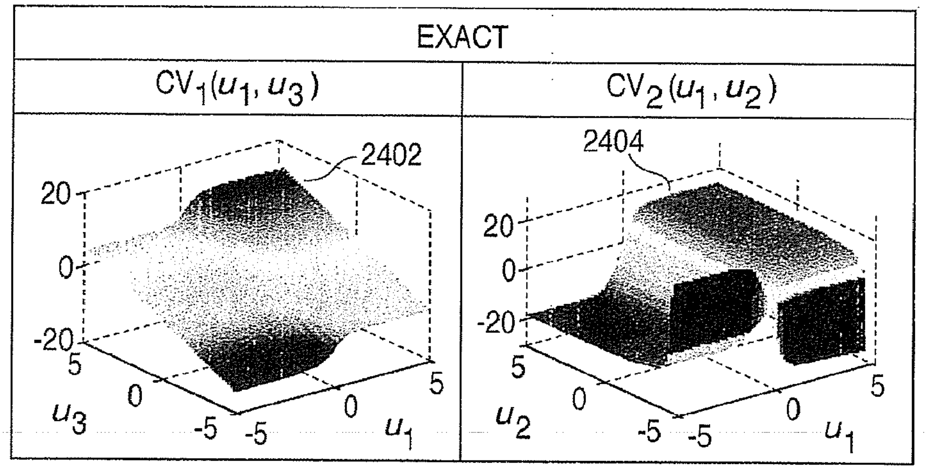


FIG. 24A

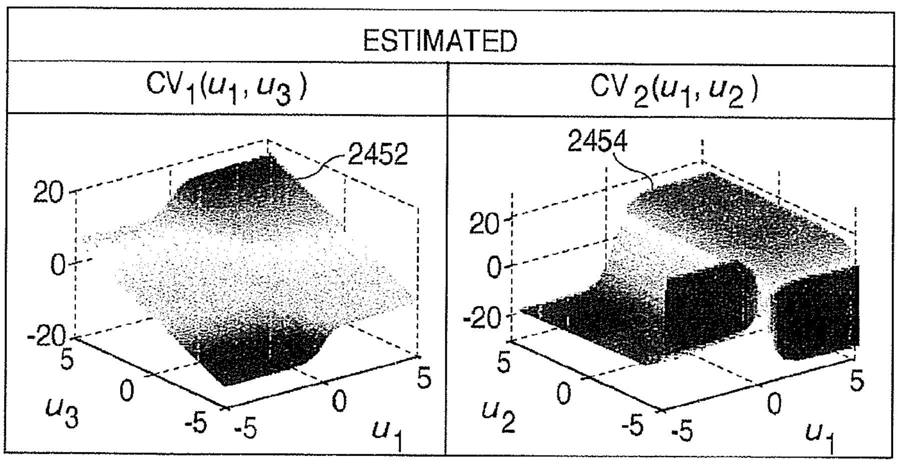


FIG. 24B

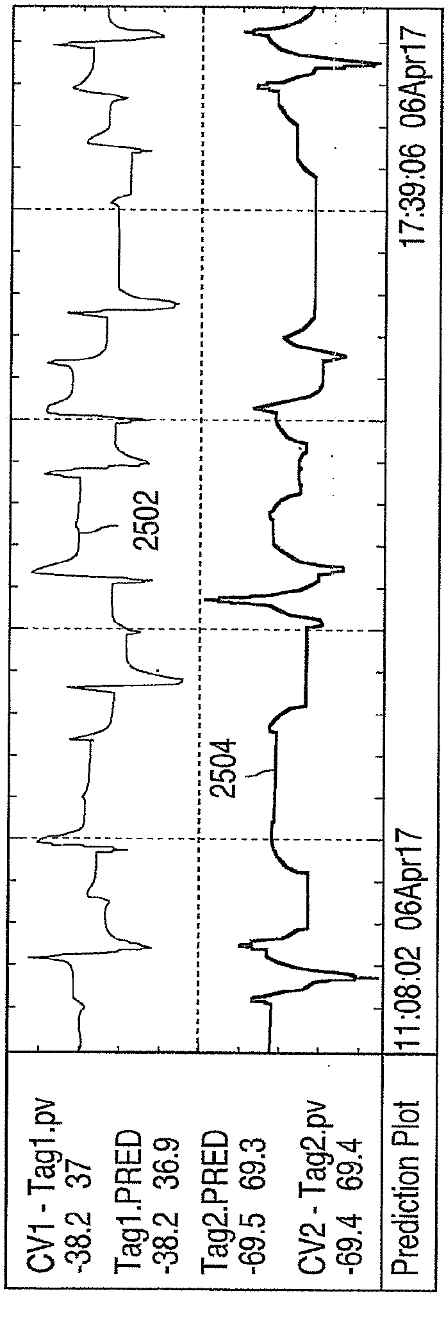
CV1 - Tag1.pv
-38.2 37
Tag1.PRED
-38.2 36.9
Tag2.PRED
-69.5 69.3
CV2 - Tag2.pv
-69.4 69.4
Prediction Plot
11:08:02 06Apr17
17:39:06 06Apr17
2502
2504

FIG. 25

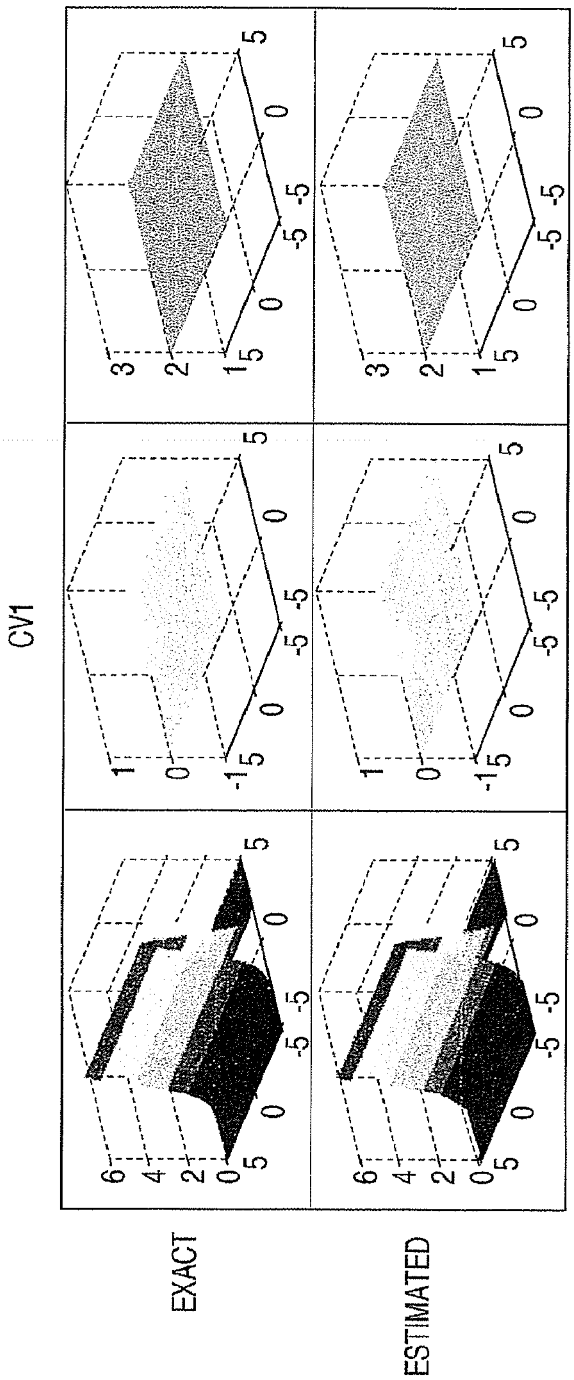


FIG. 26A

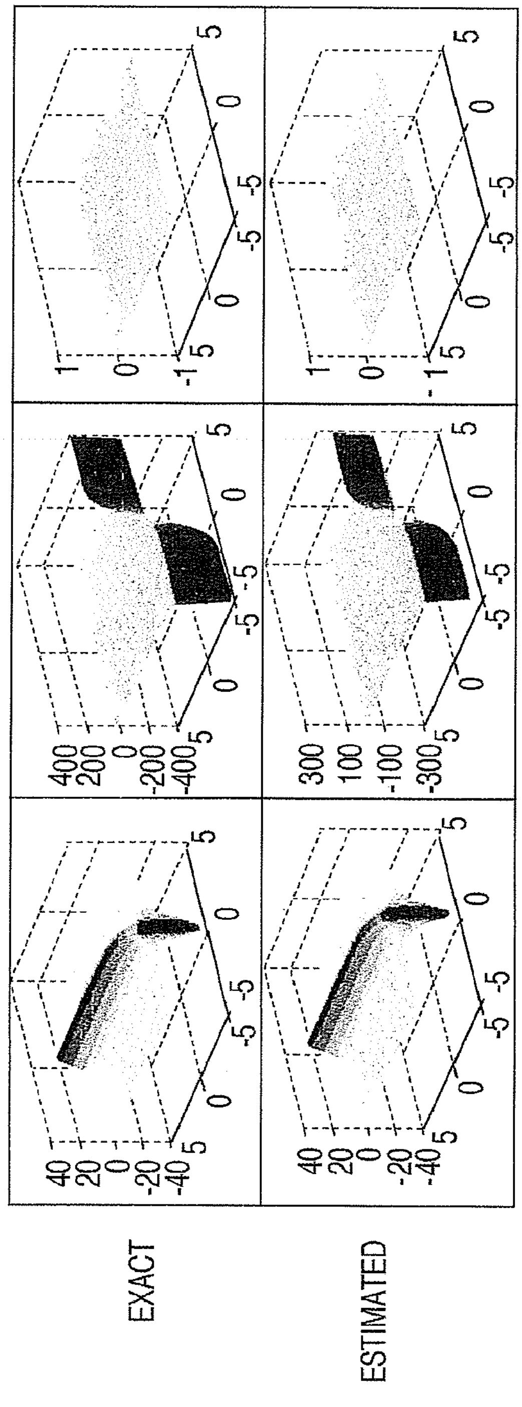


FIG. 26B

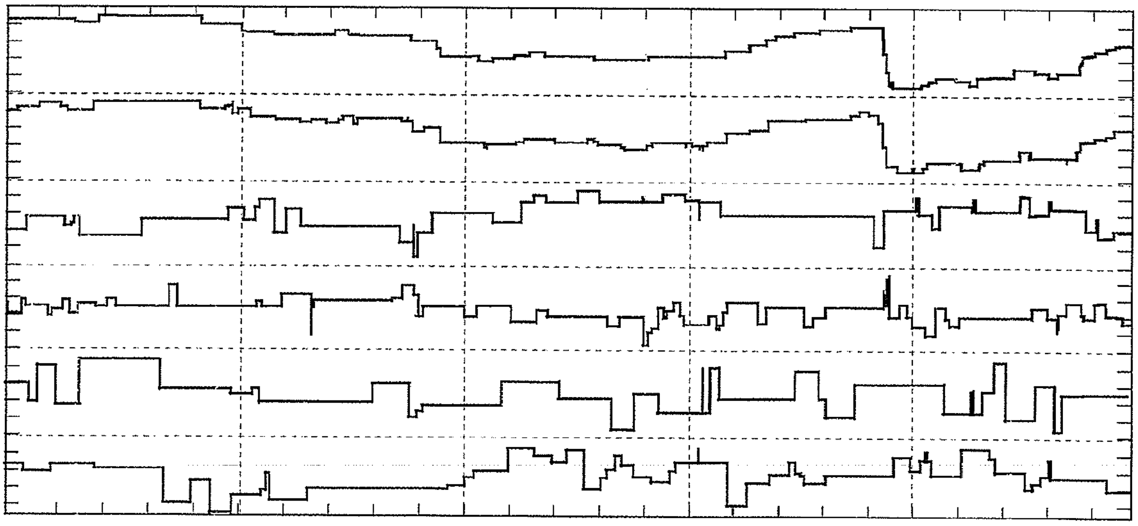

2700

FIG. 27

2800

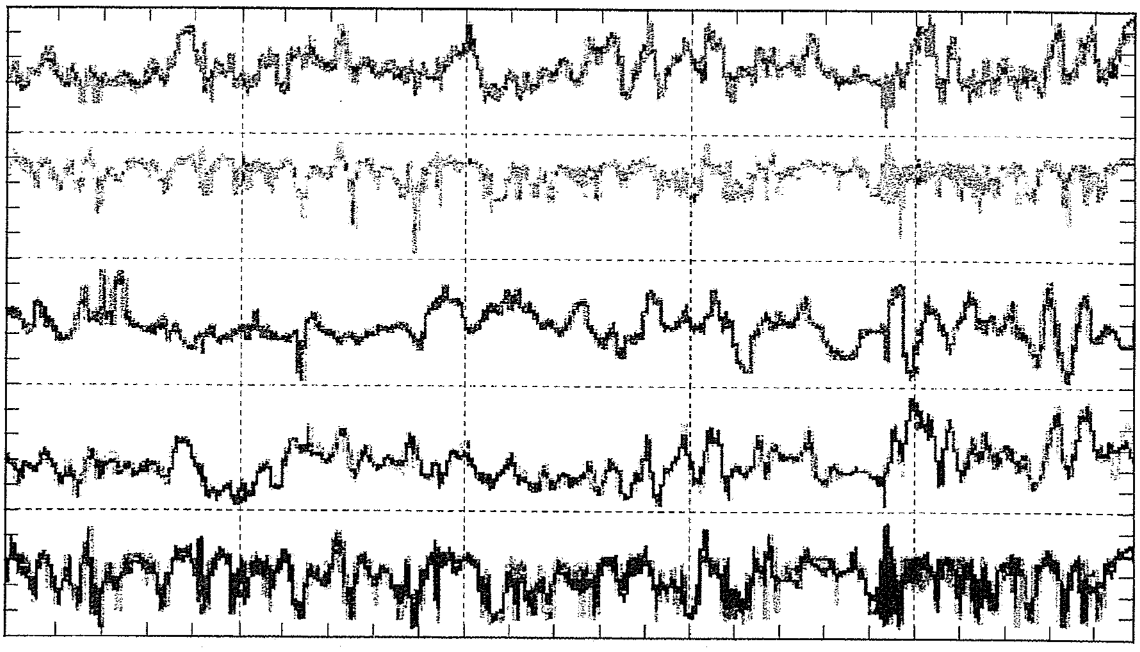

FIG. 28

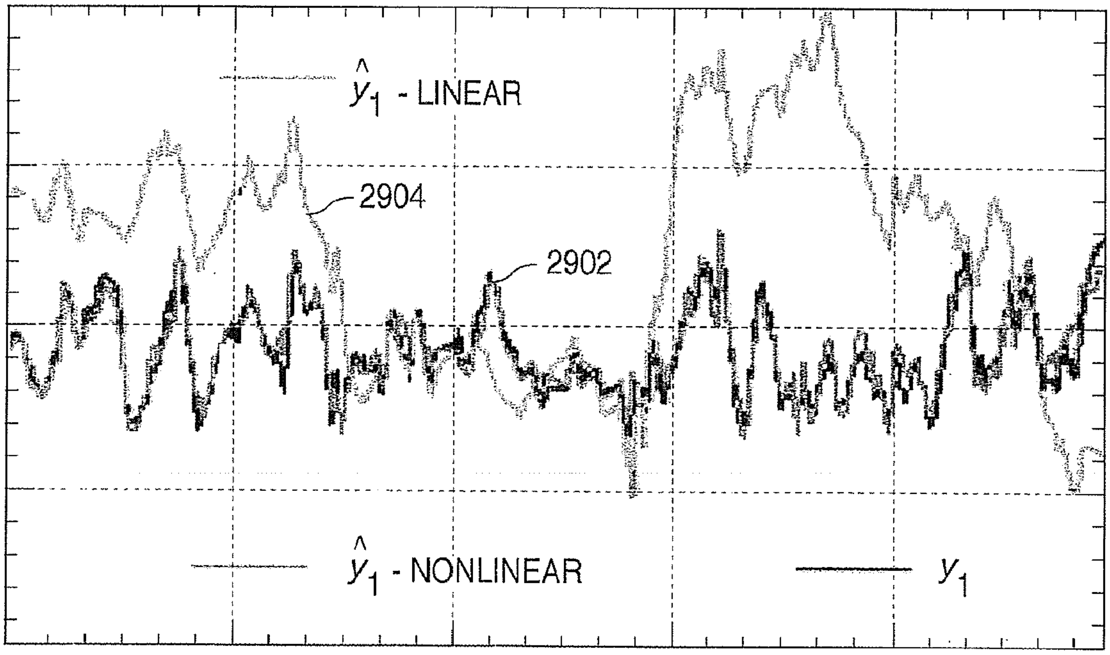


FIG. 29

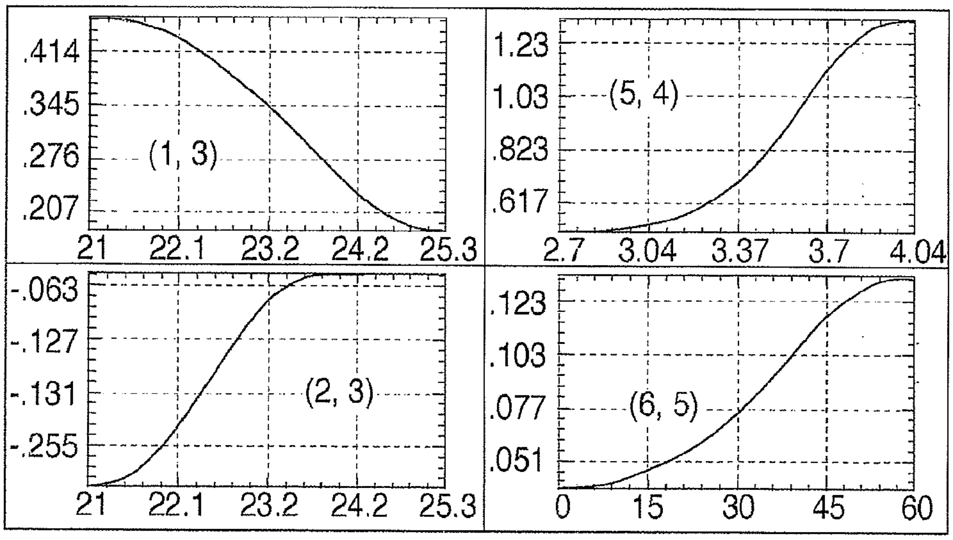


FIG. 30A

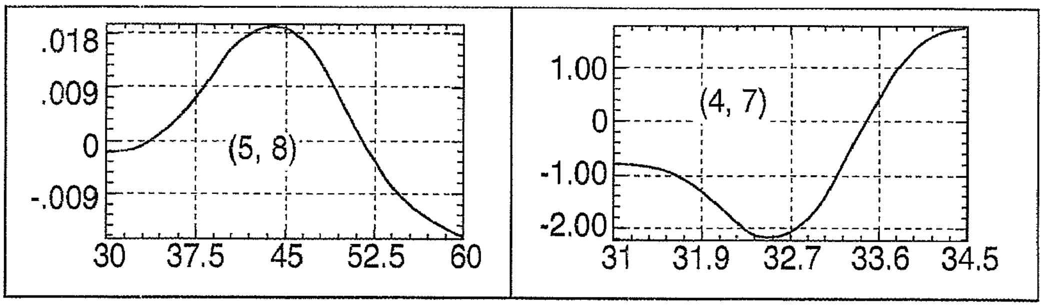


FIG. 30B

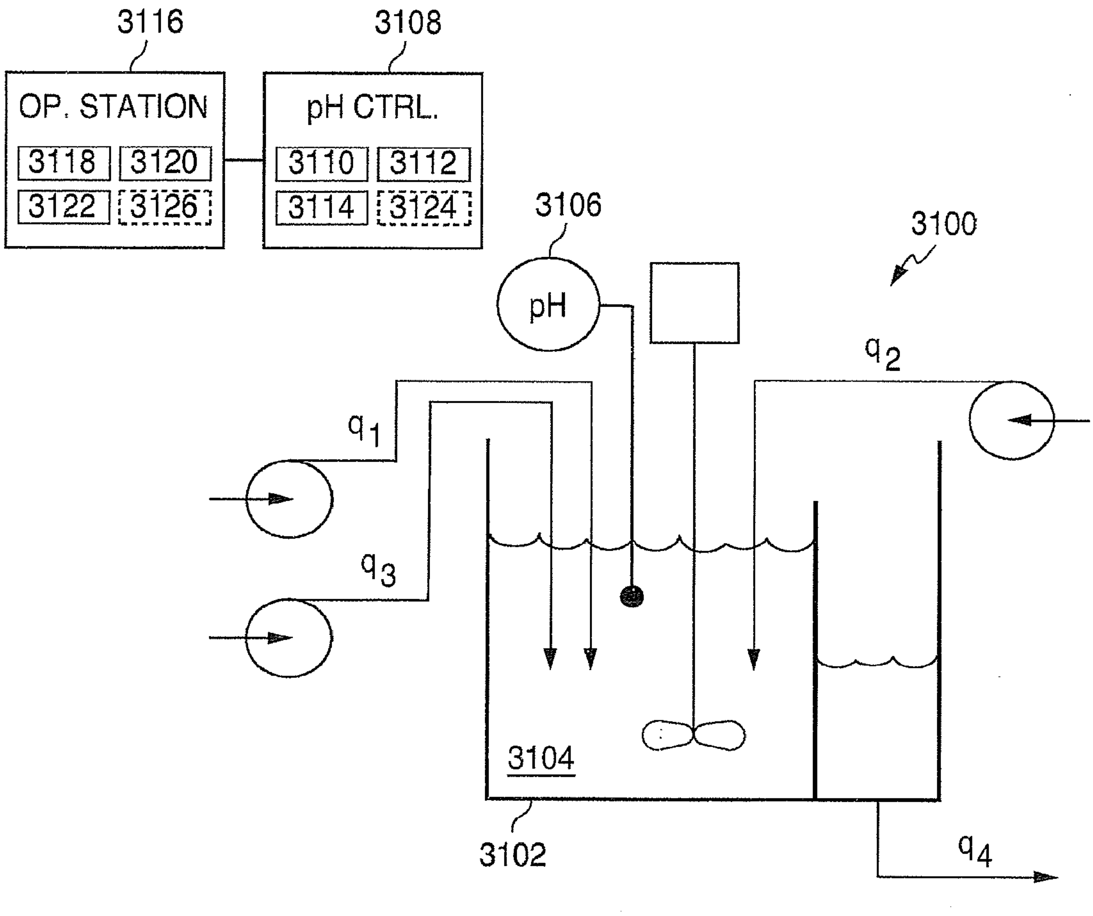


FIG. 31

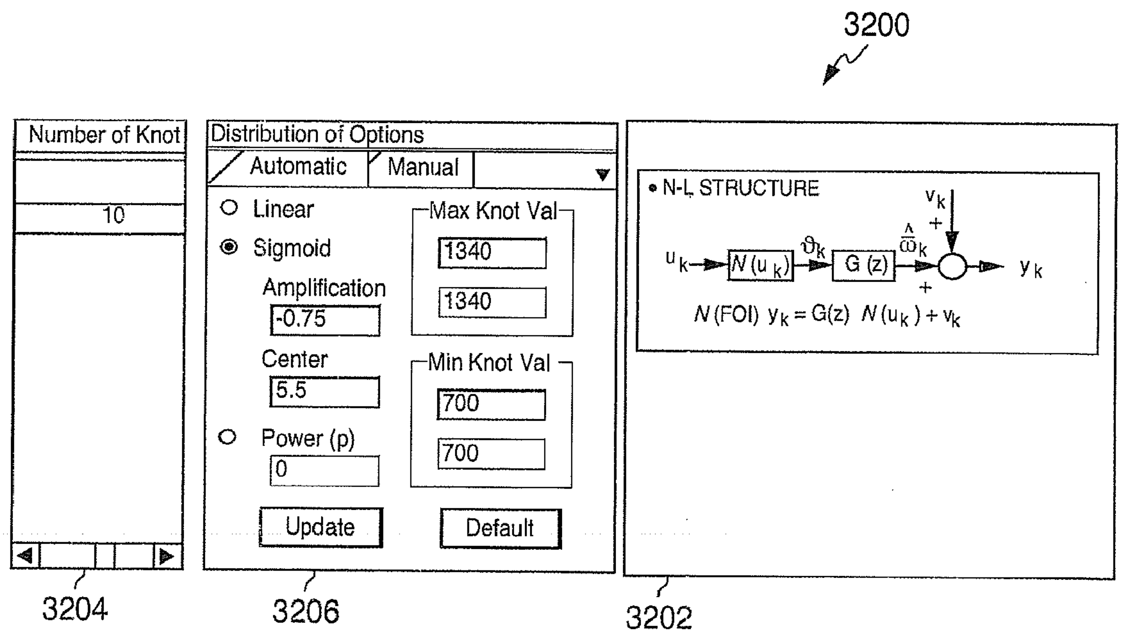
3200
Number of Knot
10
Distribution of Options
Automatic
Manual
Linear
Sigmoid
Amplification
-0.75
Center
5.5
Power (p)
0
Max Knot Val
1340
1340
Min Knot Val
700
700
Update
Default
N-L STRUCTURE
N(FOI) yk = G(z) N(uk) + vk
3204
3206
3202

FIG. 32

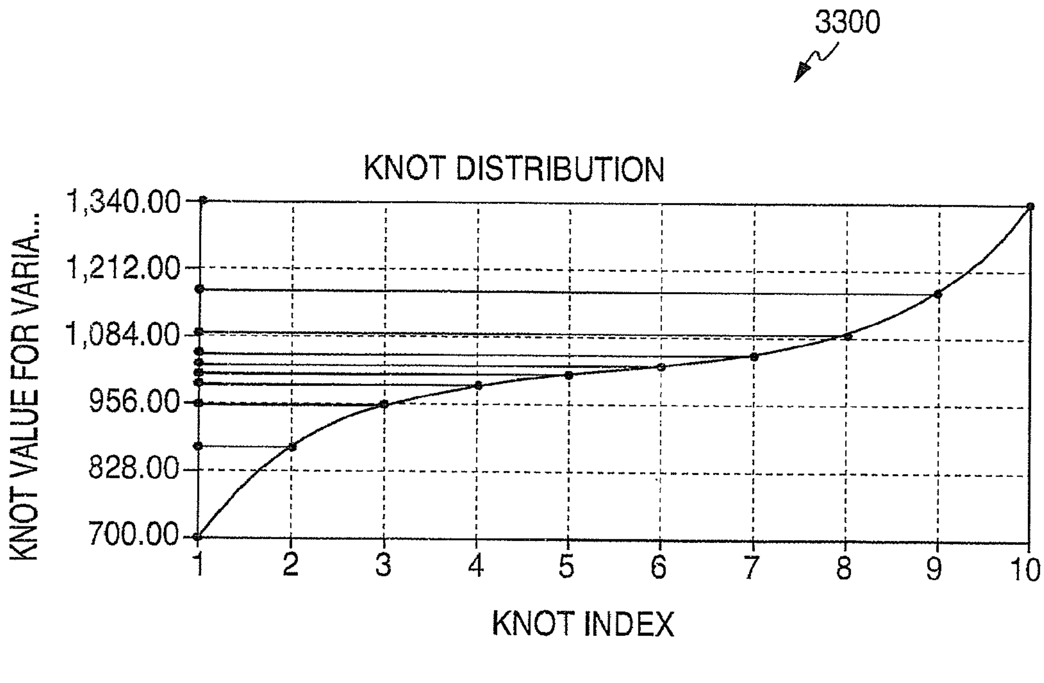
3300
KNOT DISTRIBUTION
KNOT VALUE FOR VARIA...
1,340.00
1,212.00
1,084.00
956.00
828.00
700.00
1
2
3
4
5
6
7
8
9
10
KNOT INDEX

FIG. 33

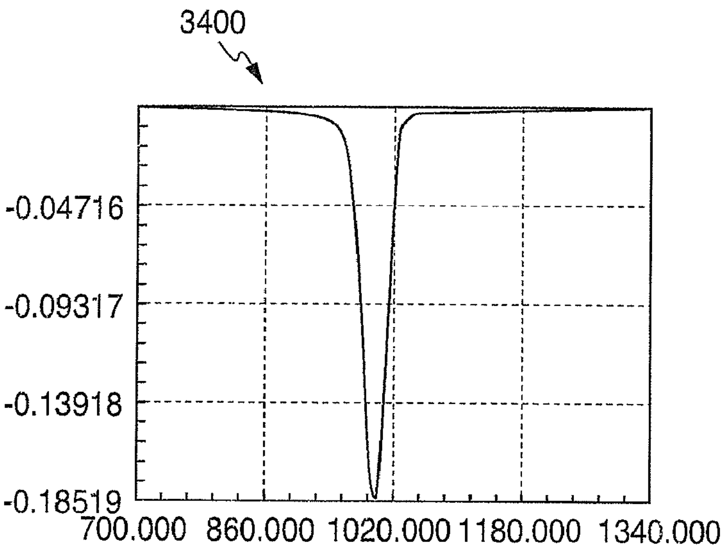


FIG. 34

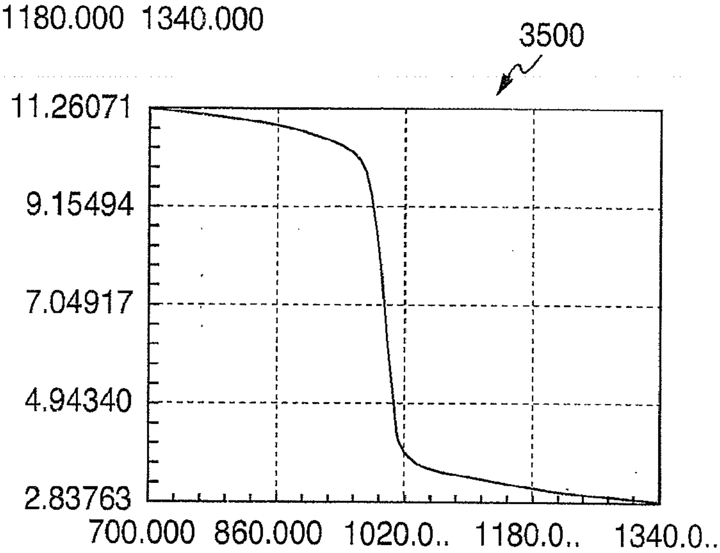


FIG. 35

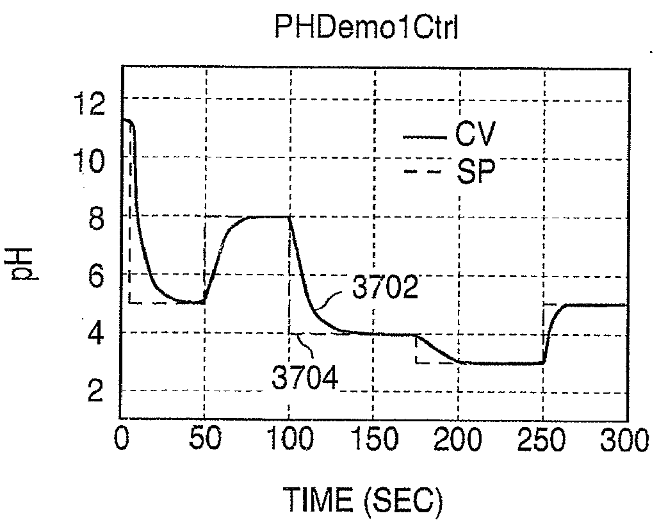


FIG. 37

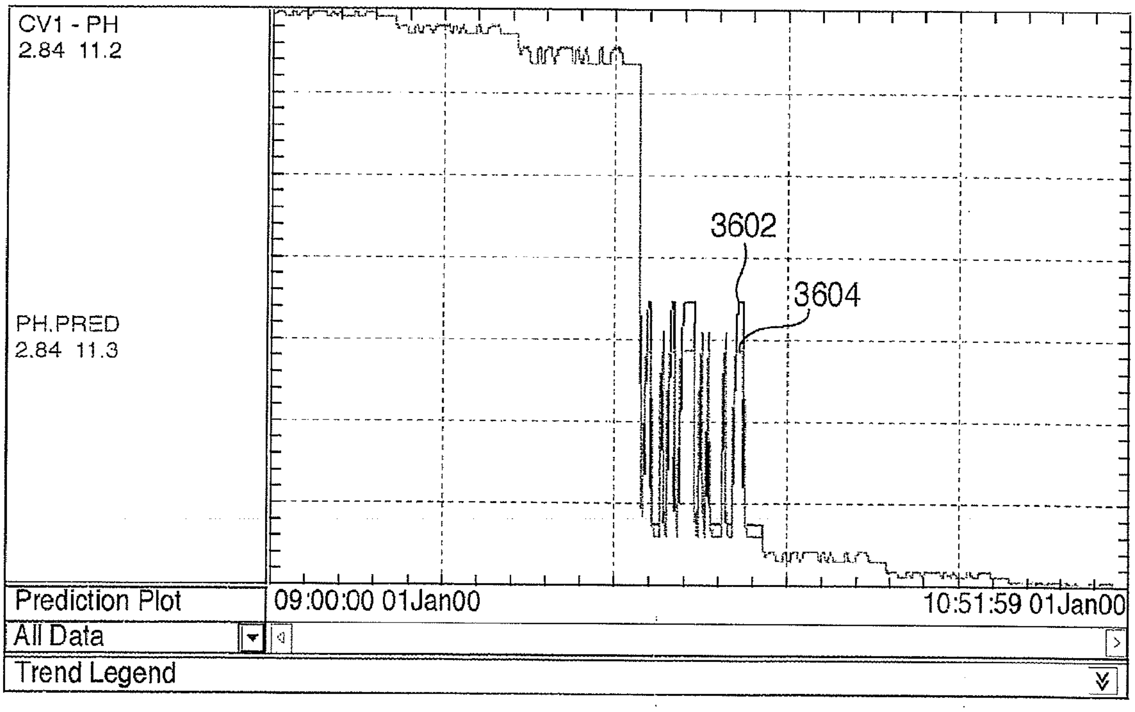
CV1 - PH
2.84 11.2
PH.PRED
2.84 11.3
3602
3604
Prediction Plot
09:00:00 01Jan00
10:51:59 01Jan00
All Data
Trend Legend

FIG. 36

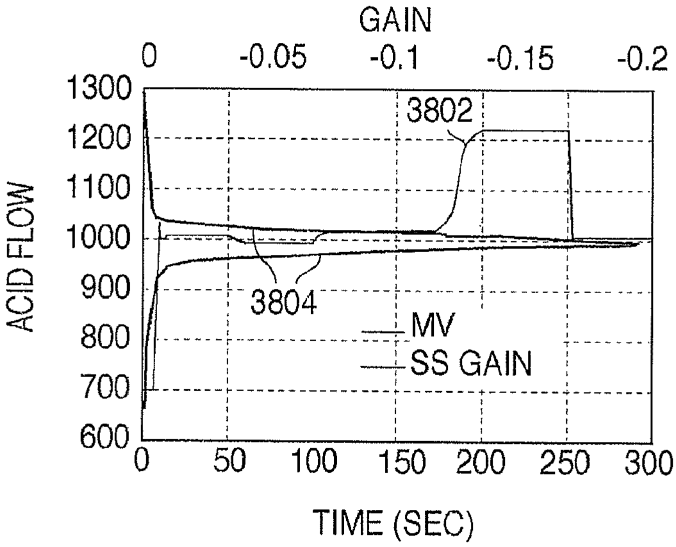
GAIN
0
-0.05
-0.1
-0.15
-0.2
1300
1200
1100
1000
900
800
700
600
ACID FLOW
3802
3804
MV
SS GAIN
0
50
100
150
200
250
300
TIME (SEC)

FIG. 38

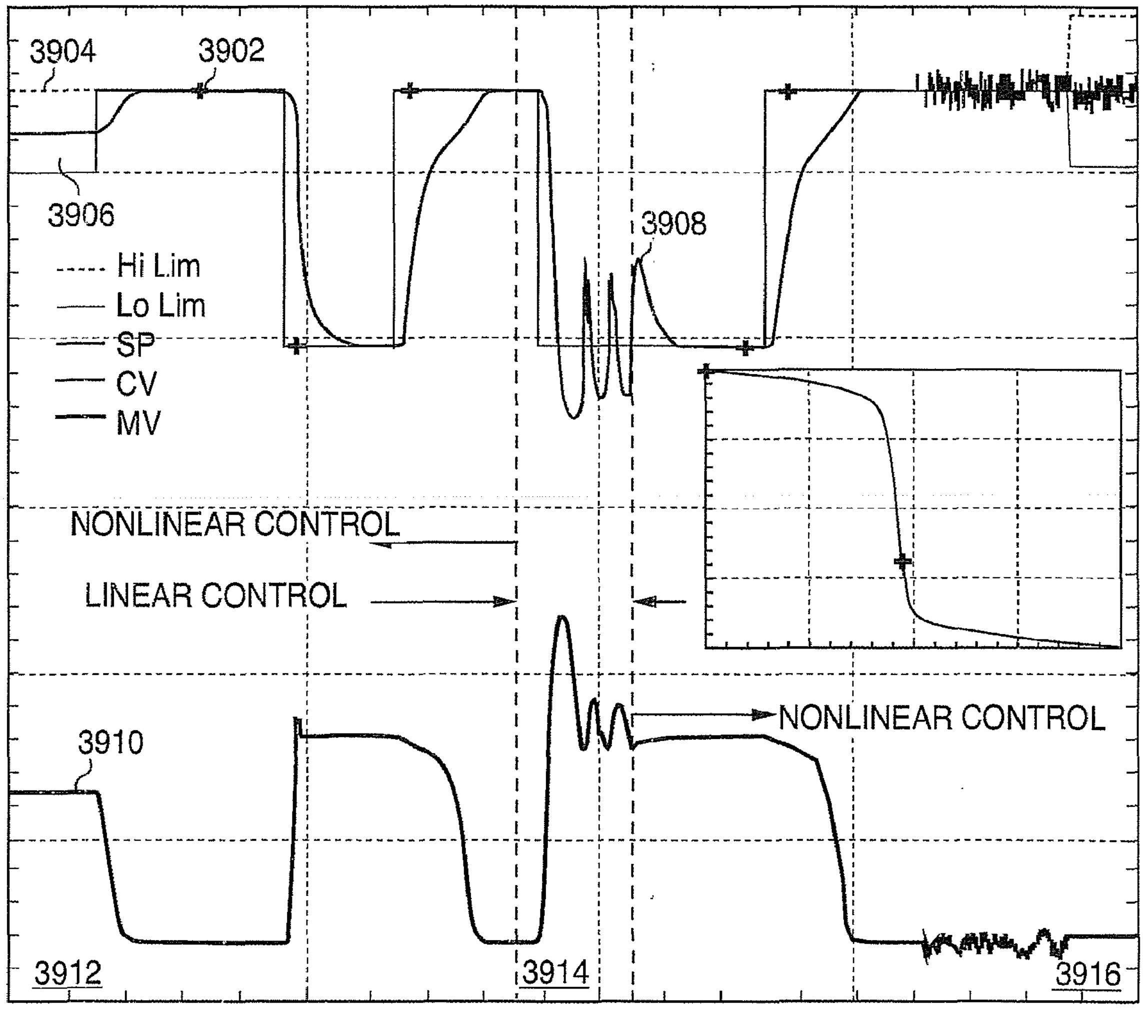
3904
3902
3906
3908
Hi Lim
Lo Lim
SP
CV
MV
NONLINEAR CONTROL
LINEAR CONTROL
NONLINEAR CONTROL
3910
3912
3914
3916

FIG. 39

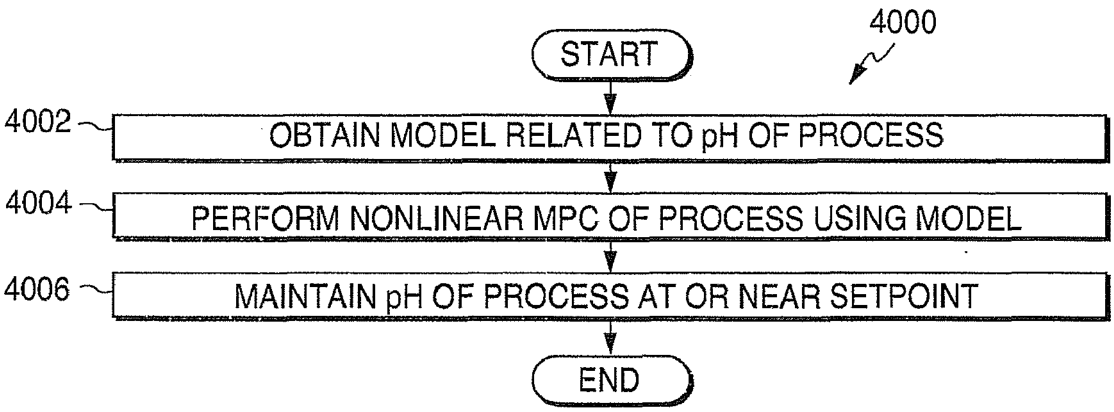
4000
START
4002
OBTAIN MODEL RELATED TO pH OF PROCESS
4004
PERFORM NONLINEAR MPC OF PROCESS USING MODEL
4006
MAINTAIN pH OF PROCESS AT OR NEAR SETPOINT
END

FIG. 40

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61497758 A
- US 20080104003 A


### Non-patent literature cited in the description


- **NINNESS et al.** A Unifying Construction of Orthonormal Bases for System Identification. *IEEE Transactions on Automatic Control,* 1997, vol. 42 (4), 515-521
- **MACARTHUR et al.** A Practical Global Multi-Stage Method for Fully Automated Closed-Loop Identification of Industrial Process. *Journal of Process Control,* 2007, vol. 17 (10), 770-786
- **LJUNG et al.** Regressor and Structure Selection in NARX Models Using a Structured ANOVA Approach. *Automatica,* 2009, vol. 41 (3), 383-395
- **CHAN et al.** Identification of MIMO Hammerstein Systems Using Cardinal Spline Functions. *Journal of Process Control,* 2006, vol. 16 (7), 659-670
- **PEARSON et al.** Gray-Box Identification of Block-Oriented Nonlinear Models. *Journal of Process Control,* 2000, vol. 10, 301-315
- **ZHU.** Estimation of an N-L-N Hammerstein-Wiener Model. *Automatica,* 2002, vol. 38 (9), 1607-1614